# EUROPEAN PATENT APPLICATION

(11) **EP 3 450 143 A1**
(43) Date of publication of application: **06.03.2019**
(21) Application number: 17789089.4
(22) Date of filing: 07.03.2017
(51) Int. Cl.: B29C 67/00, B33Y 30/00, C09J 7/00, C09J 7/02

(54) **SHAPING-STAGE ADHESIVE SHEET AND LAMINATION SHAPING DEVICE**

(30) Priority: 26.04.2016 JP 2016087726; 13.10.2016 JP 2016201860
(71) Applicant: Nitto Denko Corporation, Ibaraki-shi, Osaka 567-8680 (JP)
(72) Inventor: OGINO, Yoshiko, Ibaraki-shi Osaka 567-8680 (JP); TOSAKI, Yutaka, Ibaraki-shi Osaka 567-8680 (JP); KAWANISHI, Michiro, Ibaraki-shi Osaka 567-8680 (JP); MATSUSHITA, Kiichiro, Ibaraki-shi Osaka 567-8680 (JP); NONAKA, Akiko, Ibaraki-shi Osaka 567-8680 (JP); MURATA, Akihisa, Ibaraki-shi Osaka 567-8680 (JP)
(74) Representative: Grünecker Patent- und Rechtsanwälte PartG mbB
(86) International application number: PCT/JP2017/009038
(87) International publication number: WO 2017/187800

(57) **Abstract**

A pressure-sensitive adhesive sheet for build stage use according to the present invention includes a pressure-sensitive adhesive layer having an adhesive strength reducible by an adhesive strength-reducing action. For example, the pressure-sensitive adhesive layer is a thermally releasable pressure-sensitive adhesive layer (11), and the adhesive strength-reducing action is heating of the pressure-sensitive adhesive layer (11). This pressure-sensitive adhesive sheet for build stage use is suitable for allowing an object to be formed over a build stage of an additive manufacturing apparatus to be attached to the build stage during building up, and to be readily detached from the build stage after building up. An additive manufacturing apparatus according to the present invention can employ the pressure-sensitive adhesive sheet for build stage use and includes a build stage, and adhesive strength-reducing means for performing an adhesive strength-reducing action to a pressure-sensitive adhesive layer of the pressure-sensitive adhesive sheet for build stage use affixed to the stage.

## Description

### Technical Field

The present invention relates to technologies for the attachment and detachment (separation) between a build stage (shaping stage) of an additive manufacturing apparatus and an object to be formed on or over the build stage.

### Background Art

Additive manufacturing apparatuses, which are also called as 3D printers, are developed more and more. The additive manufacturing apparatuses each include a build stage on which a three-dimensional object is to be formed. In the additive manufacturing apparatuses, the object is formed on the build stage by a so-called additive manufacturing technique such as fused deposition modeling (fused filament fabrication), material jetting, stereolithography (vat polymerization), powder bed fusion, binder jetting, or sheet lamination. The additive manufacturing apparatuses as above are described typically in following Patent Literature (PTL) 1 to 4.

### Citation List

### Patent Literature

PTL 1: Japanese Unexamined Patent Application Publication (JP-A) No. H09-24552
PTL 2: JP-A No. 2011-101834
PTL 3: JP-A No. 2015-212042
PTL 4: JP-A No. 2016-5869

### Summary of Invention

### Technical Problem

An object during its formation may be attached onto a build stage in a process of forming the object on the build stage, in some manufacturing techniques employed in additive manufacturing apparatuses. In this case, the object has to be detached or separated from the build stage after the completion of the object forming process on the build stage. In a technique often employed for the detachment, the build stage and the object are separated from each other by pushing a scraper or another tool having a sharp edge in between the build stage and the object attached to the build stage.

However, the technique as above tends to cause significant damage to the object and/or the build stage by the tool having a sharp edge, such as a scraper, because the object and/or the build stage is often acted upon by relatively large force through the tool.

The present invention has been made under these circumstances and has an object to provide a pressure-sensitive adhesive sheet for build stage use that is suitable for allowing an object to be attached or be positionally secured to a build stage of an additive manufacturing apparatus during building up of the object, where the object is to be formed over the build stage and can be attached onto the stage; and is suitable for facilitating the detachment of the object from the build stage after the building up. The present invention has another object to provide an additive manufacturing apparatus that is suitable for employing the pressure-sensitive adhesive sheet for build stage use as above. Solution to Problem

The present invention provides, according to a first aspect, a pressure-sensitive adhesive sheet for build stage use. The pressure-sensitive adhesive sheet for build stage use is to be used by affixing the same to an object-forming surface of a build stage of an additive manufacturing apparatus. The pressure-sensitive adhesive sheet for build stage use includes at least one pressure-sensitive adhesive layer (adhesive strength-reducible layer) including a pressure-sensitive adhesive, where the pressure-sensitive adhesive layer has an adhesive strength capable of being reduced or decreased by an adhesive strength-reducing action (adhesive strength-reducing treatment). The adhesive strength-reducing action is an action, which is performed to the adhesive strength-reducible layer, such as heating, cooling, electromagnetic irradiation, voltage application, liquid supply, stretching or deformation, magnetic field application, or pressure change. The adhesive strength-reducible layer has a configuration capable of reducing adhesive strength thereof in response to the adhesive strength-reducing action as above. The category pressure-sensitive adhesive sheet for build stage use includes pressure-sensitive adhesive sheets each including a single pressure-sensitive adhesive layer; and pressure-sensitive adhesive sheets each having a multilayer structure including a pressure-sensitive adhesive layer for constituting an adhesive face to the build stage (stage-facing pressure-sensitive adhesive layer), and at least one pressure-sensitive adhesive layer and/or substrate. The pressure-sensitive adhesive sheet for build stage use may be a so-called double-sided (double-coated) pressure-sensitive adhesive sheet or a so-called single-sided pressure-sensitive adhesive sheet. Assume that the pressure-sensitive adhesive sheet for build stage use includes two or more pressure-sensitive adhesive layers. In this case, the adhesive strength-reducible layer may be the stage-facing pressure-sensitive adhesive layer, or may be another pressure-sensitive adhesive layer in the multilayer structure than the stage-facing pressure-sensitive adhesive layer. The reduction in adhesive strength by the adhesive strength-reducing action upon the adhesive strength-reducible layer includes, in a state where the pressure-sensitive adhesive sheet for build stage use is disposed on the object-forming surface of the build stage, reduction in adhesive strength of an adhesive face of the adhesive strength-reducible layer, where the adhesive face faces the build stage; reduction in adhesive strength of an adhesive face of the adhesive strength-reducible layer, where the adhesive face faces the object; and reduction in adhesive strength due to fracture in the adhesive strength-reducible layer, where the adhesive strength has been actually provided by the pressure-sensitive adhesive layer (adhesive strength-reducible layer). In addition, the pressure-sensitive adhesive sheet for build stage use may be in the form of a pressure-sensitive adhesive tape, which is typically wound.

Specifically, the pressure-sensitive adhesive sheet for build stage use can be used typically by a procedure as follows. Initially, the pressure-sensitive adhesive sheet for build stage use is affixed, through the stage-facing pressure-sensitive adhesive layer thereof, to an object-forming surface of a build stage of an additive manufacturing apparatus for the formation of an object. In operation of the apparatus, the target object is gradually built up or formed on the pressure-sensitive adhesive sheet disposed on the object-forming surface of the build stage, through a predetermined process. In the process of forming the object over the build stage, the pressure-sensitive adhesive sheet for build stage use adheres onto the build stage, and the object during its formation is attached onto the pressure-sensitive adhesive sheet on the build stage. Namely, the object during its formation is in a state of being attached to the build stage through the pressure-sensitive adhesive sheet. After the completion of the object forming process, the adhesive strength-reducing action is performed to the pressure-sensitive adhesive sheet on the build stage. This reduces the adhesive strength of the adhesive strength-reducible layer of the pressure-sensitive adhesive sheet for build stage use and frees or loosens the attached state of the object to the build stage through the pressure-sensitive adhesive sheet. The object, whose attached state to the build stage has been freed or loosened, is then detached from the build stage. The pressure-sensitive adhesive sheet for build stage use enables detachment of the object from the build stage typically by performing an operation of removing (peeling) the pressure-sensitive adhesive sheet for build stage use at a predetermined interface defined by the pressure-sensitive adhesive layer whose adhesive strength has been reduced. Assume that the pressure-sensitive adhesive sheet for build stage use includes an adhesive strength-reducible layer that defines an object-facing adhesive face in an object forming process. In this case, the object can be detached from the build stage typically by separating (pulling away) the object from the adhesive strength-reducible layer whose adhesive strength has been reduced by the adhesive strength-reducing action.

In contrast, for example, assume that another pressure-sensitive adhesive sheet is used instead of the pressure-sensitive adhesive sheet for build stage use, where the other pressure-sensitive adhesive sheet has a multilayer structure including a substrate and a stage-facing pressure-sensitive adhesive layer having an adhesive strength that is sufficient to a build stage and is incapable of being intentionally reduced after formation of an object. In this case, even when an operation of removing the used pressure-sensitive adhesive sheet from the build stage is performed so as to detach the object after formation from the build stage, the pressure-sensitive adhesive sheet resists removal in a region where the object is attached onto the pressure-sensitive adhesive sheet. In an additive manufacturing apparatus, a build stage of the apparatus and an object to be formed are both hard and resistant to bending deformation. Between the build stage and the object, both of which are hard and resistant to bending deformation, it is difficult to pull the pressure-sensitive adhesive sheet in a direction that forms a significant angle to the build stage plane, and this impedes the removal (peeling) of the pressure-sensitive adhesive sheet. With the alternative technique, therefore, the object after formation resists detachment from the build stage. In contrast to this, the pressure-sensitive adhesive sheet for build stage use according to the first aspect of the present invention includes a pressure-sensitive adhesive layer (adhesive strength-reducible layer) having an adhesive strength capable of being reduced by an adhesive strength-reducing action, as described above. The pressure-sensitive adhesive sheet for build stage use, as having the configuration as above, can be a pressure-sensitive adhesive sheet that allows an object to be attached to a build stage during building up and to be readily detached from the build stage after building up.

As described above, the pressure-sensitive adhesive sheet for build stage use according to the first aspect of the present invention is suitable for allowing an object to be formed on or over a build stage of an additive manufacturing apparatus to be attached to or positionally secured to the build stage during building up and to be readily detached from the build stage after building up. Namely, the pressure-sensitive adhesive sheet for build stage use is suitable for achieving both satisfactory attachability or positional securability of the object to, and good detachability of the object from, the build stage, where the two properties are possibly incompatible with each other. The demand for combination or accommodation of the possibly incompatible properties, i.e., satisfactory attachability or positional securability and good detachability of the object to and from the build stage is particularly strong in the case where the object to be formed is a fine, delicate one typically including a large proportion of finely structured portions and being susceptible to significant damage. The pressure-sensitive adhesive sheet for build stage use is suitable for meeting the demand as above.

In addition, the pressure-sensitive adhesive sheet for build stage use, when used by the procedure as described above in the formation of an object using an additive manufacturing apparatus, can avoid or minimize the use of a scraper or another tool having a sharp edge for the detachment of the object from the build stage. Assume that a tool such as a scraper is used to detach the object from the build stage. Even in this case, the pressure-sensitive adhesive sheet for build stage use, when employed, facilitates the separation between the build stage and the object by allowing the tool to be inserted typically into the predetermined interface in the adhesive strength-reducible layer with relatively small force. Accordingly, the pressure-sensitive adhesive sheet for build stage use contributes to avoiding or minimizing significant damage of the object and the build stage upon detachment of the object from the build stage.

Preferably, the pressure-sensitive adhesive layer, which is the adhesive strength-reducible layer, is a thermally releasable pressure-sensitive adhesive layer, and the adhesive strength-reducing action is heating of the pressure-sensitive adhesive layer. The thermally releasable pressure-sensitive adhesive layer typically includes a thermal expansion agent. The thermal expansion agent may be, for example, thermally expandable microspheres each of which includes a component that gasifies by heating, and a shell that includes the component in an encapsulating manner and is capable of undergoing expansion and/or rupture as a result of the gasification of the component. The configurations as above can suitably allow the object to be actually attachable to, and detachable from, the build stage, using the thermal releasing technology relating to pressure-sensitive adhesive layers.

Preferably, the pressure-sensitive adhesive layer, which is the adhesive strength-reducible layer, is a cold-releasable pressure-sensitive adhesive layer, and the adhesive strength-reducing action is cooling of the pressure-sensitive adhesive layer. The cold-releasable pressure-sensitive adhesive layer may typically include a side-chain crystalline polymer. The configurations as above can actually suitably provide the attachment and detachment of the object to and from the build stage, using the cooling releasing technology relating to pressure-sensitive adhesive layers.

Preferably, the pressure-sensitive adhesive layer, which is the adhesive strength-reducible layer, is an electromagnetically releasable pressure-sensitive adhesive layer, and the adhesive strength-reducing action is application of electromagnetic radiation to the pressure-sensitive adhesive layer. The electromagnetically releasable pressure-sensitive adhesive layer may typically include an electromagnetic radiation-curable component. The configurations as above can suitably allow the object to be actually attachable to, and detachable from, the build stage, using the electromagnetic releasing technology relating to pressure-sensitive adhesive layers.

Preferably, the pressure-sensitive adhesive layer, which is the adhesive strength-reducible layer, is an electrically releasable pressure-sensitive adhesive layer, and the adhesive strength-reducing action is voltage application to the pressure-sensitive adhesive layer. The electrically releasable pressure-sensitive adhesive layer may typically include an electrolyte. The electrolyte is preferably an ionic liquid. The electrically releasable pressure-sensitive adhesive layer may contain the electrolyte in a content of preferably 0.5 to 30 parts by mass, per 100 parts by mass of the pressure-sensitive adhesive. The configurations as above can suitably allow the object to be actually attachable to, and detachable from, the build stage, using the electric releasing technology relating to pressure-sensitive adhesive layers.

Preferably, the pressure-sensitive adhesive layer, which is the adhesive strength-reducible layer, is a liquid-releasable pressure-sensitive adhesive layer, and the adhesive strength-reducing action is liquid supply to the pressure-sensitive adhesive layer. The liquid-releasable pressure-sensitive adhesive layer may typically include a water-soluble pressure-sensitive adhesive. The configurations as above can suitably allow the object to be actually attachable to, and detachable from, the build stage, using the liquid releasing technology relating to pressure-sensitive adhesive layers.

Preferably, the pressure-sensitive adhesive sheet for build stage use has a multilayer structure including the pressure-sensitive adhesive layer, which is the adhesive strength-reducible layer, and a stretchable substrate, and the adhesive strength-reducing action is stretching of the pressure-sensitive adhesive sheet for build stage use. The pressure-sensitive adhesive sheet for build stage use has an elongation upon rupture (elongation at break) of preferably 300% or more, where the elongation is measured in conformity to the Testing Method for "Elongation" described in JIS K 7311:1995. The configurations as above can suitably allow the object to be actually attachable to, and detachable from, the build stage, using the stretching releasing technology relating to pressure-sensitive adhesive sheets or pressure-sensitive adhesive tapes.

The present invention provides, according to a second aspect, an additive manufacturing apparatus. The additive manufacturing apparatus is an additive manufacturing apparatus capable of employing the pressure-sensitive adhesive sheet for build stage use according to the first aspect of the present invention. The additive manufacturing apparatus includes a build stage, and adhesive strength-reducing means for performing an adhesive strength-reducing action upon the pressure-sensitive adhesive layer of the pressure-sensitive adhesive sheet for build stage use as disposed on the build stage. The additive manufacturing apparatus as above is suitable for using the pressure-sensitive adhesive sheet for build stage use according to the first aspect of the present invention.

In the second aspect of the present invention, preferably, the pressure-sensitive adhesive layer, which is an adhesive strength-reducible layer of the pressure-sensitive adhesive sheet for build stage use, is an electromagnetically releasable pressure-sensitive adhesive layer, and the adhesive strength-reducing means is means for applying electromagnetic radiation to the pressure-sensitive adhesive layer. The electromagnetically releasable pressure-sensitive adhesive layer may typically include an electromagnetic radiation-curable component. The additive manufacturing apparatus, which has the configuration(s) as above, can suitably allow the object to be actually attachable to, and detachable from, the build stage, using the electromagnetic releasing technology relating to pressure-sensitive adhesive layers.

In the second aspect of the present invention, preferably, the pressure-sensitive adhesive layer, which is an adhesive strength-reducible layer of the pressure-sensitive adhesive sheet for build stage use, is an electrically releasable pressure-sensitive adhesive layer, and the adhesive strength-reducing means is means for applying a voltage to the pressure-sensitive adhesive layer. The electrically releasable pressure-sensitive adhesive layer may typically include an electrolyte. The electrolyte is preferably an ionic liquid. The electrically releasable pressure-sensitive adhesive layer may contain the electrolyte in a content of preferably 0.5 to 30 parts by mass per 100 parts by mass of the pressure-sensitive adhesive. The additive manufacturing apparatus, which has the configuration(s) as above, can suitably allow the object to be actually attachable to, and detachable from, the build stage, using the electric releasing technology relating to pressure-sensitive adhesive layers.

In the first and second aspects of the present invention, the pressure-sensitive adhesive in the adhesive strength-reducible layer preferably includes an acrylic pressure-sensitive adhesive, and the pressure-sensitive adhesive layer has a thickness of preferably 1 to 1000 nm.

### Brief Description of Drawings

FIG. 1 is a local sectional view of a pressure-sensitive adhesive sheet for build stage use according to an embodiment of the present invention;
FIGs. 2(a), 2(b), and 2(c) illustrate how to use a pressure-sensitive adhesive sheet for build stage use according to an embodiment of the present invention, in which FIGs. 2(a), 2(b), and 2(c) illustrate states, respectively, before the start of formation of an object, during the object forming process, and after the completion of the object forming process;
FIGs. 3(a), 3(b), 3(c), and 3(d) illustrate modifications of the pressure-sensitive adhesive sheet for build stage use illustrated in FIG. 1;
FIG. 4 is a local sectional view of a pressure-sensitive adhesive sheet for build stage use according to an embodiment of the present invention;
FIGs. 5(a), 5(b), 5(c), and 5(d) illustrate modifications of the pressure-sensitive adhesive sheet for build stage use illustrated in FIG. 4;
FIG. 6 is a local sectional view of a pressure-sensitive adhesive sheet for build stage use according to an embodiment of the present invention;
FIGs. 7(a), 7(b), 7(c), and 7(d) illustrate modifications of the pressure-sensitive adhesive sheet for build stage use illustrated in FIG. 6;
FIG. 8 is a local sectional view of a pressure-sensitive adhesive sheet for build stage use according to an embodiment of the present invention;
FIGs. 9(a), 9(b), 9(c), and 9(d) illustrate modifications of the pressure-sensitive adhesive sheet for build stage use illustrated in FIG. 8;
FIG. 10 is a local sectional view of a pressure-sensitive adhesive sheet for build stage use according to an embodiment of the present invention;
FIGs. 11(a), 11(b), 11(c), and 11(d) illustrate modifications of the pressure-sensitive adhesive sheet for build stage use illustrated in FIG. 10;
FIG. 12 is a local sectional view of a pressure-sensitive adhesive sheet for build stage use according to an embodiment of the present invention;
FIG. 13 illustrates a modification of the pressure-sensitive adhesive sheet for build stage use illustrated in FIG. 12;
FIG. 14 is a schematic partial view of an additive manufacturing apparatus according to an embodiment of the present invention;
FIG. 15 is a schematic partial view of an additive manufacturing apparatus according to an embodiment of the present invention;
FIG. 16 is a schematic partial view of an additive manufacturing apparatus according to an embodiment of the present invention;
FIG. 17 is a schematic partial view of an additive manufacturing apparatus according to an embodiment of the present invention;
FIG. 18 is a schematic partial view of an additive manufacturing apparatus according to an embodiment of the present invention;
FIG. 19 is a schematic partial view of an additive manufacturing apparatus according to an embodiment of the present invention;
FIG. 20 is a schematic partial view of an additive manufacturing apparatus according to an embodiment of the present invention; and
FIG. 21 is a perspective view of an object prepared for the measurement of release force, for pressure-sensitive adhesive sheets according to Examples 6 and 7 and Comparative Example 1.

### Description of Embodiments

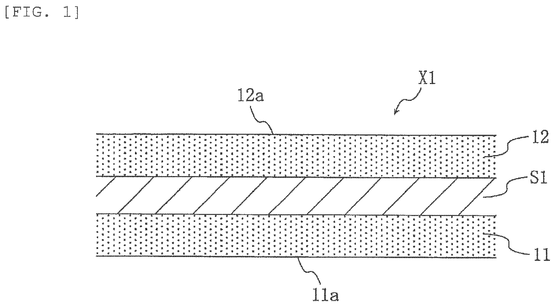

FIG. 1 is a local sectional view of a pressure-sensitive adhesive sheet X1, which is a pressure-sensitive adhesive sheet for build stage use according to an embodiment of the present invention. The pressure-sensitive adhesive sheet X1 is a double-sided pressure-sensitive adhesive sheet having a multilayer structure including a substrate S1 and pressure-sensitive adhesive layers 11 and 12.

The substrate S1 of the pressure-sensitive adhesive sheet X1 is a portion that functions as a carrier (support) in the pressure-sensitive adhesive sheet X1. Examples of a material to constitute the substrate S1 include, but are not limited to, paper materials, nonwoven fabrics, and plastic films. Non-limiting examples of the paper materials to constitute the substrate S1 include Japanese paper, crepe paper, kraft paper, glassine paper, and synthetic paper. Non-limiting examples of materials for the nonwoven fabrics to constitute the substrate S1 include pulps such as hemp pulp and wood pulp; as well as rayon, acetate fibers, polyester fibers, polyamide fibers, polyolefin fibers, and poly(vinyl alcohol) fibers. To bond nonwoven fabric fibers with each other, the fibers are typically impregnated with a binder resin. Non-limiting examples of the plastic films to constitute the substrate S1 include polyolefin films, polyester films, polyurethane films, polyimide resin films, polyamide resin films, plasticized vinyl chloride resin films, and vinyl acetate resin films. Non-limiting examples of the polyolefin films include polyethylene films, polypropylene films, and films made from ethylene-propylene copolymers. Non-limiting examples of the polyester films include poly(ethylene terephthalate) films. The substrate S1 of the pressure-sensitive adhesive sheet X1 may be made from each of different materials alone or in combination. The substrate S1 may be a multilayer assembly including layers differing in constituent material from each other. In the substrate S1, at least one of a surface facing the pressure-sensitive adhesive layer 11 and a surface facing the pressure-sensitive adhesive layer 12 may have undergone a surface treatment so as to have better adhesion with the adjacent pressure-sensitive adhesive layer. Non-limiting examples of the surface treatment include physical treatments such as corona treatment and plasma treatment; and chemical treatments such as primer coating. The substrate S1 as above has a thickness of typically 10 to 300 µm.

The pressure-sensitive adhesive layer 11 of the pressure-sensitive adhesive sheet X1 is a thermally releasable pressure-sensitive adhesive layer (adhesive strength-reducible layer) having an adhesive strength capable of being reduced by heating (adhesive strength-reducing action). The pressure-sensitive adhesive layer 11 has an adhesive face 11a. The pressure-sensitive adhesive layer 11, which is the thermally releasable pressure-sensitive adhesive layer as above, is made from a pressure-sensitive adhesive composition whose adhesive strength is significantly reduced by heating typically from room temperature. The pressure-sensitive adhesive composition or the pressure-sensitive adhesive layer 11 in the embodiment contains a pressure-sensitive adhesive and a thermal expansion agent (thermal blowing agent). The thermal expansion agent herein is a microgranule or microparticle that can undergo at least one of expansion and foaming as a result of heating. The pressure-sensitive adhesive layer 11 containing the thermal expansion agent as above, when subjected to heating for the expansion and/or foaming of the thermal expansion agent, expands and forms asperities (depressions and protrusions) at a surface including the adhesive face 11a. Assume that the pressure-sensitive adhesive layer 11 undergoes such heating while the adhesive face 11a adheres to an adherend. In this case, the pressure-sensitive adhesive layer 11 expands to form asperities at the adhesive face 11a, and this reduces the adhesive area of the pressure-sensitive adhesive layer 11 or the adhesive face 11a and thereby reduces or lowers the adhesive strength of the pressure-sensitive adhesive layer 11 to the adherend.

Non-limiting examples of the pressure-sensitive adhesive contained in the pressure-sensitive adhesive layer 11 include acrylic polymers as acrylic pressure-sensitive adhesives, natural rubbers, various synthetic rubbers, vinyl alkyl ether pressure-sensitive adhesives, silicone pressure-sensitive adhesives, polyester pressure-sensitive adhesives, polyamide pressure-sensitive adhesives, and urethane pressure-sensitive adhesives. The pressure-sensitive adhesive contained in the pressure-sensitive adhesive layer 11 is preferably an acrylic pressure-sensitive adhesive or adhesives. This is preferred from the viewpoint of actually providing satisfactory adhesive strength, cost minimization, and high productivity, for the pressure-sensitive adhesive layer 11. As used herein, the term "acrylic pressure-sensitive adhesive" or "acrylic polymer" refers to a polymer that includes, as a principal monomer unit present in a largest mass proportion, a monomer unit derived from at least one of an alkyl acrylate and an alkyl methacrylate.

Assume that the pressure-sensitive adhesive layer 11 includes an acrylic polymer as an acrylic pressure-sensitive adhesive. In this case, the acrylic polymer typically includes, as a principal monomer unit, a unit derived from an alkyl (meth)acrylate containing a C₂₂ or lower alkyl. The term "principal monomer unit" as used herein refers to a monomer unit that is present in a largest mass proportion in the acrylic polymer. The term "(meth)acryl" refers to "acryl" and/or "methacryl". Non-limiting examples of the C₂₂ or lower alkyl include methyl, ethyl, propyl, butyl, amyl, hexyl, heptyl, 2-ethylhexyl, isooctyl, isodecyl, dodecyl, lauryl, tridecyl, pentadecyl, hexadecyl, heptadecyl, octadecyl, nonadecyl, icosyl, and docosyl. Each of different alkyl (meth)acrylates may be used alone or in combination to form the acrylic polymer to be contained in the pressure-sensitive adhesive layer 11.

Assume that the pressure-sensitive adhesive layer 11 includes an acrylic polymer as an acrylic pressure-sensitive adhesive. In this case, the acrylic polymer may include a monomer unit or units derived from a monomer or monomers other than alkyl (meth)acrylates, where the monomer or monomers are copolymerizable with such alkyl (meth)acrylates. This may be employed from the viewpoint of modifying properties, such as cohesive force and heat resistance, of the pressure-sensitive adhesive layer 11. Examples of such copolymerizable monomers include, but are not limited to, carboxy-containing monomers, hydroxy-containing monomers, sulfonate-containing monomers, amide monomers, aminoalkyl (meth)acrylate monomers, maleimide monomers, vinyl monomers, cyanoacrylate monomers, epoxy-containing acrylic monomers, and multifunctional monomers. Non-limiting examples of the carboxy-containing monomers include acrylic acid, methacrylic acid, carboxyethyl acrylate, carboxypentyl acrylate, itaconic acid, maleic acid, fumaric acid, and crotonic acid. Non-limiting examples of the hydroxy-containing monomers include hydroxyethyl (meth)acrylate, hydroxypropyl (meth)acrylate, hydroxybutyl (meth)acrylate, hydroxyhexyl (meth)acrylate, hydroxyoctyl (meth)acrylate, hydroxydecyl (meth)acrylate, hydroxylauryl (meth)acrylate, and (4-hydroxymethylcyclohexyl)methyl (meth)acrylate. Non-limiting examples of the sulfonate-containing monomers include styrenesulfonic acid, allylsulfonic acid, 2-(meth)acrylamido-2-methylpropanesulfonic acid, (meth)acrylamidopropanesulfonic acid, sulfopropyl (meth)acrylate, and (meth)acryloyloxynaphthalenesulfonic acid. Non-limiting examples of the amide monomers include (meth)acrylamide, N,N-dimethyl(meth)acrylamide, N-butyl(meth)acrylamide, N-methylol(meth)acrylamide, and N-methylolpropane(meth)acrylamide. Non-limiting examples of the aminoalkyl (meth)acrylate monomers include aminoethyl (meth)acrylate, N,N-dimethylaminoethyl (meth)acrylate, and t-butylaminoethyl (meth)acrylates. Non-limiting examples of the maleimide monomers include N-cyclohexylmaleimide, N-isopropylmaleimide, N-laurylmaleimide, and N-phenylmaleimide. Non-limiting examples of the vinyl monomers include vinyl acetate, vinyl propionate, N-vinylpyrrolidone, methylvinylpyrrolidone, vinylpyridine, vinylpiperidone, vinylpyrimidine, vinylpiperazine, vinylpyrazine, vinylpyrrole, vinylimidazole, vinyloxazole, vinylmorpholine, N-vinylcarboxamides, styrene, α-methylstyrene, and N-vinylcaprolactam. Non-limiting examples of the cyanoacrylate monomers include acrylonitrile and methacrylonitrile. Non-limiting examples of the epoxy-containing acrylic monomers include glycidyl (meth)acrylate. Non-limiting examples of the multifunctional monomers include hexanediol di(meth)acrylate, (poly)ethylene glycol di(meth)acrylate, (poly)propylene glycol di(meth)acrylate, neopentyl glycol di(meth)acrylate, pentaerythritol di(meth)acrylate, trimethylolpropane tri(meth)acrylate, pentaerythritol tri(meth)acrylate, and dipentaerythritol hexa(meth)acrylate. Each of different copolymerizable monomers may be used alone or in combination to form the acrylic polymer to be contained in the pressure-sensitive adhesive layer 11.

The acrylic polymer as above can be obtained by polymerization of a material monomer component or components. Examples of the polymerization technique include, but are not limited to, solution polymerization, emulsion polymerization, and bulk polymerization. The solution polymerization, when performed, may employ a solvent; and non-limiting examples of the solvent include aromatic hydrocarbons, aliphatic hydrocarbons, alicyclic hydrocarbons, esters, and ketones. The polymerization of the material monomer component(s) to form the acrylic polymer may be performed using a polymerization initiator. The polymerization initiator may be selected typically from photoinitiators and thermal initiators, according to the type of the polymerization reaction. The polymerization of the material monomer component(s) to form the acrylic polymer may be performed using a chain transfer agent.

Examples of the thermal expansion agent (thermal blowing agent) that is capable typically of expanding by heating and is usable herein include inorganic blowing agents and organic blowing agents. Non-limiting examples of the inorganic blowing agents include water, ammonium carbonate, ammonium hydrogencarbonate, sodium hydrogencarbonate, ammonium nitrite, sodium borohydride, and graphite. Non-limiting examples of the organic blowing agents include chlorofluoroalkanes, azo compounds, hydrazine compounds, semicarbazide compounds, triazole compounds, and N-nitroso compounds. Non-limiting examples of the chlorofluoroalkanes include trichloromonofluoromethane and dichloromonofluoromethane. Non-limiting examples of the azo compounds include azobisisobutyronitrile, azodicarbonamide, and barium azodicarboxylate. Non-limiting examples of the hydrazine compounds include p-toluenesulfonyl hydrazide, diphenylsulfone-3,3'-disulfonyl hydrazide, 4,4'-oxybis(benzenesulfonyl hydrazide), and allylbis(sulfonyl hydrazide). Non-limiting examples of the semicarbazide compounds include p-toluylenesulfonyl semicarbazide and 4, 4'-oxybis(benzenesulfonyl semicarbazide). A non-limiting example of the triazole compounds is 5-morpholyl-1,2,3,4-thiatriazole. Non-limiting examples of the N-nitroso compounds include N,N'-dinitrosopentamethylenetetramine and N,N'-dimethyl-N,N'-dinitrosoterephthalamide.

The thermal expansion agent capable typically of expanding by heating for use herein is preferably thermally expandable microspheres each including a component that gasifies by heating, and a shell including the component in an encapsulating manner and being capable of undergoing expansion and/or rupture by the gasification of the component. The thermally expandable microspheres typically have a configuration including a shell and a low-boiling liquid or another substance, where the substance can readily gasify and expand by heating and is encapsulated in the shell, which is elastic. Non-limiting examples of the substance encapsulated in the shell include isobutane, propane, and pentane. For example, the shell may be made from a thermofusible (hot-melt) substance that can be molten by heating for allowing the thermal expansion agent to expand and/or foam. Alternatively, the shell may be made from such a substance and has such a thickness as to be able to expand or be ruptured by the expansion or gasification of the encapsulated substance as a result of heating. Non-limiting examples of the substance to form the shell include vinylidene chloride-acrylonitrile copolymers, poly(vinyl alcohol)s, poly(vinyl butyral)s, poly(methyl methacrylate)s, polyacrylonitriles, poly(vinylidene chloride)s, and polysulfones. The thermally expandable microspheres can be produced typically by coacervation technique or interfacial polymerization technique. The thermally expandable microspheres as above have an average particle diameter of typically 5 to 100 µm. The thermally expandable microspheres have a magnification of cubical expansion of typically 5 times or more, preferably 7 times or more, and more preferably 10 times or more, from the viewpoint of allowing the pressure-sensitive adhesive layer including the thermally expandable microspheres to develop satisfactory thermal releasability. The thermally expandable microspheres may be present in the pressure-sensitive adhesive layer 11 in a content of typically 5 to 200 parts by mass per 100 parts by mass of the pressure-sensitive adhesive.

In addition to the components, the pressure-sensitive adhesive layer 11 may further include one or more other components. Non-limiting examples of such other components include crosslinkers, tackifiers, plasticizers, softeners, fillers, age inhibitors, silane coupling agents, surfactants, and colorants such as pigments and dyes. The allowance of these components in the pressure-sensitive adhesive layer 11 is also applicable to other pressure-sensitive adhesive layers described later.

The pressure-sensitive adhesive layer 11 of the pressure-sensitive adhesive sheet X1 has a thickness of preferably 1 to 1000 µm. This is preferred from the viewpoint of allowing the pressure-sensitive adhesive layer 11 to actually have satisfactory tackiness. The lower limit of the thickness of the pressure-sensitive adhesive layer 11 is more preferably 3 µm, furthermore preferably 5 µm, and still more preferably 8 µm. The upper limit of the thickness of the pressure-sensitive adhesive layer 11 is more preferably 500 µm, furthermore preferably 100 µm, and still more preferably 30 µm. The ranges of the thickness of the pressure-sensitive adhesive layer are also applicable to the other pressure-sensitive adhesive layers described later.

The adhesive face 11a, which constitutes or defines one adhesive face of the pressure-sensitive adhesive sheet X1, is preferably designed to have a 180-degree peel strength from a SUS 304 sheet of 0.1 N/10 mm or more, in terms of adhesive strength before the adhesive strength-reducing action, where the 180-degree peel strength is measured at a tensile speed of 300 mm/min and a peel temperature of 23°C. This is preferred from the viewpoint of allowing the adhesive face 11a to actually have satisfactory bond strength or adhesive strength. The 180-degree peel strength can be measured according to JIS Z 0237. The adhesive strength level as above is also applicable to the adhesive strengths of the after-mentioned other adhesive strength-reducible layers before the adhesive strength-reducing action; and the adhesive strengths of after-mentioned pressure-sensitive adhesive layers that are not adhesive strength-reducible layers.

In the configuration, the pressure-sensitive adhesive layer 11 contains a thermal expansion agent capable of undergoing expansion and/or foaming by heating and renders heating-induced reduction in adhesive strength feasible. Instead of or in combination of this configuration, the pressure-sensitive adhesive layer 11, which is the thermally releasable pressure-sensitive adhesive layer (adhesive strength-reducible layer) in the pressure-sensitive adhesive sheet X1, may employ any of configurations as follows: a configuration where the pressure-sensitive adhesive layer 11 contains a component capable of undergoing glass crystallization by heating and thereby renders heating-induced reduction in adhesive strength feasible; a configuration where the pressure-sensitive adhesive layer 11 contains, in addition to a pressure-sensitive adhesive polymer principal component, a crystalline component capable of melting by heating and reducing the cohesive force of the pressure-sensitive adhesive bulk, and thereby renders heating-induced reduction in adhesive strength feasible; a configuration where the pressure-sensitive adhesive layer 11 contains a component capable of causing a crosslinking reaction or curing reaction by heating, and thereby renders heating-induced reduction in adhesive strength feasible; a configuration where the pressure-sensitive adhesive layer 11 has such a chemical composition as to cause phase separation by heating, and thereby renders heating-induced reduction in adhesive strength feasible; and a configuration where the pressure-sensitive adhesive layer 11 has such a chemical composition as to form a phase-separated structure including phases, part of which phases is fusible or meltable by heating, and thereby renders heating-induced reduction in adhesive strength feasible. Alternatively, the pressure-sensitive adhesive layer 11 may employ configurations selected from these configurations in combination. These points relating to the configurations of the pressure-sensitive adhesive layer 11 are also applicable to pressure-sensitive adhesive layers 11 in the after-mentioned modifications of the pressure-sensitive adhesive sheet X1.

The pressure-sensitive adhesive layer 12 of the pressure-sensitive adhesive sheet X1 includes a pressure-sensitive adhesive as a base component and has an adhesive face 12a. As used herein, the term "base component" refers to a component that is present in a largest mass proportion among constitutive components. Non-limiting examples of the pressure-sensitive adhesive contained in the pressure-sensitive adhesive layer 12 include acrylic polymers as acrylic pressure-sensitive adhesives, natural rubbers, various synthetic rubbers, vinyl alkyl ether pressure-sensitive adhesives, silicone pressure-sensitive adhesives, polyester pressure-sensitive adhesives, polyamide pressure-sensitive adhesives, and urethane pressure-sensitive adhesives. The pressure-sensitive adhesive contained in the pressure-sensitive adhesive layer 12 is preferably an acrylic pressure-sensitive adhesive or adhesives. This is preferred from the viewpoint of actually providing satisfactory adhesive strength, cost minimization, and high productivity, for the pressure-sensitive adhesive layer 12. The pressure-sensitive adhesive layer 12 may have a multilayer structure including pressure-sensitive adhesive layers differing from each other in chemical composition.

The pressure-sensitive adhesive sheet X1 may have a multilayer structure further including one or more other layers, in addition to the substrate S1 and the pressure-sensitive adhesive layers 11 and 12. A non-limiting example of the other layers is an under coat for providing higher adhesive strength between the substrate S1 and the thermally releasable pressure-sensitive adhesive layer 11. Non-limiting examples of a constituent material of the under coat include synthetic rubbers; and synthetic resins having rubber elasticity. Non-limiting examples of the synthetic rubbers include nitrile synthetic rubbers, diene synthetic rubbers, and acrylic synthetic rubbers. Non-limiting examples of the synthetic resins having rubber elasticity include polyolefin resins, polyester resins, thermoplastic elastomers, ethylene-vinyl acetate copolymers, polyurethanes, polybutadienes, and plasticized poly(vinyl chloride)s. The under coat has a thickness of typically 0.1 to 100 µm. The configuration, where the under coat as above is disposed between the substrate S1 and the pressure-sensitive adhesive layer 11, is suitable for allowing the pressure-sensitive adhesive layer 11 to undergo the heating-induced reduction in adhesive strength at the adhesive face 11a. In contrast to this, a configuration where no under coat is disposed between the substrate S1 and the pressure-sensitive adhesive layer 11; and a configuration where a release treatment is applied to a surface of the substrate S1, where the surface faces the pressure-sensitive adhesive layer 11, are suitable for allowing the pressure-sensitive adhesive layer 11 to undergo heating-induced reduction in adhesive strength at the surface facing the substrate S1. In the pressure-sensitive adhesive sheet X1, sufficient breaking strength as a pressure-sensitive adhesive sheet for build stage use may be surely provided even without the substrate S1, in some set thickness and/or hardness of each of the pressure-sensitive adhesive layer 11 and the pressure-sensitive adhesive layer 12; and in this case, the configuration of including no substrate S1 may be employed.

The pressure-sensitive adhesive sheet X1 as above can be produced typically by a procedure as follows. Initially, a first pressure-sensitive adhesive composition and a second pressure-sensitive adhesive composition are independently prepared. The first pressure-sensitive adhesive composition is a pressure-sensitive adhesive composition for the formation of the pressure-sensitive adhesive layer 11. The second pressure-sensitive adhesive composition is a pressure-sensitive adhesive composition for the formation of the pressure-sensitive adhesive layer 12. The first pressure-sensitive adhesive composition contains a pressure-sensitive adhesive and a thermal expansion agent. The second pressure-sensitive adhesive composition contains a pressure-sensitive adhesive. Next, the first pressure-sensitive adhesive composition is applied onto a release-treated surface of a first release liner or release film to form a first pressure-sensitive adhesive composition layer, followed by drying of the layer. This gives a pressure-sensitive adhesive layer 11 on the first release liner. On the other hand, the second pressure-sensitive adhesive composition is applied onto a release-treated surface of a second release liner or release film to form a second pressure-sensitive adhesive composition layer, followed by drying the layer. This gives a pressure-sensitive adhesive layer 12 on the second release liner. The pressure-sensitive adhesive layer 11 and the pressure-sensitive adhesive layer 12 are then applied respectively onto one side and the other side of the substrate S1. The pressure-sensitive adhesive layers 11 and 12 are then further dried, or crosslinking reactions are allowed to proceed, as needed. Pressure-sensitive adhesive sheets for build stage use according to the after-mentioned embodiments can also be produced typically through: preparation of pressure-sensitive adhesive composition(s) for pressure-sensitive adhesive layer(s) to be formed; formation of pressure-sensitive adhesive composition layer(s) from the composition(s); formation of target pressure-sensitive adhesive layer(s) from the pressure-sensitive adhesive composition layer(s); and affixation of the pressure-sensitive adhesive layer(s) to a substrate.

The pressure-sensitive adhesive sheet X1, which is produced by the procedure as described above, may be in the form of a wound roll with a separator (release liner) provided so as to cover the surface (adhesive face 11a) of the pressure-sensitive adhesive layer 11, or with a separator (release liner) provided so as to cover the surface (adhesive face 12a) of the pressure-sensitive adhesive layer 12. Alternatively, the pressure-sensitive adhesive sheet X1 may bear a pair of separators (release liners) so as to cover the adhesive faces 11a and 12a. The separator(s) will be removed from the pressure-sensitive adhesive sheet X1 when the pressure-sensitive adhesive sheet X1 is affixed to an adherend. These configurations with release liner(s) are also applicable to the pressure-sensitive adhesive sheets for build stage use according to the after-mentioned embodiments.

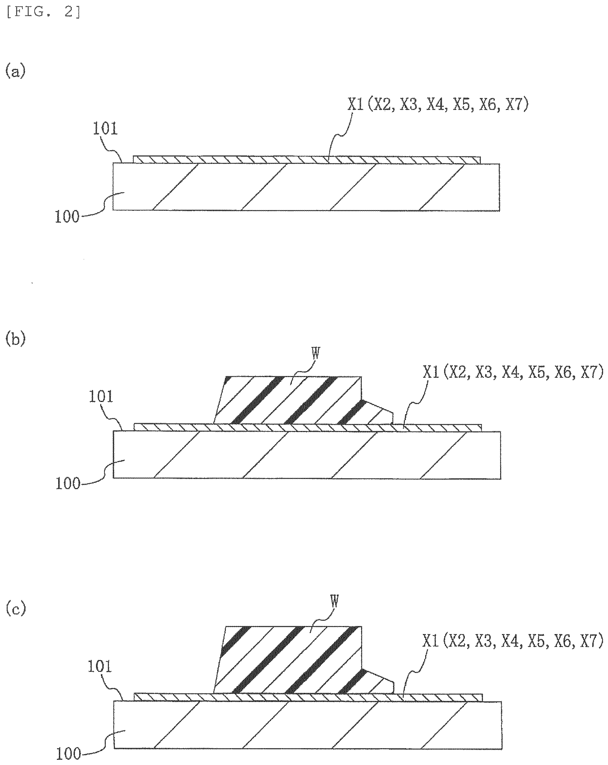

The pressure-sensitive adhesive sheet X1 is to be used for a build stage 100 of an additive manufacturing apparatus for the formation of an object, typically as illustrated in FIGs. 2(a), 2(b), and 2(c). Specifically, the pressure-sensitive adhesive sheet X1 is affixed to an object-forming surface 101 of the build stage 100 before the start of object formation, as illustrated in FIG. 2(a). The pressure-sensitive adhesive sheet X1 is applied, through a pressure-sensitive adhesive layer thereof, to the object-forming surface 101. Specifically, of the pressure-sensitive adhesive sheet X1, one surface defined by the pressure-sensitive adhesive layer 11, or the other surface defined by the pressure-sensitive adhesive layer 12, adheres to the object-forming surface 101. During an object forming process with the apparatus being operated, the target object W is gradually formed (built up) on the pressure-sensitive adhesive sheet X1 affixed to the build stage 100, through a predetermined process according to an additive manufacturing technique employed in the additive manufacturing apparatus, as illustrated in FIG. 2(b). Non-limiting examples of the additive manufacturing technique include fused deposition modeling, material jetting, stereolithography, and sheet lamination. In the object forming process as above, the pressure-sensitive adhesive sheet X1 adheres to the object-forming surface 101 of the build stage 100, and the object W during its formation is attached to the pressure-sensitive adhesive sheet X1 on the build stage 100. Specifically, the object W during its formation is in a state of being attached to the build stage 100 through the pressure-sensitive adhesive sheet X1. After the completion of the object forming process as illustrated in FIG. 2(c), an adhesive strength-reducing action is performed to the pressure-sensitive adhesive sheet X1 on the build stage 100. In the embodiment, the adhesive strength-reducing action is heating of the pressure-sensitive adhesive layer 11, which is an adhesive strength-reducible layer of the pressure-sensitive adhesive sheet X1. For example, assume that the build stage 100 has a built-in heater. In this case, the pressure-sensitive adhesive sheet X1 on the build stage 100 can be heated by the heater. The heating temperature is typically such a temperature as to allow the thermal expansion agent in the pressure-sensitive adhesive layer 11 to expand and/or foam, and is 70°C to 200°C. The heating as above, which is the adhesive strength-reducing action, reduces the adhesive strength of the pressure-sensitive adhesive layer 11 and frees or loosens the attached state of the object W to the build stage 100 through the pressure-sensitive adhesive sheet X1. This results in facilitating the detachment of the object W from the build stage 100. Assume that the pressure-sensitive adhesive sheet X1 is applied, at the surface defined by the pressure-sensitive adhesive layer 11, onto the build stage 100 before the start of object formation. In this case, the object W can be detached (demounted) from the build stage 100 with an operation of removing the pressure-sensitive adhesive sheet X1 from the build stage 100, typically at the adhesive face 11a of the pressure-sensitive adhesive layer 11 whose adhesive strength has been reduced by heating. Assume that the pressure-sensitive adhesive sheet X1 is applied, at the surface defined by the pressure-sensitive adhesive layer 12, onto the build stage 100 before the start of object formation. In this case, the object W is formed on the pressure-sensitive adhesive layer 11 of the pressure-sensitive adhesive sheet X1; and the object W can be detached from the build stage 100 by pulling off the object W from the pressure-sensitive adhesive layer 11 whose adhesive strength has been reduced by heating.

The pressure-sensitive adhesive sheet X1 for build stage use is suitable for allowing the object W, which is to be formed over the build stage 100 of the additive manufacturing apparatus, to be attached to the build stage 100 during building up, and to be readily detached from the build stage 100 after building up. In addition, the pressure-sensitive adhesive sheet X1 as above, when used for the formation of the object W using the additive manufacturing apparatus by the procedure as described above, can avoid or minimize the use of a scraper or another tool having a sharp edge for the detachment of the object W from the build stage 100. Accordingly, the use of the pressure-sensitive adhesive sheet X1 for build stage use contributes to avoiding or minimizing significant damage on the object W and the build stage 100 upon detachment of the object W from the build stage 100.

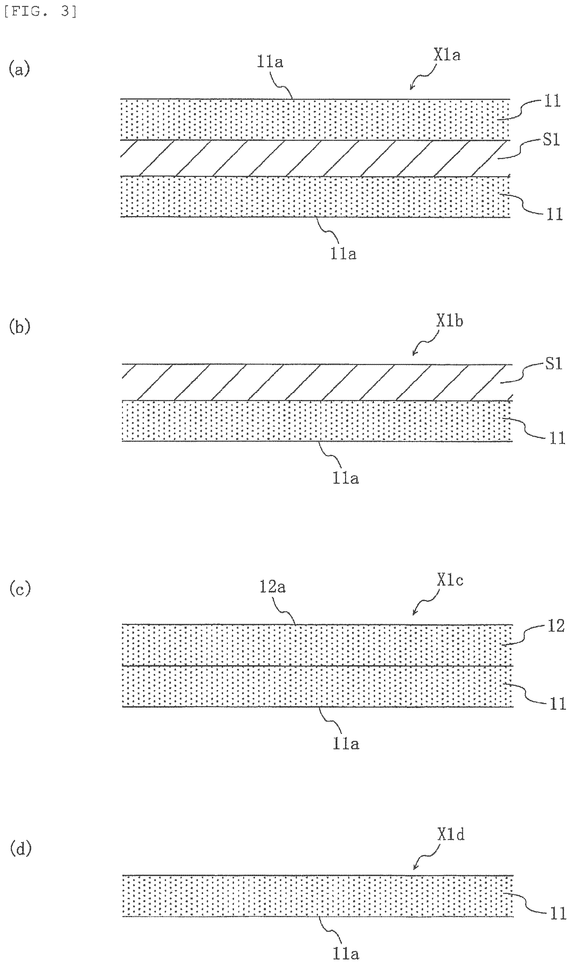

FIG. 3(a) illustrates a pressure-sensitive adhesive sheet X1a, which is a modification of the pressure-sensitive adhesive sheet X1 for build stage use illustrated in FIG. 1. The pressure-sensitive adhesive sheet X1a is a double-sided pressure-sensitive adhesive sheet having a multilayer structure including a substrate S1 and pressure-sensitive adhesive layers 11 and 11, and differs from the pressure-sensitive adhesive sheet X1 in including a thermally releasable pressure-sensitive adhesive layer 11 instead of the pressure-sensitive adhesive layer 12. FIG. 3(b) illustrates a pressure-sensitive adhesive sheet X1b, which is a modification of the pressure-sensitive adhesive sheet X1 for build stage use. The pressure-sensitive adhesive sheet X1b is a single-sided pressure-sensitive adhesive sheet having a multilayer structure including a substrate S1 and a pressure-sensitive adhesive layer 11, and differs from the pressure-sensitive adhesive sheet X1 in including no pressure-sensitive adhesive layer 12. The pressure-sensitive adhesive sheet X1b as above is used by allowing its surface defined by the pressure-sensitive adhesive layer 11 to adhere to the object-forming surface 101 of the build stage 100. Assume that the object to be additively manufactured by the additive manufacturing apparatus is capable of being attached, at its end face facing the stage, to the object-forming surface typically through fusion bonding. In this case, the pressure-sensitive adhesive sheet X1b, which includes no pressure-sensitive adhesive layer on the side facing the object, may be employed. FIG. 3(c) illustrates a pressure-sensitive adhesive sheet X1c, which is a modification of the pressure-sensitive adhesive sheet X1 for build stage use. The pressure-sensitive adhesive sheet X1c is a double-sided pressure-sensitive adhesive sheet having a multilayer structure including pressure-sensitive adhesive layers 11 and 12 and differs from the pressure-sensitive adhesive sheet X1 in including no substrate S1. The pressure-sensitive adhesive sheet X1c as above is used by allowing one surface defined by the pressure-sensitive adhesive layer 11, or the other surface defined by the pressure-sensitive adhesive layer 12, to adhere to the object-forming surface 101 of the build stage 100. Sufficient breaking strength as a pressure-sensitive adhesive sheet for build stage use may be surely provided even without the substrate S1, in some set thickness and/or hardness of each of the pressure-sensitive adhesive layer 11 and the pressure-sensitive adhesive layer 12; and in this case, the configuration of including no substrate S1 may be employed. FIG. 3(d) illustrates a pressure-sensitive adhesive sheet X1d, which is a modification of the pressure-sensitive adhesive sheet X1 for build stage use. The pressure-sensitive adhesive sheet X1d is a double-sided pressure-sensitive adhesive sheet that includes a thermally releasable pressure-sensitive adhesive layer 11. The pressure-sensitive adhesive sheet X1d differs from the pressure-sensitive adhesive sheet X1 in including neither of the substrate S1 and the pressure-sensitive adhesive layer 12. Sufficient breaking strength as a pressure-sensitive adhesive sheet for build stage use may be surely provided even without the substrate S1 and the pressure-sensitive adhesive layer 12, in some set thickness and/or hardness of the pressure-sensitive adhesive layer 11; and in this case, the configuration of including neither of the substrate S1 and the pressure-sensitive adhesive layer 12 may be employed. These pressure-sensitive adhesive sheets X1a, X1b, X1c, and X1d for build stage use are each usable by a procedure similar to that described above for the pressure-sensitive adhesive sheet X1 and are therefore suitable for allowing the object W, which is to be formed over the build stage 100 of the additive manufacturing apparatus, to be attached to the build stage 100 during building up, and to be readily detached from the build stage 100 after building up.

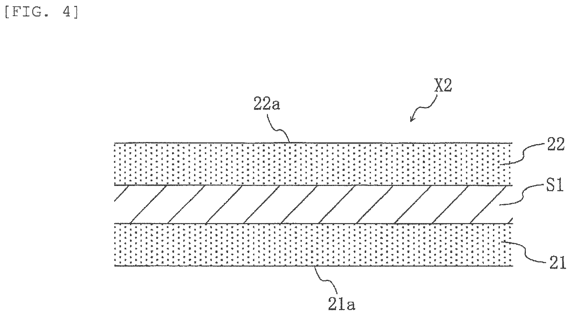

FIG. 4 is a local sectional view of a pressure-sensitive adhesive sheet X2, which is a pressure-sensitive adhesive sheet for build stage use according to an embodiment of the present invention. The pressure-sensitive adhesive sheet X2 is a double-sided pressure-sensitive adhesive sheet having a multilayer structure including a substrate S1 and pressure-sensitive adhesive layers 21 and 22.

The pressure-sensitive adhesive layer 21 of the pressure-sensitive adhesive sheet X2 is a cold-releasable pressure-sensitive adhesive layer (adhesive strength-reducible layer) having an adhesive strength reducible by cooling (adhesive strength-reducing action) and has an adhesive face 21a. The pressure-sensitive adhesive layer 21, which is a cold-releasable pressure-sensitive adhesive layer, is made from a pressure-sensitive adhesive composition having an adhesive strength that is significantly reduced by cooling typically from room temperature. The pressure-sensitive adhesive composition or the pressure-sensitive adhesive layer 21 in the embodiment contains a side-chain crystalline polymer as, or in addition to, a base component pressure-sensitive adhesive. Assume that the pressure-sensitive adhesive layer 21 is cooled down typically to a temperature lower than the melting point of the side-chain crystalline polymer in the pressure-sensitive adhesive layer 21, while the adhesive face 21a adheres to an adherend. In this case, the side-chain crystalline polymer crystallizes in the pressure-sensitive adhesive layer 21 to reduce the adhesive strength to the adherend. The pressure-sensitive adhesive layer 21 has an adhesive strength of typically 6.5 N at -30°C. The cold-releasable pressure-sensitive adhesive layer as above can be formed typically from a pressure-sensitive adhesive composition as described typically in Japanese Unexamined Patent Application Publication (JP-A) No. 2013-173912. The pressure-sensitive adhesive composition just mentioned above includes an acrylic polymer or a partial polymer, where the acrylic polymer is a polymer of a material monomer component including, for example, an alkyl (meth)acrylate containing linear or branched C₁₀-C₁₃ alkyl and including approximately no carboxy-containing monomer; and the partial polymer is one derived from the material monomer component. Non-limiting examples of a coolant for cooling the cold-releasable pressure-sensitive adhesive layer include carbon dioxide gas and nitrogen gas each of which is cooled at - 30°C to 10°C; and water and so-called antifreezes each of which is set at a cooling temperature.

In the configuration, the pressure-sensitive adhesive layer 21 contains a side-chain crystalline polymer capable of crystallizing by cooling and renders cooling-induced reduction in adhesive strength feasible. In stead of, or in combination of, this configuration, the pressure-sensitive adhesive layer 21, which is the cold-releasable pressure-sensitive adhesive layer (adhesive strength-reducible layer) in the pressure-sensitive adhesive sheet X2, may employ any of configurations as follows: a configuration where the pressure-sensitive adhesive layer 21 has such a chemical composition as to contract by cooling and renders cooling-induced reduction in adhesive strength feasible; and a configuration where the pressure-sensitive adhesive layer 21 has such a chemical composition as to cause phase separation by cooling and renders cooling-induced reduction in adhesive strength feasible. Alternatively, the pressure-sensitive adhesive layer 21 may employ configurations selected from these configurations in combination. These points relating to configurations of the pressure-sensitive adhesive layer 21 are also applicable to pressure-sensitive adhesive layers 21 in the after-mentioned modifications relating to the pressure-sensitive adhesive sheet X2.

The pressure-sensitive adhesive layer 22 of the pressure-sensitive adhesive sheet X2 includes a pressure-sensitive adhesive as a base component and has an adhesive face 22a. Non-limiting examples of the pressure-sensitive adhesive contained in the pressure-sensitive adhesive layer 22 include acrylic polymers as acrylic pressure-sensitive adhesives, natural rubbers, various synthetic rubbers, vinyl alkyl ether pressure-sensitive adhesives, silicone pressure-sensitive adhesives, polyester pressure-sensitive adhesives, polyamide pressure-sensitive adhesives, and urethane pressure-sensitive adhesives. The pressure-sensitive adhesive contained in the pressure-sensitive adhesive layer 22 is preferably an acrylic pressure-sensitive adhesive or adhesives. This is preferred from the viewpoint of actually providing satisfactory adhesive strength, cost minimization, and high productivity for the pressure-sensitive adhesive layer 22. The pressure-sensitive adhesive layer 22 may have a multilayer structure including pressure-sensitive adhesive layers differing from each other in chemical composition.

The pressure-sensitive adhesive sheet X2 is to be used for the build stage 100 of the additive manufacturing apparatus for the formation of an object, typically as illustrated in FIGs. 2(a), 2(b), and 2(c), as with the pressure-sensitive adhesive sheet X1. Specifically, the pressure-sensitive adhesive sheet X2 is affixed to the object-forming surface 101 of the build stage 100 before the start of object formation, as illustrated in FIG. 2(a). The pressure-sensitive adhesive sheet X2 is applied through its pressure-sensitive adhesive layer onto the object-forming surface 101. Specifically, of the pressure-sensitive adhesive sheet X2, one surface defined by the pressure-sensitive adhesive layer 21 or the other surface defined by the pressure-sensitive adhesive layer 22 adheres to the object-forming surface 101. During an object forming process with the apparatus being operated, the target object W is gradually formed or built up on the pressure-sensitive adhesive sheet X2 affixed to the build stage 100, as illustrated in FIG. 2(b). In the object forming process as above, the object W during its formation is in a state of being attached to the build stage 100 through the pressure-sensitive adhesive sheet X2. After the completion of the object forming process as illustrated in FIG. 2(c), an adhesive strength-reducing action is performed to the pressure-sensitive adhesive sheet X2 on the build stage 100. The adhesive strength-reducing action in the embodiment is cooling of the pressure-sensitive adhesive layer 21, which is an adhesive strength-reducible layer of the pressure-sensitive adhesive sheet X2. A non-limiting example of the cooling technique is supply of the coolant to the pressure-sensitive adhesive sheet X2 or the pressure-sensitive adhesive layer 21 typically by spraying. The cooling temperature is typically such a temperature as to crystallize the side-chain crystalline polymer in the pressure-sensitive adhesive layer 21 and is -60°C to -20°C. The cooling as above, which is the adhesive strength-reducing action, reduces the adhesive strength of the pressure-sensitive adhesive layer 21 and frees or loosens the attached state of the object W to the build stage 100 through the pressure-sensitive adhesive sheet X2. This results in facilitating the detachment of the object W from the build stage 100. Assume that the pressure-sensitive adhesive sheet X2 is applied, at the surface defined by the pressure-sensitive adhesive layer 21, onto the build stage 100 before the start of object formation. In this case, the object W can be detached from the build stage 100 with an operation of removing the pressure-sensitive adhesive sheet X2 from the build stage 100, typically at the adhesive face 21a of the pressure-sensitive adhesive layer 21 whose adhesive strength has been reduced by cooling. Assume that the pressure-sensitive adhesive sheet X2 is applied, at the surface defined by the pressure-sensitive adhesive layer 22, onto the build stage 100 before the start of object formation. In this case, the object W is formed on the pressure-sensitive adhesive layer 21 of the pressure-sensitive adhesive sheet X2, and the formed object W can be detached from the build stage 100 by pulling off the object W from the pressure-sensitive adhesive layer 21 whose adhesive strength has been reduced by cooling.

As described above, the pressure-sensitive adhesive sheet X2 for build stage use is suitable for allowing the object W, which is to be formed over the build stage 100 of the additive manufacturing apparatus, to be attached to the build stage 100 during building up, and to be readily detached from the build stage 100 after building up. In addition, the pressure-sensitive adhesive sheet X2 as above, when used by the procedure as described above in the formation of the object W using the additive manufacturing apparatus, can avoid or minimize the use of a scraper or another tool having a sharp edge for the detachment of the object W from the build stage 100. Accordingly, the use of the pressure-sensitive adhesive sheet X2 for build stage use contributes to avoiding or minimizing significant damage on the object W and the build stage 100 upon detachment of the object W from the build stage 100.

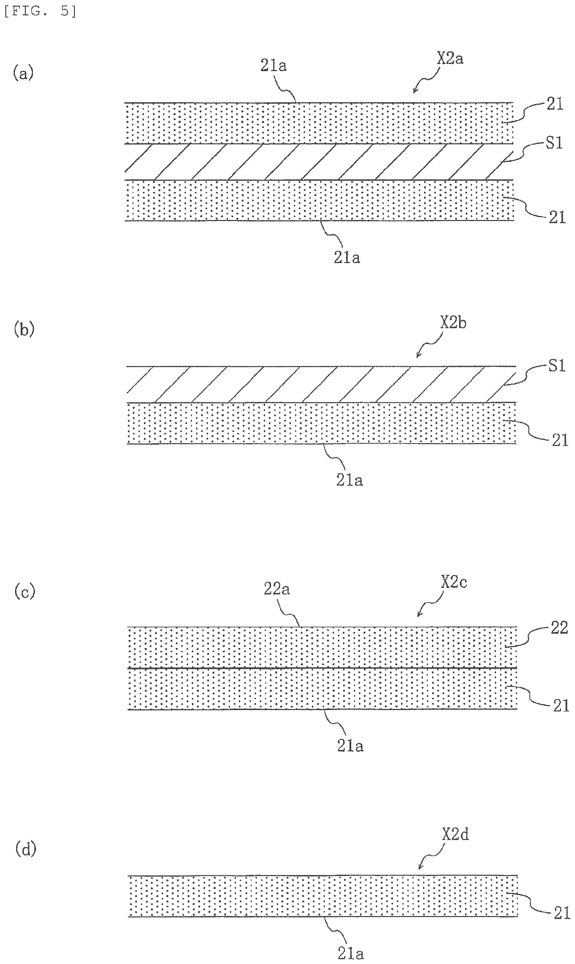

FIG. 5(a) illustrates a pressure-sensitive adhesive sheet X2a, which is a modification of the pressure-sensitive adhesive sheet X2 for build stage use illustrated in FIG. 4. The pressure-sensitive adhesive sheet X2a is a double-sided pressure-sensitive adhesive sheet having a multilayer structure including a substrate S1 and pressure-sensitive adhesive layers 21 and 21, and differs from the pressure-sensitive adhesive sheet X2 in including a cold-releasable pressure-sensitive adhesive layer 21, instead of the pressure-sensitive adhesive layer 22. FIG. 5(b) illustrates a pressure-sensitive adhesive sheet X2b, which is a modification of the pressure-sensitive adhesive sheet X2 for build stage use. The pressure-sensitive adhesive sheet X2b is a single-sided pressure-sensitive adhesive sheet having a multilayer structure including a substrate S1 and a pressure-sensitive adhesive layer 21, and differs from the pressure-sensitive adhesive sheet X2 in including no pressure-sensitive adhesive layer 22. The pressure-sensitive adhesive sheet X2b as above is used by allowing its surface defined by the pressure-sensitive adhesive layer 21 to adhere to the object-forming surface 101 of the build stage 100. Assume that the object to be additively manufactured by the additive manufacturing apparatus is capable of being attached, at its end face facing the stage, to the object-forming surface typically through fusion bonding. In this case, the pressure-sensitive adhesive sheet X2b, which includes no pressure-sensitive adhesive layer on the side facing the object, may be employed. FIG. 5(c) illustrates a pressure-sensitive adhesive sheet X2c, which is a modification of the pressure-sensitive adhesive sheet X2 for build stage use. The pressure-sensitive adhesive sheet X2c is a double-sided pressure-sensitive adhesive sheet having a multilayer structure including pressure-sensitive adhesive layers 21 and 22, and differs from the pressure-sensitive adhesive sheet X2 in including no substrate S1. The pressure-sensitive adhesive sheet X2c as above is used by allowing one surface defined by the pressure-sensitive adhesive layer 21, or the other surface defined by the pressure-sensitive adhesive layer 22, to adhere to the object-forming surface 101 of the build stage 100. Sufficient breaking strength as a pressure-sensitive adhesive sheet for build stage use may be surely provided even without the substrate S1, in some set thickness and/or hardness of each of the pressure-sensitive adhesive layer 21 and the pressure-sensitive adhesive layer 22; and in this case, the configuration of including no substrate S1 may be employed. FIG. 5(d) illustrates a pressure-sensitive adhesive sheet X2d, which is a modification of the pressure-sensitive adhesive sheet X2 for build stage use. The pressure-sensitive adhesive sheet X2d is a double-sided pressure-sensitive adhesive sheet including a cold-releasable pressure-sensitive adhesive layer 21 and differs from the pressure-sensitive adhesive sheet X2 in including neither of the substrate S1 and the pressure-sensitive adhesive layer 22. Sufficient breaking strength as a pressure-sensitive adhesive sheet for build stage use may be surely provided even without the substrate S1 and the pressure-sensitive adhesive layer 22, in some set thickness and/or hardness of the pressure-sensitive adhesive layer 21; and in this case, the configuration of including neither of the substrate S1 and the pressure-sensitive adhesive layer 22 may be employed. These pressure-sensitive adhesive sheets X2a, X2b, X2c, and X2d for build stage use are each usable by a procedure similar to that described above for the pressure-sensitive adhesive sheet X2. Accordingly, these pressure-sensitive adhesive sheets are suitable for allowing the object W, which is to be formed over the build stage 100 of the additive manufacturing apparatus, to be attached to the build stage 100 during building up, and to be readily detached from the build stage 100 after building up.

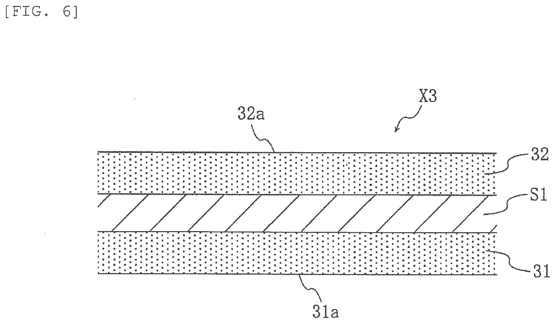

FIG. 6 is a local sectional view of a pressure-sensitive adhesive sheet X3, which is a pressure-sensitive adhesive sheet for build stage use according to an embodiment of the present invention. The pressure-sensitive adhesive sheet X3 is a double-sided pressure-sensitive adhesive sheet having a multilayer structure including a substrate S1 and pressure-sensitive adhesive layers 31 and 32.

The pressure-sensitive adhesive layer 31 of the pressure-sensitive adhesive sheet X3 is an electromagnetically releasable pressure-sensitive adhesive layer (adhesive strength-reducible layer) having an adhesive strength capable of being reduced by electromagnetic radiation application (adhesive strength-reducing action), where the electromagnetic radiation is exemplified typically by ultraviolet radiation. The pressure-sensitive adhesive layer 31 has an adhesive face 31a. The pressure-sensitive adhesive layer 31 is made from a pressure-sensitive adhesive composition that cures by electromagnetic irradiation. The pressure-sensitive adhesive composition or the pressure-sensitive adhesive layer 31 in the embodiment contains a pressure-sensitive adhesive polymer and an electromagnetic radiation-curable component. The electromagnetic radiation-curable component refers typically to a monomer or oligomer capable of allowing a curing reaction to initiate and to proceed upon electromagnetic irradiation. Assume that the pressure-sensitive adhesive layer 31 is irradiated with electromagnetic radiation while the adhesive face 31a adheres to an adherend. In this case, the reaction of the electromagnetic radiation-curable component induced by the irradiation proceeds in the pressure-sensitive adhesive layer 31 to cure the pressure-sensitive adhesive layer 31. The cured pressure-sensitive adhesive layer 31 contracts and gives shearing force at the interface between the pressure-sensitive adhesive layer 31 and the adherend. In the embodiment, the pressure-sensitive adhesive layer 31 is configured to be reduced in adhesive strength to the adherend, using the shearing force occurring as above at the interface with the adherend. The pressure-sensitive adhesive layer 31 as above contains the electromagnetic radiation-curable component in a content of typically 5 to 500 parts by mass, preferably 10 to 200 parts by mass, and more preferably 10 to 100 parts by mass, per 100 parts by mass of the pressure-sensitive adhesive polymer in the pressure-sensitive adhesive layer 31.

In the above-mentioned configuration, the pressure-sensitive adhesive layer 31 contains an electromagnetic radiation-curable monomer and/or oligomer capable of allowing a curing reaction to initiate and to proceed by electromagnetic irradiation and renders electromagnetic radiation-induced reduction in adhesive strength feasible. Instead of, or in combination with, this configuration, the pressure-sensitive adhesive layer 31, which serves as an electromagnetically releasable pressure-sensitive adhesive layer (adhesive strength-reducible layer) in the pressure-sensitive adhesive sheet X3, may employ any of configurations as follows: a configuration where the pressure-sensitive adhesive layer 31 contains a component, such as an azo compound or an azide compound, that is capable of undergoing a photocatalytic reaction upon electromagnetic irradiation, evolving a gas, and foaming, and renders electromagnetic radiation-induced reduction in adhesive strength feasible; and a configuration where the pressure-sensitive adhesive layer 31 contains a component, such as a liquid crystal, that responds to electromagnetic irradiation and changes in structure, and renders electromagnetic radiation-induced reduction in adhesive strength feasible. Alternatively, the pressure-sensitive adhesive layer 31 may employ configurations selected from these configurations in combination. These points relating to configurations of the pressure-sensitive adhesive layer 31 are also applicable to pressure-sensitive adhesive layers 31 of the after-mentioned modifications of the pressure-sensitive adhesive sheet X3.

The pressure-sensitive adhesive layer 32 of the pressure-sensitive adhesive sheet X3 includes a pressure-sensitive adhesive as a base component and has an adhesive face 32a. Non-limiting examples of the pressure-sensitive adhesive contained in the pressure-sensitive adhesive layer 32 include acrylic polymers as acrylic pressure-sensitive adhesives, natural rubbers, various synthetic rubbers, vinyl alkyl ether pressure-sensitive adhesives, silicone pressure-sensitive adhesives, polyester pressure-sensitive adhesives, polyamide pressure-sensitive adhesives, and urethane pressure-sensitive adhesives. The pressure-sensitive adhesive contained in the pressure-sensitive adhesive layer 32 is preferably an acrylic pressure-sensitive adhesive or adhesives. This is preferred from the viewpoint of actually providing satisfactory adhesive strength, cost minimization, and high productivity for the pressure-sensitive adhesive layer 32. The pressure-sensitive adhesive layer 32 may have a multilayer structure including pressure-sensitive adhesive layers differing from each other in chemical composition.

The pressure-sensitive adhesive sheet X3 is to be used for the build stage 100 of the additive manufacturing apparatus for the formation of an object, typically as illustrated in FIGs. 2(a), 2(b), and 2(c), as with the pressure-sensitive adhesive sheet X1. Specifically, the pressure-sensitive adhesive sheet X3 is affixed to the object-forming surface 101 of the build stage 100 before the start of object formation, as illustrated in FIG. 2(a). The pressure-sensitive adhesive sheet X3 is applied, through one of pressure-sensitive adhesive layers thereof, to the object-forming surface 101. Specifically, of the pressure-sensitive adhesive sheet X3, one surface defined by the pressure-sensitive adhesive layer 31, or the other surface defined by the pressure-sensitive adhesive layer 32, adheres to the object-forming surface 101. The target object W is gradually formed or built up on the pressure-sensitive adhesive sheet X3 affixed to the build stage 100 during an object forming process with the apparatus being operated, as illustrated in FIG. 2(b). In the object forming process as above, the object W during its formation is in a state of being attached to the build stage 100 through the pressure-sensitive adhesive sheet X3. After the completion of the object forming process as illustrated in FIG. 2(c), an adhesive strength-reducing action is performed to the pressure-sensitive adhesive sheet X3 on the build stage 100. In the embodiment, the adhesive strength-reducing action is electromagnetic irradiation of the pressure-sensitive adhesive layer 31, which is an adhesive strength-reducible layer of the pressure-sensitive adhesive sheet X3. The electromagnetic radiation of the pressure-sensitive adhesive layer 31 induces a chemical reaction and allows the chemical reaction to proceed in the pressure-sensitive adhesive layer 31 to thereby cure the pressure-sensitive adhesive layer 31. The cured pressure-sensitive adhesive layer 31 contracts and gives shearing force at the interface between the pressure-sensitive adhesive layer 31 and an adherend thereof. This reduces the adhesive strength of the pressure-sensitive adhesive layer 31 to the adherend, and frees or loosens the attached state of the object W to the build stage 100 through the pressure-sensitive adhesive sheet X3. This results in facilitating the detachment of the object W from the build stage 100. Assume that the pressure-sensitive adhesive sheet X3 is applied, at the surface defined by the pressure-sensitive adhesive layer 31, onto the build stage 100 before the start of object formation. In this case, the object W can be detached from the build stage 100 with an operation of removing the pressure-sensitive adhesive sheet X3 from the build stage 100, typically at the adhesive face 31a of the pressure-sensitive adhesive layer 31 whose adhesive strength has been reduced by electromagnetic irradiation. Also assume that the pressure-sensitive adhesive sheet X3 is applied, at the surface defined by the pressure-sensitive adhesive layer 32, onto the build stage 100 before the start of object formation. In this case, the object W is formed on the pressure-sensitive adhesive layer 31 of the pressure-sensitive adhesive sheet X3; and the formed object W can be detached from the build stage 100 by pulling off the object W from the pressure-sensitive adhesive layer 31 whose adhesive strength has been reduced by electromagnetic irradiation.

As described above, the pressure-sensitive adhesive sheet X3 for build stage use is suitable for allowing the object W, which is to be formed over the build stage 100 of the additive manufacturing apparatus, to be attached to the build stage 100 during building up, and to be readily detached from the build stage 100 after building up. In addition, the pressure-sensitive adhesive sheet X3 as above, when used by the procedure as described above in the formation of the object W using the additive manufacturing apparatus, can avoid or minimize the use of a scraper or another tool having a sharp edge for the detachment of the object W from the build stage 100. Accordingly, the use of the pressure-sensitive adhesive sheet X3 for build stage use contributes to avoiding or minimizing significant damage on the object W and the build stage 100 upon detachment of the object W from the build stage 100.

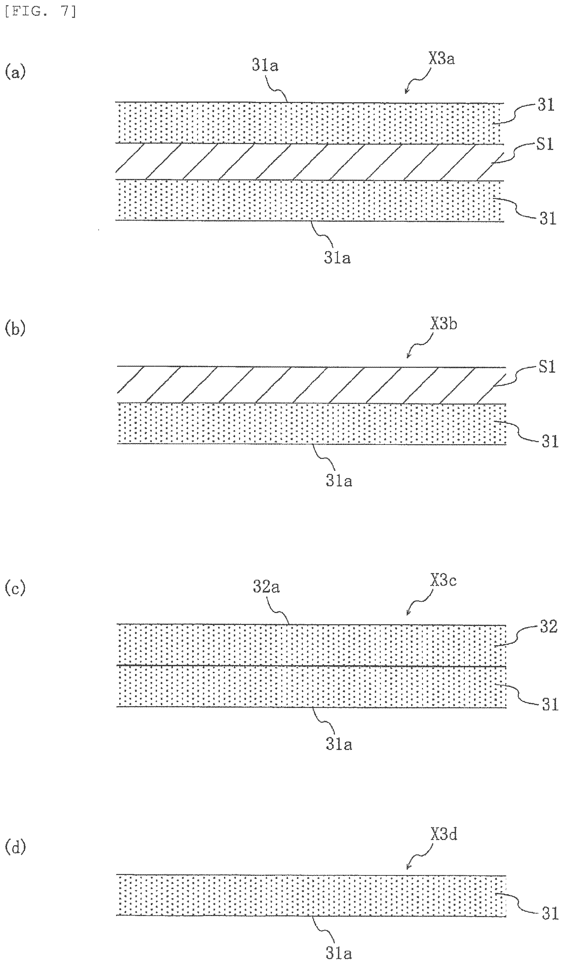

FIG. 7(a) illustrates a pressure-sensitive adhesive sheet X3a, which is a modification of the pressure-sensitive adhesive sheet X3 illustrated in FIG. 6. The pressure-sensitive adhesive sheet X3a is a double-sided pressure-sensitive adhesive sheet having a multilayer structure including a substrate S1 and pressure-sensitive adhesive layers 31 and 31, and differs from the pressure-sensitive adhesive sheet X3 in including the electromagnetically releasable pressure-sensitive adhesive layer 31, instead of the pressure-sensitive adhesive layer 32. FIG. 7(b) illustrates a pressure-sensitive adhesive sheet X3b, which is a modification of the pressure-sensitive adhesive sheet X3. The pressure-sensitive adhesive sheet X3b is a single-sided pressure-sensitive adhesive sheet having a multilayer structure including a substrate S1 and a pressure-sensitive adhesive layer 31, and differs from the pressure-sensitive adhesive sheet X3 in including no pressure-sensitive adhesive layer 32. The pressure-sensitive adhesive sheet X3b as above is used by allowing the surface defined by the pressure-sensitive adhesive layer 31 to adhere to the object-forming surface 101 of the build stage 100. Assume that the object to be additively manufactured by the additive manufacturing apparatus is capable of being attached, at its end face facing the stage, to the object-forming surface typically through fusion bonding. In this case, the pressure-sensitive adhesive sheet X3b, which includes no pressure-sensitive adhesive layer on the side facing the object, may be employed. FIG. 7(c) illustrates a pressure-sensitive adhesive sheet X3c, which is a modification of the pressure-sensitive adhesive sheet X3. The pressure-sensitive adhesive sheet X3c is a double-sided pressure-sensitive adhesive sheet having a multilayer structure including pressure-sensitive adhesive layers 31 and 32, and differs from the pressure-sensitive adhesive sheet X3 in including no substrate S1. The pressure-sensitive adhesive sheet X3c as above is used by allowing the surface defined by the pressure-sensitive adhesive layer 31 or the surface defined by the pressure-sensitive adhesive layer 32 to adhere to the object-forming surface 101 of the build stage 100. Sufficient breaking strength as a pressure-sensitive adhesive sheet for build stage use may be surely provided even without the substrate S1, in some set thickness and/or hardness of each of the pressure-sensitive adhesive layer 31 and the pressure-sensitive adhesive layer 32; and in this case, the configuration of including no substrate S1 may be employed. FIG. 7(d) illustrates a pressure-sensitive adhesive sheet X3d, which is a modification of the pressure-sensitive adhesive sheet X3. The pressure-sensitive adhesive sheet X3d is a double-sided pressure-sensitive adhesive sheet including an electromagnetically releasable pressure-sensitive adhesive layer 31 and differs from the pressure-sensitive adhesive sheet X3 in including neither of the substrate S2 and the pressure-sensitive adhesive layer 32. Sufficient breaking strength as a pressure-sensitive adhesive sheet for build stage use may be surely provided even without the substrate S1 and the pressure-sensitive adhesive layer 32, in some set thickness and/or hardness of the pressure-sensitive adhesive layer 31; and in this case, the configuration of including neither of the substrate S1 and the pressure-sensitive adhesive layer 32 may be employed. These pressure-sensitive adhesive sheets X3a, X3b, X3c, and X3d for build stage use are each usable by a procedure similar to that described above for the pressure-sensitive adhesive sheet X3. Accordingly, these are suitable for allowing the object W, which is to be formed over the build stage 100 of the additive manufacturing apparatus, to be attached to the build stage 100 during building up, and to be readily detached from the build stage 100 after building up.

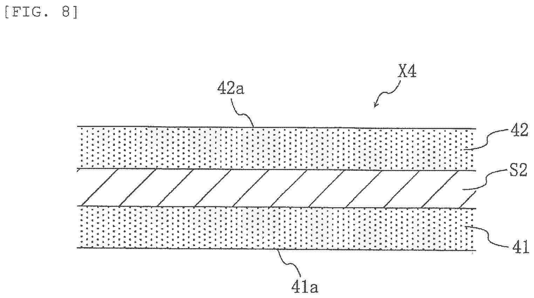

FIG. 8 is a local sectional view of a pressure-sensitive adhesive sheet X4, which is a pressure-sensitive adhesive sheet for build stage use according to an embodiment of the present invention. The pressure-sensitive adhesive sheet X4 is a double-sided pressure-sensitive adhesive sheet having a multilayer structure including a substrate S2 and pressure-sensitive adhesive layers 41 and 42.

The substrate S2 is a portion that function as a carrier (support) in the pressure-sensitive adhesive sheet X4 and also functions as one terminal for voltage application described later. The substrate S2 typically has a multilayer structure including a base material, and a conductive layer (electroconductive layer) disposed on the base material. Non-limiting examples of the base material include plastic substrates, fibrous substrates, and paper substrates. The conductive layer is a layer having conductivity (electrical conductivity) and is made typically from or of a metal or a conductive polymer. The conductive layer has a thickness of typically 10 to 1000 µm. The conductive layer as above can be formed on the base material by a technique of metal plating, chemical vapor deposition, or sputtering. The pressure-sensitive adhesive layer 41 adheres to, of the substrate S2, the surface defined by the conductive layer and is electrically coupled to the conductive layer. The substrate S2 in the embodiment includes an extending portion that extends in an in-plane direction of the substrate S2 and is exposed from (protruded from) the pressure-sensitive adhesive layer 41. The configuration as above actually facilitates electrical coupling, through the extending portion, between one of terminals of a voltage application device or direct-current power supply device and the substrate S2 or the conductive layer thereof. Instead of such a substrate having a multilayer structure including a base material and a conductive layer, the substrate S2 in the embodiment may be a conductive substrate. The substrate S2 just mentioned above may be made typically of or from a metal or a conductive polymer. The substrate S2, which has any of the configurations as above, has a thickness of typically 10 to 1000 µm, preferably 30 to 500 µm, and more preferably 50 to 300 µm.

The pressure-sensitive adhesive layer 41 of the pressure-sensitive adhesive sheet X4 is an electrically releasable pressure-sensitive adhesive layer (adhesive strength-reducible layer) having an adhesive strength capable of being reduced by voltage application (adhesive strength-reducing action). The pressure-sensitive adhesive layer 41 has an adhesive face 41a. The pressure-sensitive adhesive layer 41 typically contains a pressure-sensitive adhesive and an electrolyte. Assume that a direct-current voltage is applied to the pressure-sensitive adhesive layer 41 so as to cause potential difference in a thickness direction of the pressure-sensitive adhesive layer 41. In this case, the electrolyte in the pressure-sensitive adhesive layer 41 undergoes orientation modulation and/or migration within a thickness direction of the layer, and this may change the chemical composition of the surface of the pressure-sensitive adhesive layer 41. Assume that the pressure-sensitive adhesive layer 41 receives the applied voltage while the adhesive face 41a adheres to an adherend. In this case, the adhesive strength of the adhesive face 41a can be reduced using the chemical composition change occurring at the adhesive face 41a.

Non-limiting examples of the pressure-sensitive adhesive contained in the pressure-sensitive adhesive layer 41 include acrylic polymers as acrylic pressure-sensitive adhesives, rubber pressure-sensitive adhesives, vinyl alkyl ether pressure-sensitive adhesives, silicone pressure-sensitive adhesives, polyester pressure-sensitive adhesives, polyamide pressure-sensitive adhesives, urethane pressure-sensitive adhesives, fluorocarbon pressure-sensitive adhesives, and epoxy pressure-sensitive adhesives. The pressure-sensitive adhesive layer 41 may include each of different pressure-sensitive adhesives alone or in combination. The pressure-sensitive adhesive contained in the pressure-sensitive adhesive layer 41 is preferably an acrylic pressure-sensitive adhesive or adhesives, from the viewpoint of actually providing cost minimization and high productivity. The chemical composition and polymerization technique of the acrylic polymers as acrylic pressure-sensitive adhesives are as with those described above for the acrylic polymer as an acrylic pressure-sensitive adhesive contained in the pressure-sensitive adhesive layer 11 of the pressure-sensitive adhesive sheet X1.

The electrolyte contained in the pressure-sensitive adhesive layer 41 is a substance that can be ionized into an anion and a cation. Non-limiting examples of such electrolyte include ionic liquids, alkali metal salts, and alkaline earth metal salts. The electrolyte contained in the pressure-sensitive adhesive layer 41 is preferably selected from ionic liquids, from the viewpoint of allowing the pressure-sensitive adhesive layer 41 to actually have satisfactory electric releasability (electrically induced releasability). Such an ionic liquid is a salt that is liquid at room temperature (about 25°C) and includes an anion and a cation. The ionic liquid, when contained in the pressure-sensitive adhesive layer 41, may include, as the anion, at least one selected from the group consisting typically of (CF₃SO₂)₂N⁻, (CF₃Cr₂SO₂)₂N⁻, (CF₃SO₂)₃C⁻, Br⁻, AlCl₄⁻, Al₂Cl₇⁻, NO₃⁻, BF₄⁻, PFe⁻, CH₃COO⁻, CF₃COO⁻, CF₃CF₂CF₂COO⁻, CF₃SO₃⁻, CF₃(CF₂)₃SO₃⁻, AsF₆⁻, and SbF₆⁻. The ionic liquid, when contained in the pressure-sensitive adhesive layer 41, may include, as the cation, at least one selected from the group consisting typically of imidazolium cations, pyridinium cations, pyrrolidinium cations, and ammonium cations. Non-limiting examples of commercial products of the ionic liquid to be contained in the pressure-sensitive adhesive layer 41 include IL-A series, IL-P series, IL-C series, IL-IM series, and IL-AP series, each supplied by KOEI CHEMICAL COMPANY, LIMITED.

The electrolyte may be present in the pressure-sensitive adhesive layer 41 in a content of typically 0.1 mass percent or more, so as to impart electric releasability to the pressure-sensitive adhesive layer 41. The content of the electrolyte in the pressure-sensitive adhesive layer 41 is preferably 0.5 part by mass or more, more preferably 0.6 part by mass or more, furthermore preferably 0.8 part by mass or more, still more preferably 1.0 part by mass or more, and still furthermore preferably 1.5 parts by mass or more, per 100 parts by mass of the pressure-sensitive adhesive in the pressure-sensitive adhesive layer 41. These are preferred from the viewpoint of allowing the pressure-sensitive adhesive layer 41 to actually have satisfactory electric releasability. The content of the electrolyte in the pressure-sensitive adhesive layer 41 is preferably 30 parts by mass or less, more preferably 20 parts by mass or less, furthermore preferably 15 parts by mass or less, still more preferably 10 parts by mass or less, and still furthermore preferably 5 parts by mass or less, per 100 parts by mass of the pressure-sensitive adhesive in the pressure-sensitive adhesive layer 41. These are preferred from the viewpoint of allowing the pressure-sensitive adhesive layer 41 to actually have adhesive strength and electric releasability in good balance at satisfactory levels.

In the above-mentioned configuration, the pressure-sensitive adhesive layer 41 contains an electrolyte capable of being unevenly distributed by the application of a direct-current voltage, in addition to a pressure-sensitive adhesive polymer, and renders voltage application-induced reduction in adhesive strength feasible. Instead of, or in combination with, this configuration, the pressure-sensitive adhesive layer 41, which is an electrically releasable pressure-sensitive adhesive layer (adhesive strength-reducible layer) in the pressure-sensitive adhesive sheet X4, may employ any of configurations as follows: a configuration where the pressure-sensitive adhesive layer 41 contains charged particles and/or molecules capable of undergoing electrophoresis by the application of a direct-current voltage, in addition to a pressure-sensitive adhesive polymer and renders voltage application-induced reduction in adhesive strength feasible; and a configuration where pressure-sensitive adhesive layer 41 contains an electro-sensitive low-molecular-weight liquid crystal component in addition to a pressure-sensitive adhesive polymer, is thereby capable of undergoing phase separation by the application of an alternating voltage, and renders voltage application-induced reduction in adhesive strength feasible. Alternatively, the pressure-sensitive adhesive layer 41 may employ configurations selected from these configurations in combination. These points relating to configurations of the pressure-sensitive adhesive layer 41 are also applicable to pressure-sensitive adhesive layers 41 in the after-mentioned modifications of the pressure-sensitive adhesive sheet X4.

The pressure-sensitive adhesive layer 42 of the pressure-sensitive adhesive sheet X4 includes a pressure-sensitive adhesive as a base component and has an adhesive face 42a. Non-limiting examples of the pressure-sensitive adhesive contained in the pressure-sensitive adhesive layer 42 include acrylic polymers as acrylic pressure-sensitive adhesives, natural rubbers, various synthetic rubbers, vinyl alkyl ether pressure-sensitive adhesives, silicone pressure-sensitive adhesives, polyester pressure-sensitive adhesives, polyamide pressure-sensitive adhesives, and urethane pressure-sensitive adhesives. The pressure-sensitive adhesive contained in the pressure-sensitive adhesive layer 42 is preferably an acrylic pressure-sensitive adhesive or adhesives. This is preferred from the viewpoint of actually providing satisfactory adhesive strength, cost minimization, and high productivity for the pressure-sensitive adhesive layer 42. The pressure-sensitive adhesive layer 42 may have a multilayer structure including pressure-sensitive adhesive layers differing from each other in chemical composition.

The pressure-sensitive adhesive sheet X4 is to be used for the build stage 100 of the additive manufacturing apparatus for the formation of an object, typically as illustrated in FIGs. 2(a), 2(b), and 2(c), as with the pressure-sensitive adhesive sheet X1. Specifically, the pressure-sensitive adhesive sheet X4 is affixed to the object-forming surface 101 of the build stage 100 before the start of object formation, as illustrated in FIG. 2(a). In the embodiment, at least one of the object-forming surface 101 and the object has conductivity. The build stage 100 can have an object-forming surface 101 that is conductive, typically by securing a conductive plate made from a conductive material to the surface of a build stage body made from a non-conductive material, or by employing a build stage body made from a conductive material. An object having conductivity can be formed typically when a modeling material (object-forming material) to be fed to the build stage 100 in an object forming process is a resin composition containing a conductive filler. The pressure-sensitive adhesive sheet X4 is applied, through a pressure-sensitive adhesive layer thereof, to the object-forming surface 101 before the start of object formation. For example, when the object-forming surface 101 has conductivity, the pressure-sensitive adhesive layer 41, which is electrically releasable, adheres to the object-forming surface 101; whereas, when the object has conductivity, the pressure-sensitive adhesive layer 42 adheres to the object-forming surface 101. During an object forming process with the apparatus being operated, the target object W is gradually formed on the pressure-sensitive adhesive sheet X4 affixed to the build stage 100, as illustrated in FIG. 2(b). In the object forming process as above, the object W during its formation is in a state of being attached to the build stage 100 through the pressure-sensitive adhesive sheet X4. After the completion of the object forming process as illustrated in FIG. 2(c), an adhesive strength-reducing action is performed to the pressure-sensitive adhesive sheet X4 on the build stage 100. The adhesive strength-reducing action in the embodiment is application of a voltage to the pressure-sensitive adhesive layer 41, which is an adhesive strength-reducible layer of the pressure-sensitive adhesive sheet X4. Specifically, the voltage is applied to the pressure-sensitive adhesive layer 41 so as to give a potential difference in a thickness direction of the layer. Assume that the object-forming surface 101 has conductivity. In this case, the voltage application to the pressure-sensitive adhesive layer 41 can be performed after electrically coupling a pair of terminals of a voltage application device or direct-current power supply device respectively to the substrate S2, or the conductive layer thereof, of the pressure-sensitive adhesive sheet X4, and the object-forming surface 101 of the build stage 100. Assume that the object has conductivity. In this case, the voltage application to the pressure-sensitive adhesive layer 41 can be performed after electrically coupling a pair of terminals of a voltage application device or direct-current power supply device respectively to the substrate S2, or the conductive layer thereof, of the pressure-sensitive adhesive sheet X4, and the object. These voltage applications are performed typically by bringing a positive electrode terminal of the voltage application device into contact with the substrate S2 or the conductive layer thereof; and bringing a negative electrode terminal into contact with the object-forming surface 101 having conductivity or the object having conductivity, each of which serves as the other conductive part (assume that the voltage application can be performed to an electrically releasable pressure-sensitive adhesive layer 41 through an object-forming surface 101 having conductivity and an object having conductivity, in the after-mentioned modifications of the pressure-sensitive adhesive sheet X4; in this case, the voltage application may be performed after electrically coupling a pair of terminals of a voltage application device respectively to the object-forming surface 101 and the object). The voltage application as above gives a potential difference in a thickness direction of the pressure-sensitive adhesive layer 41, and causes the electrolyte in the pressure-sensitive adhesive layer 41 to change in orientation and/or to migrate in a thickness direction of the layer to change the chemical composition of the surface (electrically releasable adhesive face) of the pressure-sensitive adhesive layer 41. This reduces the adhesive strength of the surface of the pressure-sensitive adhesive layer 41. Then, when the pressure-sensitive adhesive layer 41 contains the ionic liquid as the electrolyte, the cation and the anion of the ionic liquid in the pressure-sensitive adhesive layer 41 undergoes orientation modulation and/or migration to a thickness direction of the layer. The cation migrates toward the negative electrode, which has a lower potential; and the cation migrates toward the positive electrode, which has a higher potential. In the ionic liquid, the cation tends to have a higher diffusion coefficient and to migrate faster as compared with the anion. As a result of the voltage application in the direction to the pressure-sensitive adhesive layer 41 containing the ionic liquid, in the pressure-sensitive adhesive layer 41, the chemical composition change (cation uneven distribution) at the surface facing the negative electrode precedes the chemical composition change (anion uneven distribution) at the surface facing the positive electrode. Accordingly, in the pressure-sensitive adhesive layer 41, the adhesive strength to the object-forming surface 101 is precedently significantly reduced. With an increasing voltage application time, the adhesive strength of the pressure-sensitive adhesive layer 41 or the adhesive face 41a thereof tend to be reduced. The voltage application to the pressure-sensitive adhesive layer 41 may be performed at a voltage of preferably 1 to 100 V for a time of typically 60 seconds or shorter. The voltage application as above, which is an adhesive strength-reducing action, frees or loosens the attached state of the object W to the build stage 100 through the pressure-sensitive adhesive sheet X4. This results in facilitating the detachment of the object W from the build stage 100. Assume that the pressure-sensitive adhesive sheet X4 is applied, at the surface defined by the pressure-sensitive adhesive layer 41, onto the object-forming surface 101 having conductivity before the start of object formation. In this case, the object W can be detached from the build stage 100 with an operation of removing the pressure-sensitive adhesive sheet X4 from the build stage 100, typically at the adhesive face 41a of the pressure-sensitive adhesive layer 41 whose adhesive strength has been reduced by the voltage application. Also assume that the pressure-sensitive adhesive sheet X4 is applied, at the surface defined by the pressure-sensitive adhesive layer 42, to the object-forming surface 101 before the start of object formation; and an object W having conductivity is then formed on the pressure-sensitive adhesive layer 41 of the pressure-sensitive adhesive sheet X4. In this case, the object W can be detached from the build stage 100 by pulling off the object W from the pressure-sensitive adhesive layer 41 whose adhesive strength has been reduced by the voltage application.

As described above, the pressure-sensitive adhesive sheet X4 for build stage use is suitable for allowing the object W, which is to be formed over the build stage 100 of the additive manufacturing apparatus, to be attached to the build stage 100 during building up, and to be readily detached from the build stage 100 after building up. In addition, the pressure-sensitive adhesive sheet X4 as above, when used by the procedure as described above in the formation of the object W using the additive manufacturing apparatus, can avoid or minimize the use of a scraper or another tool having a sharp edge for the detachment of the object W from the build stage 100. Accordingly, the use of the pressure-sensitive adhesive sheet X4 for build stage use contributes to avoiding or minimizing significant damage on the object W and the build stage 100 upon detachment of the object W from the build stage 100.

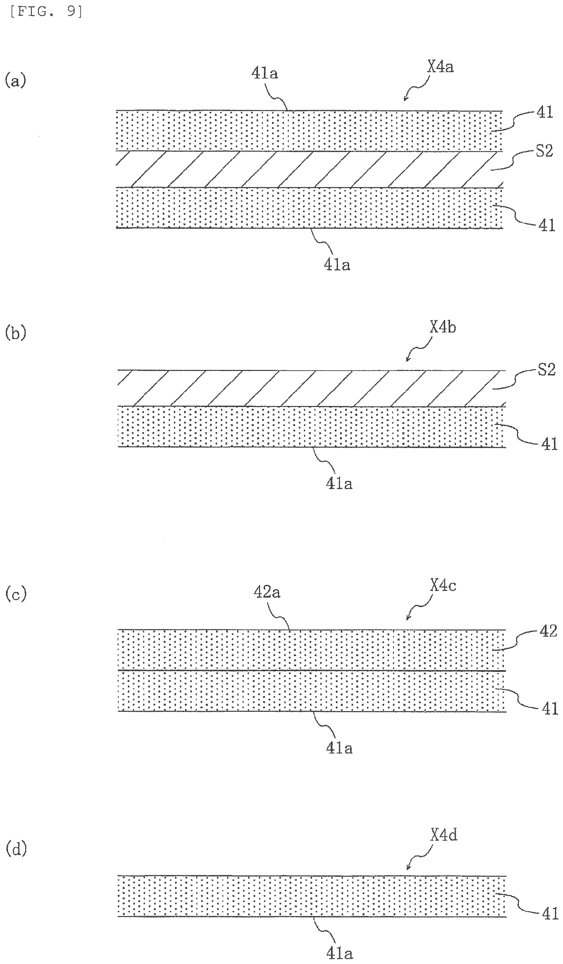

FIG. 9(a) illustrates a pressure-sensitive adhesive sheet X4a, which is a modification of the pressure-sensitive adhesive sheet X4 for build stage use illustrated in FIG. 8. The pressure-sensitive adhesive sheet X4a is a double-sided pressure-sensitive adhesive sheet having a multilayer structure including a substrate S2 and pressure-sensitive adhesive layers 41 and 41, and differs from the pressure-sensitive adhesive sheet X4 in including the pressure-sensitive adhesive layer 41, which is electrically releasable, instead of the pressure-sensitive adhesive layer 42. FIG. 9(b) illustrates a pressure-sensitive adhesive sheet X4b, which is a modification of the pressure-sensitive adhesive sheet X4 for build stage use. The pressure-sensitive adhesive sheet X4b is a single-sided pressure-sensitive adhesive sheet having a multilayer structure including a substrate S2 and a pressure-sensitive adhesive layer 41, and differs from the pressure-sensitive adhesive sheet X4 in including no pressure-sensitive adhesive layer 42. The pressure-sensitive adhesive sheet X4b as above is used by allowing the surface defined by the pressure-sensitive adhesive layer 41 to adhere to the object-forming surface 101 of the build stage 100. The object-forming surface 101 of the build stage 100 for use with the pressure-sensitive adhesive sheet X4b has conductivity. Specifically, assume that the object to be additively manufactured by the additive manufacturing apparatus is capable of being attached, at its end face facing the stage, to the object-forming surface typically through fusion bonding; and in this case, the pressure-sensitive adhesive sheet X4b, which includes no pressure-sensitive adhesive layer on the side facing the object, may be employed. FIG. 9(c) illustrates a pressure-sensitive adhesive sheet X4c, which is a modification of the pressure-sensitive adhesive sheet X4 for build stage use. The pressure-sensitive adhesive sheet X4c is a double-sided pressure-sensitive adhesive sheet having a multilayer structure including pressure-sensitive adhesive layers 41 and 42 and differs from the pressure-sensitive adhesive sheet X4 in including no substrate S2. The pressure-sensitive adhesive sheet X4c as above is used by allowing the surface defined by the pressure-sensitive adhesive layer 41 to adhere to the object-forming surface 101 of the build stage 100. In this case, the object-forming surface 101 has conductivity. Alternatively, the pressure-sensitive adhesive sheet X4c is used by allowing the surface defined by the pressure-sensitive adhesive layer 42 to adhere to the object-forming surface 101. In this case, the object W to be formed on the pressure-sensitive adhesive sheet X4c or the pressure-sensitive adhesive layer 41 has conductivity. Sufficient breaking strength as a pressure-sensitive adhesive sheet for build stage use may be surely provided even without the substrate S2, in some set thickness and/or hardness of each of the pressure-sensitive adhesive layer 41 and the pressure-sensitive adhesive layer 42; and in this case, the configuration of including no substrate S2 may be employed. FIG. 9(d) illustrates a pressure-sensitive adhesive sheet X4d, which is a modification of the pressure-sensitive adhesive sheet X4 for build stage use. The pressure-sensitive adhesive sheet X4d is a double-sided pressure-sensitive adhesive sheet including a pressure-sensitive adhesive layer 41, which is electrically releasable. The pressure-sensitive adhesive sheet X4d differs from the pressure-sensitive adhesive sheet X4 in including neither of the substrate S2 and the pressure-sensitive adhesive layer 42. The object-forming surface 101 of the build stage 100 for use with the pressure-sensitive adhesive sheet X4d has conductivity, and the object W to be formed on the pressure-sensitive adhesive sheet X4d or the pressure-sensitive adhesive layer 41 also has conductivity. Sufficient breaking strength as a pressure-sensitive adhesive sheet for build stage use may be surely provided even without the substrate S2 and the pressure-sensitive adhesive layer 42, in some set thickness and/or hardness of the pressure-sensitive adhesive layer 41; and, in this case, the configuration of including neither of the substrate S2 and the pressure-sensitive adhesive layer 42 may be employed. These pressure-sensitive adhesive sheets X4a, X4b, X4c, and X4d for build stage use are each usable by a procedure similar to that described above for the pressure-sensitive adhesive sheet X4. Accordingly, these are suitable for allowing the object W, which is to be formed over the build stage 100 of the additive manufacturing apparatus, to be attached to the build stage 100 during building up, and to be readily detached from the build stage 100 after building up.

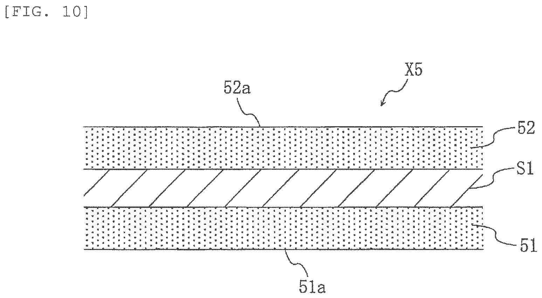

FIG. 10 is a local sectional view of a pressure-sensitive adhesive sheet X5, which is a pressure-sensitive adhesive sheet for build stage use according to an embodiment of the present invention. The pressure-sensitive adhesive sheet X5 is a double-sided pressure-sensitive adhesive sheet having a multilayer structure including a substrate S1 and pressure-sensitive adhesive layers 51 and 52.

The pressure-sensitive adhesive layer 51 of the pressure-sensitive adhesive sheet X5 is a liquid-releasable pressure-sensitive adhesive layer (adhesive strength-reducible layer) having an adhesive strength capable of being reduced by liquid supply (adhesive strength-reducing action). The pressure-sensitive adhesive layer 51 has an adhesive face 51a. In the embodiment, the pressure-sensitive adhesive layer 51, which is a liquid-releasable pressure-sensitive adhesive layer, includes a pressure-sensitive adhesive having high affinity for a liquid to be used in the adhesive strength-reducing action. When the liquid to be used in the adhesive strength-reducing action is water or an aqueous solution, the pressure-sensitive adhesive layer 51 includes a water-soluble pressure-sensitive adhesive. Examples of the water-soluble pressure-sensitive adhesive include, but are not limited to, water-soluble acrylic pressure-sensitive adhesives and water-soluble polyvinyl ether pressure-sensitive adhesives. Non-limiting examples of the water-soluble acrylic pressure-sensitive adhesives include acrylic pressure-sensitive adhesives each resulting from copolymerization among a (meth)acrylic ester, a carboxy-containing (meth)acrylic monomer, and a basic monomer (such as N-vinylpyrrolidone). Non-limiting examples of the water-soluble polyvinyl ether pressure-sensitive adhesives include polyvinyl ether pressure-sensitive adhesives each including a monomer unit derived from any of vinyl ethyl ether, vinyl butyl ether, and vinyl isobutyl ether. Assume that the pressure-sensitive adhesive layer 51 includes a water-soluble pressure-sensitive adhesive. In this case, when water is supplied to the pressure-sensitive adhesive layer 51 with the adhesive face 51a adhering to an adherend, at least part of the water-soluble pressure-sensitive adhesive in the pressure-sensitive adhesive layer 51 is dissolved in and/or swollen by, the water. This causes volume change in the pressure-sensitive adhesive layer 51, impairs the adhesive face 51a, and reduces the adhesive strength of the pressure-sensitive adhesive layer 51 to the adherend.

In the above-mentioned configuration, the pressure-sensitive adhesive layer 51 has such a chemical composition as to allow part of the component of the pressure-sensitive adhesive layer to be dissolved in, and/or swollen by, liquid supply and renders liquid supply-induced reduction in adhesive strength feasible. Instead of, or in combination with, this configuration, the pressure-sensitive adhesive layer 51, which serves as a liquid-releasable pressure-sensitive adhesive layer (adhesive strength-reducible layer) in the pressure-sensitive adhesive sheet X5, may have a configuration where the pressure-sensitive adhesive layer 51 has such a chemical composition as to cause volume change through drying after the liquid supply and renders liquid supply-induced reduction in adhesive strength feasible. Alternatively, the pressure-sensitive adhesive layer 51 may employ these configurations in combination. These points relating to configurations of the pressure-sensitive adhesive layer 51 are applicable also to pressure-sensitive adhesive layers 51 of the after-mentioned modifications of the pressure-sensitive adhesive sheet X5.

The pressure-sensitive adhesive layer 52 of the pressure-sensitive adhesive sheet X5 includes a pressure-sensitive adhesive as a base component and has an adhesive face 52a. Non-limiting examples of the pressure-sensitive adhesive contained in the pressure-sensitive adhesive layer 52 include acrylic polymers as acrylic pressure-sensitive adhesives, natural rubbers, various synthetic rubbers, vinyl alkyl ether pressure-sensitive adhesives, silicone pressure-sensitive adhesives, polyester pressure-sensitive adhesives, polyamide pressure-sensitive adhesives, and urethane pressure-sensitive adhesives. The pressure-sensitive adhesive contained in the pressure-sensitive adhesive layer 52 is preferably an acrylic pressure-sensitive adhesive or adhesives. This is preferred from the viewpoint of actually providing satisfactory adhesive strength, cost minimization, and high productivity for the pressure-sensitive adhesive layer 52. The pressure-sensitive adhesive layer 52 may have a multilayer structure including pressure-sensitive adhesive layers differing from each other in chemical composition.

The pressure-sensitive adhesive sheet X5 is to be used for the build stage 100 of the additive manufacturing apparatus for the formation of an object, typically as illustrated in FIGs. 2(a), 2(b), and 2(c), as with the pressure-sensitive adhesive sheet X1. Specifically, the pressure-sensitive adhesive sheet X5 is affixed to the object-forming surface 101 of the build stage 100 before the start of object formation, as illustrated in FIG. 2(a). The pressure-sensitive adhesive sheet X5 is applied, through a pressure-sensitive adhesive layer thereof, to the object-forming surface 101. Specifically, of the pressure-sensitive adhesive sheet X5, the surface defined by the pressure-sensitive adhesive layer 51, or the surface defined by the pressure-sensitive adhesive layer 52, adheres to the object-forming surface 101. During an object forming process with the apparatus being operated, the target object W is gradually formed or built up on the pressure-sensitive adhesive sheet X5 affixed to the build stage 100, as illustrated in FIG. 2(b). In the object forming process as above, the object W during its formation is in a state of being attached to the build stage 100 through the pressure-sensitive adhesive sheet X5. After the completion of the object forming process as illustrated in FIG. 2(c), an adhesive strength-reducing action is performed to the pressure-sensitive adhesive sheet X5 on the build stage 100. The adhesive strength-reducing action in the embodiment is supply of a liquid to the pressure-sensitive adhesive layer 51, which is an adhesive strength-reducible layer of the pressure-sensitive adhesive sheet X5. When a liquid is supplied to the pressure-sensitive adhesive layer 51, at least part of the pressure-sensitive adhesive in the pressure-sensitive adhesive layer 51 is dissolved in, and/or swollen by, the liquid, to cause volume change of the pressure-sensitive adhesive layer 51. This impairs the adhesive face 51a, reduces the adhesive strength of the pressure-sensitive adhesive layer 51, and thereby frees or loosens the attached state of the object W to the build stage 100 through the pressure-sensitive adhesive sheet X5. This results in facilitating the detachment of the object W from the build stage 100. Assume that the pressure-sensitive adhesive sheet X5 is applied, at the surface defined by the pressure-sensitive adhesive layer 51, onto the build stage 100 before the start of object formation. In this case, the object W can be detached from the build stage 100 with an operation of removing the pressure-sensitive adhesive sheet X5 from the build stage 100 typically at the adhesive face 51a of the pressure-sensitive adhesive layer 51 whose adhesive strength has been reduced by the liquid supply. Assume that the pressure-sensitive adhesive sheet X5 is applied, at the surface defined by the pressure-sensitive adhesive layer 52, onto the build stage 100 before the start of object formation. In this case, the object W is formed on the pressure-sensitive adhesive layer 51 of the pressure-sensitive adhesive sheet X5; and the formed object W can be detached from the build stage 100 by pulling off the object W from the pressure-sensitive adhesive layer 51 whose adhesive strength has been reduced by the liquid supply.

As described above, the pressure-sensitive adhesive sheet X5 for build stage use is suitable for allowing the object W, which is to be formed over the build stage 100 of the additive manufacturing apparatus, to be attached to the build stage 100 during building up, and to be readily detached from the build stage 100 after building up. In addition, the pressure-sensitive adhesive sheet X5 as above, when used by the procedure as described above in the formation of the object W using the additive manufacturing apparatus, can avoid or minimize the use of a scraper or another tool having a sharp edge for the detachment of the object W from the build stage 100. Accordingly, the use of the pressure-sensitive adhesive sheet X5 for build stage use contributes to avoiding or minimizing significant damage on the object W and the build stage 100 upon detachment of the object W from the build stage 100.

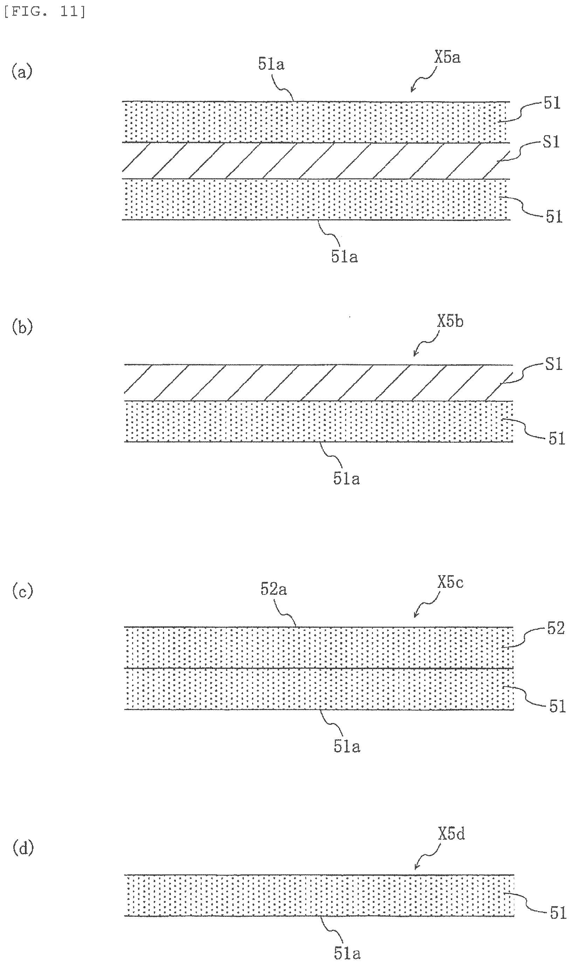

FIG. 11(a) illustrates a pressure-sensitive adhesive sheet X5a, which is a modification of the pressure-sensitive adhesive sheet X5 for build stage use illustrated in FIG. 10. The pressure-sensitive adhesive sheet X5a is a double-sided pressure-sensitive adhesive sheet having a multilayer structure including a substrate S1 and pressure-sensitive adhesive layers 51 and 51, and differs from the pressure-sensitive adhesive sheet X5 in including the pressure-sensitive adhesive layer 51, which is releasable by liquid supply, instead of the pressure-sensitive adhesive layer 52. FIG. 11(b) illustrates a pressure-sensitive adhesive sheet X5b, which is a modification of the pressure-sensitive adhesive sheet X5 for build stage use. The pressure-sensitive adhesive sheet X5b is a single-sided pressure-sensitive adhesive sheet having a multilayer structure including a substrate S1 and a pressure-sensitive adhesive layer 51 and differs from the pressure-sensitive adhesive sheet X5 in including no pressure-sensitive adhesive layer 52. The pressure-sensitive adhesive sheet X5b as above is used by allowing the surface defined by the pressure-sensitive adhesive layer 51 to adhere to the object-forming surface 101 of the build stage 100. Assume that the object to be additively manufactured by the additive manufacturing apparatus is capable of being attached, at its end face facing the stage, to the object-forming surface typically through fusion bonding. In this case, the pressure-sensitive adhesive sheet X5b, which includes no pressure-sensitive adhesive layer on the side facing the object, may be employed. FIG. 11(c) illustrates a pressure-sensitive adhesive sheet X5c, which is a modification of the pressure-sensitive adhesive sheet X5 for build stage use. The pressure-sensitive adhesive sheet X5c is a double-sided pressure-sensitive adhesive sheet having a multilayer structure including pressure-sensitive adhesive layers 51 and 52, and differs from the pressure-sensitive adhesive sheet X5 in including no substrate S1. The pressure-sensitive adhesive sheet X5c as above is used by allowing the surface defined by he pressure-sensitive adhesive layer 51, or the surface defined by the pressure-sensitive adhesive layer 52, to adhere to the object-forming surface 101 of the build stage 100. Sufficient breaking strength as a pressure-sensitive adhesive sheet for build stage use may be surely provided even without the substrate S1, in some set thickness and/or hardness of each of the pressure-sensitive adhesive layer 51 and the pressure-sensitive adhesive layer 52; and in this case, the configuration of including no substrate S1 may be employed. FIG. 11(d) illustrates a pressure-sensitive adhesive sheet X5d, which is a modification of the pressure-sensitive adhesive sheet X5 for build stage use. The pressure-sensitive adhesive sheet X5d is a double-sided pressure-sensitive adhesive sheet including a pressure-sensitive adhesive layer 51, which is releasable by liquid supply. The pressure-sensitive adhesive sheet X5d differs from the pressure-sensitive adhesive sheet X5 in including neither of the substrate S1 and the pressure-sensitive adhesive layer 52. Sufficient breaking strength as a pressure-sensitive adhesive sheet for build stage use may be surely provided even without the substrate S1 and the pressure-sensitive adhesive layer 52, in some set thickness and/or hardness of the pressure-sensitive adhesive layer 51; and in this case, the configuration of including neither of the substrate S1 and the pressure-sensitive adhesive layer 52 may be employed. These pressure-sensitive adhesive sheets X5a, X5b, X5c, and X5d for build stage use are each usable by a procedure similar to that described above for the pressure-sensitive adhesive sheet X5. Accordingly, these are suitable for allowing the object W, which is to be formed over the build stage 100 of the additive manufacturing apparatus, to be attached to the build stage 100 during building up, and to be readily detached from the build stage 100 after building up.

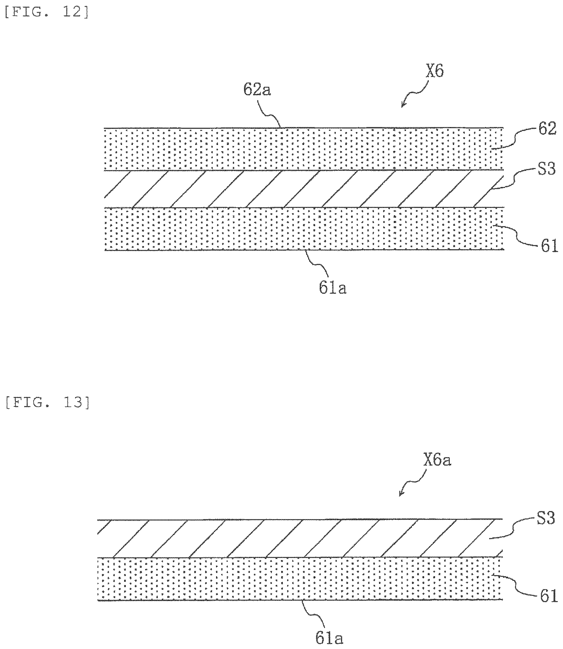

FIG. 12 is a local sectional view of a pressure-sensitive adhesive sheet X6, which is a pressure-sensitive adhesive sheet for build stage use according to an embodiment of the present invention. The pressure-sensitive adhesive sheet X6 is a double-sided pressure-sensitive adhesive sheet having a multilayer structure including a substrate S3 and pressure-sensitive adhesive layers 61 and 62.

The substrate S3 of the pressure-sensitive adhesive sheet X6 is a portion that functions as a carrier (support) in the pressure-sensitive adhesive sheet X6 and is a substrate in the form of a stretchable film (stretchable substrate). The film substrate S3 as above has such stretchability or extensibility as to offer an elongation at break of typically 300% or more, preferably 500% or more, and more preferably 700% or more. The elongation at break can be measured in conformity to the Measuring Method of "Elongation" described in JI5 K 7311:1995. Non-limiting examples of the film substrate S3 include resin films, woven fabric films, and nonwoven fabric films. Non-limiting examples of a material to constitute the substrate S3, when being a resin film, include polyurethanes, polyolefins, polyesters, and polycarbonates. Non-limiting examples of the polyurethanes include ether polyurethanes, ester polyurethanes, and carbonate polyurethanes. Non-limiting examples of the polyolefins include polyethylenes, polypropylenes, and ethylene-propylene copolymers. Non-limiting examples of the polyesters include poly(ethylene terephthalate), poly(butylene terephthalate), poly(ethylene naphthalate), and poly(butylene naphthalate). Preferably, the substrate S3 is selected from polyurethane resin films each including a polyurethane as a base component. Most of polyurethane resin films are made from materials offering approximately no yield point. The use of such a polyurethane resin film as the substrate S3 is advantageous for actually providing a substrate, and consequently a pressure-sensitive adhesive sheet for build stage use, that has an elongation at break and/or breaking strength at relatively high levels. The substrate S3 of the pressure-sensitive adhesive sheet X6, as described above, may be made from (formed from) each of different materials alone or in combination. The substrate S3 may be a multilayer assembly including layers differing from each other in constituent material. Of the substrate S3, at least one of the surface facing the pressure-sensitive adhesive layer 61 and the surface facing the pressure-sensitive adhesive layer 62 has been subjected to a surface treatment for better adhesion with the adjacent pressure-sensitive adhesive layer. Non-limiting examples of such surface treatment include physical treatments such as corona treatment and plasma treatment; and chemical treatments such as primer coating. The substrate S3 as above has a thickness of typically 10 to 300 µm.

The pressure-sensitive adhesive layers 61 and 62 of the pressure-sensitive adhesive sheet X6 are stretching-releasable pressure-sensitive adhesive layers (adhesive strength-reducible layers) having an adhesive strength capable of being reduced by the stretching of the pressure-sensitive adhesive sheet X6 (adhesive strength-reducing action). The pressure-sensitive adhesive layer 61 includes a pressure-sensitive adhesive as a base component and has an adhesive face 61a which adheres typically to the build stage. The pressure-sensitive adhesive layer 62 includes a pressure-sensitive adhesive as a base component and has an adhesive face 62a. Non-limiting examples of the pressure-sensitive adhesives contained individually in the pressure-sensitive adhesive layers 61 and 62 include acrylic polymers as acrylic pressure-sensitive adhesives, natural rubbers, various synthetic rubbers, vinyl alkyl ether pressure-sensitive adhesives, silicone pressure-sensitive adhesives, polyester pressure-sensitive adhesives, polyamide pressure-sensitive adhesives, and urethane pressure-sensitive adhesives. The pressure-sensitive adhesives contained in the pressure-sensitive adhesive layers 61 and 62 are preferably selected from acrylic pressure-sensitive adhesives. This is preferred from the viewpoint of actually providing satisfactory adhesive strength, cost minimization, and high productivity for the pressure-sensitive adhesive layers 61 and 62. At least one of the pressure-sensitive adhesive layer 61 and the pressure-sensitive adhesive layer 62 may have a multilayer structure including pressure-sensitive adhesive layers differing from each other in chemical composition. Assume that the pressure-sensitive adhesive sheet X6 as above is stretched while the pressure-sensitive adhesive layer 61 or the adhesive face 61a in the pressure-sensitive adhesive sheet X6 adheres to an adherend. This gives shearing force in the stretching direction at the interface between the pressure-sensitive adhesive layer 61 and the adherend, and loosens or mitigates the previous adhering state of the adhesive face 61a to the adherend. This reduces the adhesive strength of the adhesive face 61a to the adherend. Also assume that the pressure-sensitive adhesive sheet X6 is stretched while the pressure-sensitive adhesive layer 62 or the adhesive face 62a adheres to an adherend. This gives shearing force in the stretching direction at the interface between the pressure-sensitive adhesive layer 62 and the adherend, loosens or mitigates the previous adhering state of the adhesive face 62a to the adherend, and reduces the adhesive strength of the adhesive face 62a to the adherend.

The pressure-sensitive adhesive sheet X6 is to be used for the build stage 100 of the additive manufacturing apparatus for the formation of an object, typically as illustrated in FIGs. 2(a), 2(b), and 2(c), as with the pressure-sensitive adhesive sheet X1. Specifically, the pressure-sensitive adhesive sheet X6 is affixed to the object-forming surface 101 of the build stage 100 before the start of object formation, as illustrated in FIG. 2(a). Of the pressure-sensitive adhesive sheet X6 in the embodiment, the surface defined by the pressure-sensitive adhesive layer 61 adheres to the object-forming surface 101. During an object forming process with the apparatus being operated, the target object W is gradually formed or built up on the pressure-sensitive adhesive sheet X6 affixed to the build stage 100, as illustrated in FIG. 2(b). In the object forming process as above, the object W during its formation is in a state of being attached to the build stage 100 through the pressure-sensitive adhesive sheet X6. After the completion of the object forming process as illustrated in FIG. 2(c), an adhesive strength-reducing action is performed to the pressure-sensitive adhesive sheet X6 on the build stage 100. The adhesive strength-reducing action in the embodiment is stretching of the pressure-sensitive adhesive sheet X6. The pressure-sensitive adhesive sheet X6 can be stretched by pulling, of the pressure-sensitive adhesive sheet X6, an end or another region where the object W is not attached, where the pulling is performed in an in-plane direction of the pressure-sensitive adhesive sheet X6. The stretching of the pressure-sensitive adhesive sheet X6 typically by the above procedure gives shearing force in the stretching direction at the interface between the pressure-sensitive adhesive layer 61 of the pressure-sensitive adhesive sheet X6 and the build stage 100, loosens or mitigates the previous adhering state of the adhesive face 61a to the build stage 100, and reduces the adhesive strength of the adhesive face 61a to the build stage 100. With this, the stretching of the pressure-sensitive adhesive sheet X6 gives shearing force in the stretching direction at the interface between the pressure-sensitive adhesive layer 62 of the pressure-sensitive adhesive sheet X6 and the object W attached to the layer 62, loosens or mitigates the previous adhering state of the adhesive face 62a to the object W, and reduces the adhesive strength of the adhesive face 62a to the object W. Thus, the attached state of the object W to the build stage 100 through the pressure-sensitive adhesive sheet X6 is freed. This results in facilitating the detachment of the object W from the build stage 100. Specifically, the object W can be detached from the build stage 100 with an operation of removing the pressure-sensitive adhesive sheet X6 from the build stage 100 at the adhesive face 61a of the pressure-sensitive adhesive layer 61 whose adhesive strength has been reduced. The object W can also be detached from the build stage 100 by pulling off the object W from the adhesive face 62a of the pressure-sensitive adhesive layer 62 whose adhesive strength has been reduced.

As described above, the pressure-sensitive adhesive sheet X6 for build stage use is suitable for allowing the object W, which is to be formed over the build stage 100 of the additive manufacturing apparatus, to be attached to the build stage 100 during building up, and to be readily detached from the build stage 100 after building up. In addition, the pressure-sensitive adhesive sheet X6 as above, when used by the procedure as described above in the formation of the object W using the additive manufacturing apparatus, can avoid or minimize the use of a scraper or another tool having a sharp edge for the detachment of the object W from the build stage 100. Accordingly, the use of the pressure-sensitive adhesive sheet X6 for build stage use contributes to avoiding or minimizing significant damage on the object W and the build stage 100 upon detachment of the object W from the build stage 100.

FIG. 13 illustrates a pressure-sensitive adhesive sheet X6a, which is a modification of the pressure-sensitive adhesive sheet X6 for build stage use. The pressure-sensitive adhesive sheet X6a is a single-sided pressure-sensitive adhesive sheet having a multilayer structure including a substrate S3 and a pressure-sensitive adhesive layer 61, and differs from the pressure-sensitive adhesive sheet X6 in including no pressure-sensitive adhesive layer 62. The pressure-sensitive adhesive sheet X6a as above is used by allowing the surface defined by the pressure-sensitive adhesive layer 61 to adhere to the object-forming surface 101 of the build stage 100. Specifically, assume that the object to be additively manufactured by the additive manufacturing apparatus is capable of being attached, at its end face facing the stage, to the object-forming surface typically through fusion bonding; and in this case, the pressure-sensitive adhesive sheet X6a, which includes no pressure-sensitive adhesive layer on the side facing the object, can also be employed. The pressure-sensitive adhesive sheet X6a for build stage use as above is usable by a procedure similar to that described above for the pressure-sensitive adhesive sheet X6 and is therefore suitable for allowing the object W, which is to be formed over the build stage 100 of the additive manufacturing apparatus, to be attached to the build stage 100 during building up, and to be readily detached from the build stage 100 after building up.

In an embodiment, the pressure-sensitive adhesive sheet for build stage use according to the present invention may include a magnetically releasable pressure-sensitive adhesive layer (adhesive strength-reducible layer) having an adhesive strength capable of being reduced by the application of a magnetic field (adhesive strength-reducing action). The magnetically releasable pressure-sensitive adhesive layer as above typically contains a magnetic liquid such as a magnetic ionic liquid, in addition to a pressure-sensitive adhesive. A magnetic field, when applied to the magnetically releasable pressure-sensitive adhesive layer as above, causes orientation modulation and/or migration of the magnetic liquid in the pressure-sensitive adhesive layer and can thereby change the chemical composition at the surface of the pressure-sensitive adhesive layer. Assume that the pressure-sensitive adhesive layer undergoes magnetic field application while an adhesive face of the pressure-sensitive adhesive layer adheres to an adherend. In this case, the adhesive strength of the adhesive face of the magnetically releasable pressure-sensitive adhesive layer can be reduced using the chemical composition change as above occurring in the adhesive face.

In an embodiment, the pressure-sensitive adhesive sheet for build stage use according to the present invention may include a pressure-releasable pressure-sensitive adhesive layer (adhesive strength-reducible layer) having an adhesive strength capable of being reduced by pressure change. The pressure-releasable pressure-sensitive adhesive layer can employ any of configurations as follows: a configuration where the pressure-sensitive adhesive layer has such a chemical composition as to cause phase separation by pressure rise (compression) and renders pressurization-induced reduction in adhesive strength feasible; and a configuration where the pressure-sensitive adhesive layer has such a chemical composition as to be capable of foaming by pressure rise or pressure reduction and renders pressure change-induced reduction in adhesive strength feasible.

In an embodiment, the pressure-sensitive adhesive sheet for build stage use according to the present invention may have a configuration including different pressure-sensitive adhesive layers selected from the group consisting of the thermally releasable pressure-sensitive adhesive layer, the cold-releasable pressure-sensitive adhesive layer, the electromagnetically releasable pressure-sensitive adhesive layer, the electrically releasable pressure-sensitive adhesive layer, the liquid-releasable pressure-sensitive adhesive layer, the stretching-releasable pressure-sensitive adhesive layer, the magnetically releasable pressure-sensitive adhesive layer, and the pressure-releasable pressure-sensitive adhesive layer. For example, the pressure-sensitive adhesive sheet for build stage use according to the present invention may include, with or without a substrate, one selected from the group consisting of these releasable pressure-sensitive adhesive layers as a pressure-sensitive adhesive layer to constitute or define an adhesive face facing the build stage; and another one as a pressure-sensitive adhesive layer to constitute or define an adhesive face facing the object, where the releasable pressure-sensitive adhesive layers are: the thermally releasable pressure-sensitive adhesive layer, the cold-releasable pressure-sensitive adhesive layer, the electromagnetically releasable pressure-sensitive adhesive layer, the electrically releasable pressure-sensitive adhesive layer, the liquid-releasable pressure-sensitive adhesive layer, the stretching-releasable pressure-sensitive adhesive layer, the magnetically releasable pressure-sensitive adhesive layer, and the pressure-releasable pressure-sensitive adhesive layer.

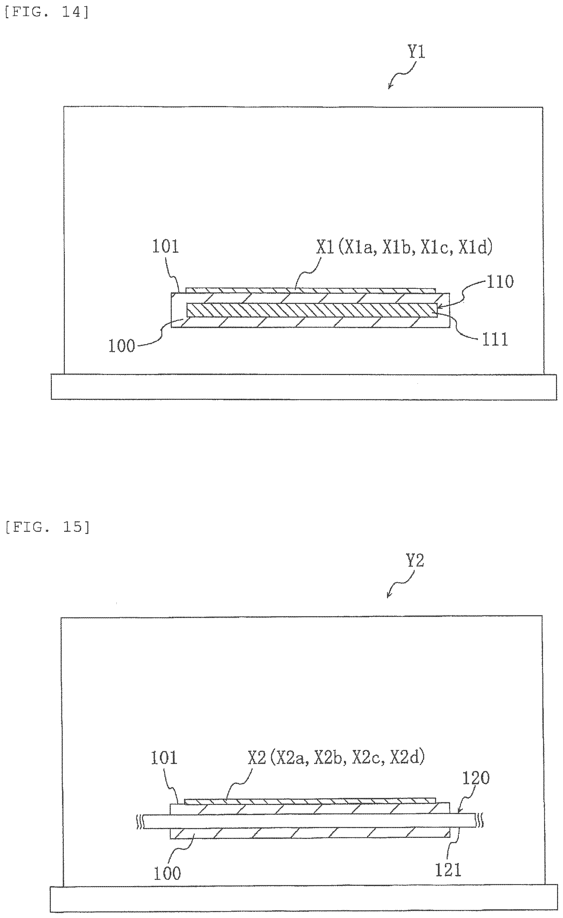

FIG. 14 is a schematic partial view of an additive manufacturing apparatus Y1 according to an embodiment of the present invention. The additive manufacturing apparatus Y1 is an apparatus for the formation of an object by an additive manufacturing technique such as fused deposition modeling, material jetting, stereolithography, or sheet lamination. The additive manufacturing apparatus Y1 includes a build stage 100 and a heating unit 110 (adhesive strength-reducing means). The build stage 100 is made from a heat-transferable material and has an object-forming surface 101 over which a three-dimensional object is to be formed. The heating unit 110 is a unit for heating a pressure-sensitive adhesive sheet for build stage use affixed to the build stage 100 and typically includes a heater 111 that is integrated inside the build stage 100 and is capable of generating heat. Assume that the additive manufacturing apparatus Y1 is capable of performing fused deposition modeling, material jetting, or another additive manufacturing technique that supplies a modeling material (object-forming material) sequentially onto the build stage 100 in an object forming process. In this case, the additive manufacturing apparatus Y1 further includes a supply unit (not shown) that includes a nozzle capable of discharging the modeling material. Such a configuration where the additive manufacturing apparatus further includes a supply unit that includes a nozzle capable of discharging a modeling material is applicable also to after-mentioned additive manufacturing apparatuses.

The additive manufacturing apparatus Y1 enables the formation of a three-dimensional object over the build stage 100 using the pressure-sensitive adhesive sheet X1, which includes the thermally releasable pressure-sensitive adhesive layer 11. The use procedure of the pressure-sensitive adhesive sheet X1 is as with that described above for the pressure-sensitive adhesive sheet X1 with reference to FIGs. 2(a), 2(b), and 2(c). Specifically, in an object forming process during operation of the additive manufacturing apparatus Y1, the object W during its formation is in a state of being attached to the build stage 100 through the pressure-sensitive adhesive sheet X1, as illustrated in FIG. 2(b). After the completion of the object forming process as typically illustrated in FIG. 2(c) during operation of the additive manufacturing apparatus Y1, the additive manufacturing apparatus Y1 can perform heating as an adhesive strength-reducing action to the pressure-sensitive adhesive sheet X1 on the build stage 100. Specifically, when the heating unit 110 operates to generate heat after the completion of the object forming process, the heat propagates through the build stage 100 and reaches the pressure-sensitive adhesive sheet X1 or the pressure-sensitive adhesive layer 11 thereof. The pressure-sensitive adhesive layer 11, when undergoes the heating, is reduced in adhesive strength, and this frees or loosens the attached state of the object W to the build stage 100 through the pressure-sensitive adhesive sheet X1, as described above. This results in facilitating the detachment of the object W from the build stage 100, as described above for the usage mode of the pressure-sensitive adhesive sheet X1 with reference to FIGs. 2(a), 2(b), and 2(c). For example, the object W can be detached from the build stage 100 with an operation of removing the pressure-sensitive adhesive sheet X1 at a predetermined interface defined by the pressure-sensitive adhesive layer 11 whose adhesive strength has been reduced. As described above, the additive manufacturing apparatus Y1 can suitably actually provide the attachment and detachment of the object W to and from the build stage 100, using the thermal releasing technology relating to the pressure-sensitive adhesive layer 11 of the pressure-sensitive adhesive sheet X1. The use of any of the pressure-sensitive adhesive sheets X1a, X1b, X1c, and X1d, instead of the pressure-sensitive adhesive sheet X1, can give technical advantageous effects similar to this.

FIG. 15 is a schematic partial view of an additive manufacturing apparatus according to an embodiment of the present invention Y2. The additive manufacturing apparatus Y2 is an apparatus for the formation of an object by an additive manufacturing technique such as fused deposition modeling, material jetting, stereolithography, or sheet lamination. The additive manufacturing apparatus Y2 includes a build stage 100 and a cooling unit 120 (adhesive strength-reducing means). The build stage 100 has an object-forming surface 101 over which a three-dimensional object is to be formed. The cooling unit 120 is a unit for cooling a pressure-sensitive adhesive sheet for build stage use affixed to the build stage 100 and includes a cooling tube 121 (partially not shown) that is embedded in the build stage 100. The cooling tube 121 is coupled to a coolant reservoir (out of the figure) and is configured so that a coolant fed from the coolant reservoir can pass through the cooling tube 121. Non-limiting examples of the coolant usable herein include carbon dioxide gas, nitrogen gas, water, and antifreezes.

The additive manufacturing apparatus Y2 enables the formation of a three-dimensional object over the build stage 100 using the pressure-sensitive adhesive sheet X2, which includes the cold-releasable pressure-sensitive adhesive layer 21. The use procedure of the pressure-sensitive adhesive sheet X2 is as with that described above for the pressure-sensitive adhesive sheet X2 with reference to FIGs. 2(a), 2(b), and 2(c). In an object forming process during operation of the additive manufacturing apparatus Y2, the object W during its formation is in a state of being attached to the build stage 100 through the pressure-sensitive adhesive sheet X2, as illustrated in FIG. 2(b). After the completion of the object forming process during operation of the additive manufacturing apparatus Y2 as typically illustrated in FIG. 2(c), the additive manufacturing apparatus Y2 can preform cooling, as an adhesive strength-reducing action, to the pressure-sensitive adhesive sheet X2 on the build stage 100. Specifically, when the cooling unit 120 operates so as to allow the coolant to pass through the cooling tube 121 after the completion of the object forming process, the build stage 100 and, consequently, the pressure-sensitive adhesive sheet X2 or the pressure-sensitive adhesive layer 21 thereof are decreased in temperature and cooled. As described above, the cooling, when performed to the pressure-sensitive adhesive layer 21, reduces the adhesive strength of the layer and frees or loosens the attached state of the object W to the build stage 100 through the pressure-sensitive adhesive sheet X2. This results in facilitating the detachment of the object W from the build stage 100, as described above for the usage mode of the pressure-sensitive adhesive sheet X2 with reference to FIGs. 2(a), 2(b), and 2(c). For example, the object W can be detached from the build stage 100 with an operation of removing the pressure-sensitive adhesive sheet X2 at a predetermined interface defined by the pressure-sensitive adhesive layer 21 whose adhesive strength has been reduced. As described above, the additive manufacturing apparatus Y2 can suitably actually provide the attachment and detachment of the object W to and from the build stage 100, using the cooling releasing technology relating to the pressure-sensitive adhesive layer 21 of the pressure-sensitive adhesive sheet X2. The use of any of the pressure-sensitive adhesive sheets X2a, X2b, X2c, and X2d, instead of the pressure-sensitive adhesive sheet X2, can give technical advantageous effects similar to this.

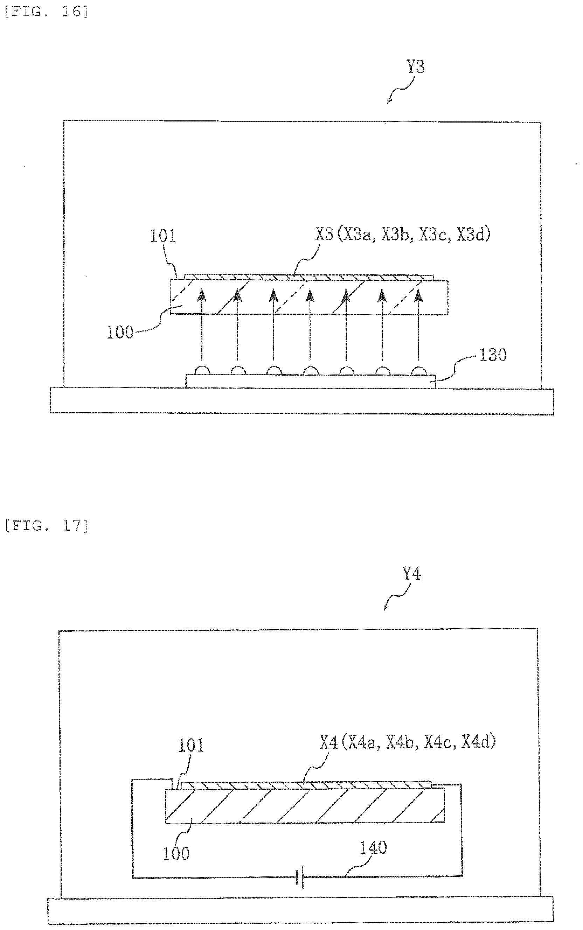

FIG. 16 is a schematic partial view of an additive manufacturing apparatus Y3 according to an embodiment of the present invention. The additive manufacturing apparatus Y3 is an apparatus for the formation of an object by an additive manufacturing technique such as fused deposition modeling, material jetting, stereolithography, or sheet lamination. The additive manufacturing apparatus Y3 includes a build stage 100 and an electromagnetic irradiation unit 130 (adhesive strength-reducing means). The build stage 100 is made from a material being transparent to electromagnetic radiation and has an object-forming surface 101 over which a three-dimensional object is to be formed. The electromagnetic irradiation unit 130 is a unit for applying electromagnetic radiation to a pressure-sensitive adhesive sheet for build stage use affixed to the build stage 100, and includes an electromagnetic radiation source capable of applying electromagnetic radiation at a predetermined time or timing. Non-limiting examples of the electromagnetic radiation source include ultraviolet lamps.

The additive manufacturing apparatus Y3 enables the formation of a three-dimensional object over the build stage 100 using the pressure-sensitive adhesive sheet X3, which includes the electromagnetically releasable pressure-sensitive adhesive layer 31. The use procedure of the pressure-sensitive adhesive sheet X3 is as with that described above for the pressure-sensitive adhesive sheet X3 with reference to FIGs. 2(a), 2(b), and 2(c). In an object forming process during operation of the additive manufacturing apparatus Y3, the object W during its formation is in a state of being attached to the build stage 100 through the pressure-sensitive adhesive sheet X3, as illustrated in FIG. 2(b). After the completion of the object forming process as typically illustrated in FIG. 2(c) during operation of the additive manufacturing apparatus Y3, the additive manufacturing apparatus Y3 can perform electromagnetic application as an adhesive strength-reducing action to the pressure sensitive adhesive sheet X3 on the build stage 100. Specifically, when the electromagnetic irradiation unit 130 operates after the completion of the object forming process, electromagnetic radiation is emitted from the electromagnetic radiation source of the unit, passes through the build stage 100, and is applied to the pressure-sensitive adhesive sheet X3 or the pressure-sensitive adhesive layer 31 thereof. Assume that the electromagnetic radiation source is an ultraviolet lamp. In this case, ultraviolet radiation passes through the build stage 100 and is applied to the pressure-sensitive adhesive sheet X3 or the pressure-sensitive adhesive layer 31 thereof. As described above, the electromagnetic application to the pressure-sensitive adhesive layer 31 reduces the adhesive strength of the pressure-sensitive adhesive layer 31, and thereby frees or loosens the attached state of the object W to the build stage 100 through the pressure-sensitive adhesive sheet X3. This facilitates the detachment of the object W from the build stage 100, as described above for the usage mode of the pressure-sensitive adhesive sheet X3 with reference to FIGs. 2(a), 2(b), and 2(c). For example, the object W can be detached from the build stage 100 by performing an operation of removing the pressure-sensitive adhesive sheet X3 at a predetermined interface defined by the pressure-sensitive adhesive layer 31 whose adhesive strength has been reduced. As described above, the additive manufacturing apparatus Y3 can suitably actually provide the attachment and detachment of the object W to and from the build stage 100, using the electromagnetic releasing technology relating to the pressure-sensitive adhesive layer 31 of the pressure-sensitive adhesive sheet X3. The use of any of the pressure-sensitive adhesive sheets X3a, X3b, X3c, and X3d, instead of the pressure-sensitive adhesive sheet X3, can give technical advantageous effects similar to this.

FIG. 17 is a schematic partial view of an additive manufacturing apparatus Y4 according to an embodiment of the present invention. The additive manufacturing apparatus Y4 is an apparatus for the formation of an object by an additive manufacturing technique such as fused deposition modeling, material jetting, stereolithography, or sheet lamination. The additive manufacturing apparatus Y4 includes a build stage 100 and a voltage application unit 140 (adhesive strength-reducing means). The build stage 100 has an object-forming surface 101 over which a three-dimensional object is to be formed. For the additive manufacturing apparatus Y4, the build stage 100 or the object-forming surface 101 thereof, and/or the object to be formed has conductivity. The voltage application unit 140 is a unit for applying a voltage to an electrically releasable pressure-sensitive adhesive layer of a pressure-sensitive adhesive sheet for build stage use affixed to the build stage 100 and includes a power source that can apply a voltage at a predetermined time. The voltage application unit 140 is configured so as to be able to apply a voltage to the electrically releasable pressure-sensitive adhesive layer via two conductive portions selected from: the object-forming surface 101 when the object-forming surface 101 has conductivity; a conductive portion when the pressure-sensitive adhesive sheet for build stage use to be used as disposed (applied) on the build stage 100 further includes the conductive portion in addition to the electrically releasable pressure-sensitive adhesive layer, where the conductive portion is electrically coupled to the electrically releasable pressure-sensitive adhesive layer; and the object when the object has conductivity. FIG. 17 exemplarily illustrates the case where the voltage application is performed via the object-forming surface 101 and the conductive portion in the pressure-sensitive adhesive sheet.

The additive manufacturing apparatus Y4 enables the formation of a three-dimensional object over the build stage 100 using the pressure-sensitive adhesive sheet X4, which includes the electrically releasable, pressure-sensitive adhesive layer 41. The use procedure of the pressure-sensitive adhesive sheet X4 is as with that described above for the pressure-sensitive adhesive sheet X4 with reference to FIGs. 2(a), 2(b), and 2(c). In an object forming process during operation of the additive manufacturing apparatus Y4, the object W during its formation is in a state of being attached to the build stage 100 through the pressure-sensitive adhesive sheet X4, as illustrated in FIG. 2(b). After the completion of the object forming process as typically illustrated in FIG. 2(c) during operation of the additive manufacturing apparatus Y4, the additive manufacturing apparatus Y4 can perform voltage application as an adhesive strength-reducing action to the pressure-sensitive adhesive sheet X4 on the build stage 100. Assume that the voltage application unit 140 operates after the completion of the object forming process. This causes a potential difference in the pressure-sensitive adhesive layer 41 of the pressure-sensitive adhesive sheet X4 in a thickness direction of the layer, then reduces the adhesive strength of the surface of the pressure-sensitive adhesive layer 41 as described above, and frees or loosens the attached state of the object W to the build stage 100 through the pressure-sensitive adhesive sheet X4. This results in facilitating the detachment of the object W from the build stage 100, as described above for the usage mode of the pressure-sensitive adhesive sheet X4 with reference to FIGs. 2 (a), 2(b), and 2(c). For example, the object W can be detached from the build stage 100 by performing an operation of removing the pressure-sensitive adhesive sheet X4 at a predetermined interface defined by the pressure-sensitive adhesive layer 41 whose adhesive strength has been reduced. As described above, the additive manufacturing apparatus Y4 can suitably actually provide the attachment and detachment of the object W to and from the build stage 100, using the electric releasing technology relating to the pressure-sensitive adhesive layer 41 of the pressure-sensitive adhesive sheet X4. The use of any of the pressure-sensitive adhesive sheets X4a, X4b, X4c, and X4d, instead of the pressure-sensitive adhesive sheet X4, can give technical advantageous effects similar to this.

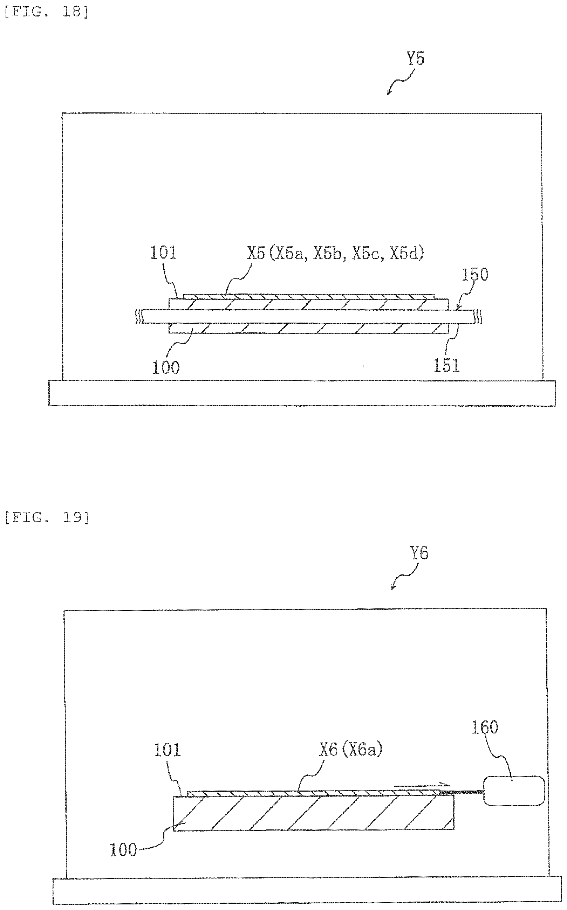

FIG. 18 is a schematic partial view of an additive manufacturing apparatus Y5 according to an embodiment of the present invention. The additive manufacturing apparatus Y5 is an apparatus for the formation of an object by an additive manufacturing technique such as fused deposition modeling, material jetting, stereolithography, or sheet lamination. The additive manufacturing apparatus Y5 includes a build stage 100 and a liquid supply unit 150 (adhesive strength-reducing means). The build stage 100 has an object-forming surface 101 over which a three-dimensional object is to be formed. The liquid supply unit 150 is a unit for supplying a liquid to a pressure-sensitive adhesive sheet for build stage use affixed to the build stage 100 and includes a liquid supply main pipe 151 (partially not shown) embedded in the build stage 100. The main pipe 151 has side discharge openings (not shown) at the wall thereof. The build stage 100 has a porous structure that extends from the wall or side discharge openings of the main pipe 151 to the object-forming surface 101 and allows the liquid to pass through the build stage 100. Instead of this configuration as above, the liquid supply unit 150 may employ (may be) a spray unit capable of spraying a liquid.

The additive manufacturing apparatus Y5 enables the formation of a three-dimensional object over the build stage 100 using the pressure-sensitive adhesive sheet X5, which includes the liquid-releasable, pressure-sensitive adhesive layer 51. The use procedure of the pressure-sensitive adhesive sheet X5 is as with that described above for the pressure-sensitive adhesive sheet X5 with reference to FIGs. 2(a), 2(b), and 2(c). In an object forming process during operation of the additive manufacturing apparatus Y5, the object W during its formation is in a state of being attached to the build stage 100 through the pressure-sensitive adhesive sheet X5, as illustrated in FIG. 2(b). After the completion of the object forming process as typically illustrated in FIG. 2(c) during operation of the additive manufacturing apparatus Y5, the additive manufacturing apparatus Y5 can preform liquid supply, as an adhesive strength-reducing action, to the pressure-sensitive adhesive sheet X5 on the build stage 100. Specifically, the liquid supply unit 150 operates after the completion of the object forming process to allow a liquid capable of reducing the adhesive strength of the pressure-sensitive adhesive layer 51 to pass through the main pipe 151. Part of the flowing liquid overflows via the side discharge openings of the main pipe 151 out of the main pipe 151, travels in the porous structure in the build stage 100, and reaches the pressure-sensitive adhesive sheet X5, or the pressure-sensitive adhesive layer 51 thereof, on the build stage 100. Assume that the spray unit is employed as the liquid supply unit 150. In this case, the spray unit, which serves as the liquid supply unit 150, operates after the completion of the object forming process to spray a liquid on the pressure-sensitive adhesive layer 51, where the liquid is capable of reducing the adhesive strength of the pressure-sensitive adhesive layer 51. As described above, the liquid supply, when performed, reduces the adhesive strength of the pressure-sensitive adhesive layer 51, and this frees or loosens the attached state of the object W to the build stage 100 through the pressure-sensitive adhesive sheet X5. This results in facilitating the detachment of the object W from the build stage 100, as described above for the usage mode of the pressure-sensitive adhesive sheet X5 with reference to FIGs. 2(a), 2(b), and 2(c). For example, the object W can be detached from the build stage 100 by performing an operation of removing the pressure-sensitive adhesive sheet X5 at a predetermined interface defined by the pressure-sensitive adhesive layer 51 whose adhesive strength has been reduced. As described above, the additive manufacturing apparatus Y5 can suitably actually provide the attachment and detachment of the object W to and from the build stage 100, using the liquid releasing technology relating to the pressure-sensitive adhesive layer 51 of the pressure-sensitive adhesive sheet X5. The use of any of the pressure-sensitive adhesive sheets X5a, X5b, X5c, and X5d, instead of the pressure-sensitive adhesive sheet X5, can give technical advantageous effects similar to this.

FIG. 19 is a schematic partial view of an additive manufacturing apparatus Y6 according to an embodiment of the present invention. The additive manufacturing apparatus Y6 is an apparatus for the formation of an object by an additive manufacturing technique such as fused deposition modeling, material jetting, stereolithography, or sheet lamination. The additive manufacturing apparatus Y6 includes a build stage 100 and a stretching unit 160 (adhesive strength-reducing means). The build stage 100 has an object-forming surface 101 over which a three-dimensional object is to be formed. The stretching unit 160 is a unit for automatically stretching a pressure-sensitive adhesive sheet for build stage use affixed to the build stage 100.

The additive manufacturing apparatus Y6 enables the formation of a three-dimensional object over the build stage 100 using the stretching-releasable, pressure-sensitive adhesive sheet X6 including the substrate S3, which is a stretchable substrate. The use procedure of the pressure-sensitive adhesive sheet X6 is as with that described above for the pressure-sensitive adhesive sheet X6 with reference to FIGs. 2(a), 2(b), and 2(c). In an object forming process during operation of the additive manufacturing apparatus Y6, an object W during its formation is in a state of being attached to the build stage 100 through the pressure-sensitive adhesive sheet X6, as illustrated in FIG. 2(b). After the completion of the object forming process as typically illustrated in FIG. 2(c) during operation of the additive manufacturing apparatus Y6, the additive manufacturing apparatus Y6 can perform stretching, as an adhesive strength-reducing action, of the pressure-sensitive adhesive sheet X6 on the build stage 100. Specifically, the stretching unit 160 operates after the completion of the object forming process to automatically stretch the pressure-sensitive adhesive sheet X6 in an in-plane direction. As described above, stretching of the pressure-sensitive adhesive sheet X6 gives shearing force in the stretching direction at interfaces between each adherend and each pressure-sensitive adhesive layer of the pressure-sensitive adhesive sheet X6, and this loosens or mitigates the previous adhering state of the surface (adhesive face) of the pressure-sensitive adhesive layer to the adherend and reduces the adhesive strength of the adhesive face to the adherend. Assume that the surface defined by the pressure-sensitive adhesive layer 61 of the pressure-sensitive adhesive sheet X6 adheres to the object-forming surface 101 before the start of object formation. In this case, for example, stretching of the pressure-sensitive adhesive sheet X6 causes shearing force in the stretching direction at the interface between the pressure-sensitive adhesive layer 61 of the pressure-sensitive adhesive sheet X6 and the build stage 100, loosens or mitigates the previous adhering state of the adhesive face 61a to the build stage 100, and reduces the adhesive strength of the adhesive face 61a to the build stage 100. This frees or loosens the attached state of the object W to the build stage 100 through the pressure-sensitive adhesive sheet X6, and results in facilitating the detachment of the object W from the build stage 100, as described above for the usage mode of the pressure-sensitive adhesive sheet X6 with reference to FIGs. 2(a), 2(b), and 2(c). For example, the object W can be detached from the build stage 100 by performing an operation of removing the pressure-sensitive adhesive sheet X6 from the build stage 100 at the adhesive face 61a of the pressure-sensitive adhesive layer 61 whose adhesive strength has been reduced. As described above, the additive manufacturing apparatus Y6 can suitably actually provide the attachment and detachment of the object W to and from the build stage 100, using the stretching releasing technology relating to the pressure-sensitive adhesive layers of the pressure-sensitive adhesive sheet X6. The use of the pressure-sensitive adhesive sheet X6a, instead of the pressure-sensitive adhesive sheet X6, can give technical advantageous effects similar to this.

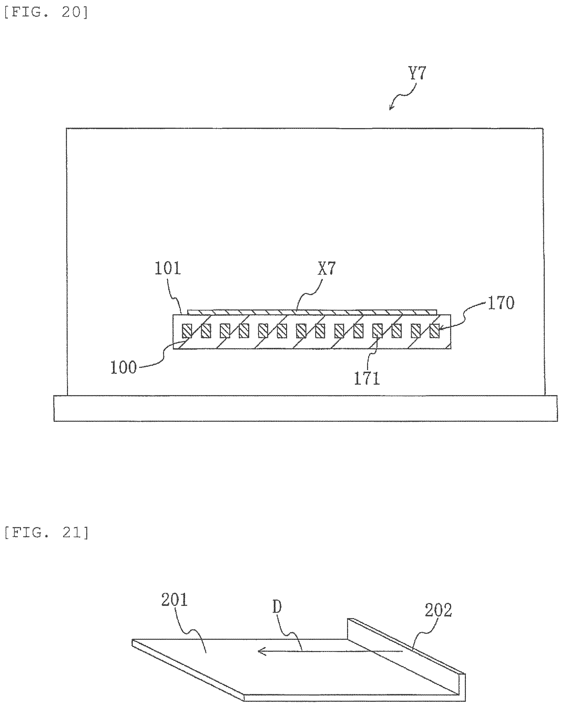

FIG. 20 is a schematic partial view of an additive manufacturing apparatus Y7 according to an embodiment of the present invention. The additive manufacturing apparatus Y7 is an apparatus for the formation of an object by an additive manufacturing technique such as fused deposition modeling, material jetting, stereolithography, or sheet lamination. The additive manufacturing apparatus Y7 includes a build stage 100 and a magnetic field application unit 170 (adhesive strength-reducing means). The build stage 100 has an object-forming surface 101 over which a three-dimensional object is to be formed. The magnetic field application unit 170 is a unit for applying a magnetic field to a pressure-sensitive adhesive sheet for build stage use affixed to the build stage 100 and typically includes coils 171 that are embedded in the build stage 100, where an electric current can pass through the coils 171.

The additive manufacturing apparatus Y7 enables the formation of a three-dimensional object over the build stage 100 using the pressure-sensitive adhesive sheet including a magnetically releasable pressure-sensitive adhesive layer (in FIG. 20, the pressure-sensitive adhesive sheet X7). In an object forming process during operation of the additive manufacturing apparatus Y7, the object W during its formation is in a state of being attached to the build stage 100 through the pressure-sensitive adhesive sheet X7, as illustrated in FIG. 2(b). After the completion of the object forming process during operation of the additive manufacturing apparatus Y7 as typically illustrated in FIG. 2(c), the additive manufacturing apparatus Y7 can perform magnetic field application, as an adhesive strength-reducing action, to the pressure-sensitive adhesive sheet X7 on the build stage 100. Specifically, the magnetic field application unit 170 operates after the completion of the object forming process, to apply a magnetic field to the magnetically releasable pressure-sensitive adhesive layer of the pressure-sensitive adhesive sheet X7. The magnetic filed application to the magnetically releasable pressure-sensitive adhesive layer reduces the adhesive strength of the pressure-sensitive adhesive layer as described above, and this frees or loosens the attached state of the object W to the build stage 100 through the pressure-sensitive adhesive sheet X7, and results in facilitating the detachment of the object W from the build stage 100. For example, the object W can be detached from the build stage 100 by performing an operation of removing the pressure-sensitive adhesive sheet X7 at a predetermined interface defined by the magnetically releasable pressure-sensitive adhesive layer whose adhesive strength has been reduced. As described above, the additive manufacturing apparatus Y7 can suitably actually provide the attachment and detachment of the object W to and from the build stage 100, using the magnetic releasing technology relating to the magnetically releasable pressure-sensitive adhesive layer of the pressure-sensitive adhesive sheet X7.

### Examples

### Synthetic Example 1: Acrylic Polymer A1

A mixture was subjected to a polymerization reaction at 60°C for 6 hours with nitrogen gas introduction, in a reactor equipped with a reflux condenser, a nitrogen gas inlet tube, a stirrer, and a thermometer, where the mixture included 60 parts by mass of ethyl acrylate, 30 parts by mass of 2-ethylhexyl acrylate, 5 parts by mass of methyl methacrylate, 5 parts by mass of hydroxyethyl acrylate, 0.2 part by mass of benzoyl peroxide as a polymerization initiator, and 100 parts by mass of toluene as a polymerization solvent. This gave a solution (acrylic polymer solution S1) containing an acrylic polymer (acrylic polymer A1) for the formation of a thermally releasable pressure-sensitive adhesive layer in Example 1.

### Synthetic Example 2: Acrylic Polymer A2

A mixture was subjected to a polymerization reaction at 60°C for 6 hours with nitrogen gas introduction, in a reactor equipped with a reflux condenser, a nitrogen gas inlet tube, a stirrer, and a thermometer, where the mixture included 92 parts by mass of butyl acrylate, 3 parts by mass of methyl methacrylate, 5 parts by mass of acrylic acid, 0.2 part by mass of 2,2'-azobisisobutyronitrile as a polymerization initiator, and 100 parts by mass of ethyl acetate as a polymerization solvent. This gave a solution (acrylic polymer solution S2) containing an acrylic polymer (acrylic polymer A2) for the formation of a pressure-sensitive adhesive layer.

### Synthetic Example 3: Acrylic Polymer A3

A mixture was subjected to a polymerization reaction at 60°C for 6 hours with nitrogen gas introduction, in a reactor equipped with a reflux condenser, a nitrogen gas inlet tube, a stirrer, and a thermometer, where the mixture included 55 parts by mass of 2-ethylhexyl acrylate, 40 parts by mass of methyl acrylate, 5 parts by mass of 2-hydroxyethyl acrylate, 0.2 part by mass of benzoyl peroxide as a polymerization initiator, and 100 parts by mass of toluene as a polymerization solvent. This gave a solution (acrylic polymer solution S3) containing an acrylic polymer (acrylic polymer A3) for the formation of a thermally releasable pressure-sensitive adhesive layer in Example 2.

### Synthetic Example 4: Acrylic Polymer A4

A mixture was subjected to a polymerization reaction at 80°C for 6 hours with nitrogen gas introduction, in a reactor equipped with a reflux condenser, a nitrogen gas inlet tube, a stirrer, and a thermometer, where the mixture included 40 parts by mass of behenyl acrylate, 35 parts by mass of stearyl acrylate, 20 parts by mass of methyl acrylate, 5 parts by mass of acrylic acid, 5 parts by mass of dodecyl mercaptan as a chain-transfer agent, 0.5 part by mass of benzoyl peroxide as a polymerization initiator, and 100 parts by mass of toluene as a polymerization solvent. This gave a solution (acrylic polymer solution S4) containing a side-chain-crystalline acrylic polymer (acrylic polymer A4) for the formation of a thermally releasable pressure-sensitive adhesive layer in Example 2.

### Synthetic Example 5: Acrylic Polymer A5

A mixture was subjected to a polymerization reaction at 60°C for 6 hours with nitrogen gas introduction, in a reactor equipped with a reflux condenser, a nitrogen gas inlet tube, a stirrer, and a thermometer, where the mixture included 60 parts by mass of behenyl acrylate, 35 parts by mass of isobolnyl methacrylate, 5 parts by mass of methacrylic acid, 0.5 part by mass of benzoyl peroxide as a polymerization initiator, and 100 parts by mass of ethyl acetate as a polymerization solvent. This gave a solution (acrylic polymer solution S5) containing a side-chain-crystalline acrylic polymer (acrylic polymer A5) for the formation of a cold-releasable pressure-sensitive adhesive layer in Example 3.

### Synthetic Example 6: Acrylic Polymer A6

A mixture was subjected to a polymerization reaction at 60°C for 6 hours with nitrogen gas introduction, in a reactor equipped with a reflux condenser, a nitrogen gas inlet tube, a stirrer, and a thermometer, and yielded an acrylic polymer A6', where the mixture included 35 parts by mass of 2-ethylhexyl acrylate, 45 parts by mass of butyl acrylate, 20 parts by mass of 2-hydroxyethyl acrylate, 0.2 part by mass of 2,2'-azobisisobutyronitrile as a polymerization initiator, and 100 parts by mass of toluene as a polymerization solvent. Next, the reaction solution containing the acrylic polymer A6' was combined with 20 parts by mass of 2-methacryloyloxyethyl isocyanate, and the mixture was subjected to an addition reaction at 50°C in an air atmosphere for 48 hours. This gave a solution (acrylic polymer solution S6) containing an electromagnetic radiation-curable acrylic polymer (acrylic polymer A6, with carbon-carbon double bonds being introduced into side chains in the polymer molecule) for the formation of an electromagnetic radiation-curable pressure-sensitive adhesive layer in Example 4.

### Synthetic Example 7: Acrylic Oligomer A7

A mixture was subjected to a polymerization reaction at 60°C for 8 hours with nitrogen gas introduction, in a reactor equipped with a reflux condenser, a nitrogen gas inlet tube, a stirrer, and a thermometer, where the mixture included 50 parts by mass of 2-ethylhexyl acrylate, 45 parts by mass of butyl acrylate, 5 parts by mass of 2-hydroxyethyl acrylate, and 100 parts by mass of toluene as a polymerization solvent. This gave a solution (acrylic polymer solution S7) containing an electromagnetic radiation-curable acrylic oligomer (acrylic oligomer A7) for the formation of an electromagnetically releasable pressure-sensitive adhesive layer in Example 5.

### Synthetic Example 8: Acrylic Polymer A8

A mixture was stirred for one hour with nitrogen gas introduction, in a reactor equipped with a reflux condenser, a nitrogen gas inlet tube, a stirrer, and a thermometer, where the mixture included 90 parts by mass of n-butyl acrylate (BA), 5 parts by mass of methyl methacrylate (MMA), 5 parts by mass of acrylic acid (AA), and 186 parts by mass of ethyl acetate as a polymerization solvent. After removing oxygen from the polymerization system by the above procedure, the solution in the reactor was subjected to a reaction at 63°C for 10 hours. The solution was then cooled and yielded a solution (acrylic polymer solution S8) containing an acrylic polymer (acrylic polymer A8, a copolymer among BA, MMA, and AA) for the formation of a pressure-sensitive adhesive layer in Comparative Example 1. The acrylic polymer solution S8 had a solids concentration of 35 mass percent.

### Primer U1

The acrylic polymer solution S1 was combined with and mixed with, per 100 parts by mass of solid matter (the acrylic polymer A1) in the solution S1, 4 parts by mass of an isocyanate crosslinker CORONATE L (trade name, a polyisocyanate compound, supplied by TOSOH CORPORATION), and yielded a primer U1.

### Primer U2

A primer U2 was prepared by mixing 100 parts by mass of a natural rubber MMA-Grafted Natural Rubber MG30 (trade name, supplied by Rubber Research Institute of Malaysia) in which methyl methacrylate is polymerized in a natural rubber, 50 parts by mass of an isocyanate crosslinker CORONATE L (trade name, a polyisocyanate compound, supplied by TOSOH CORPORATION), and 900 parts by mass of toluene.

### PET Substrate B1

The primer U1 was applied to one side of a 50-µm thick poly(ethylene terephthalate) (PET) film LUMIRROR S-10 (trade name, supplied by Toray Industries Inc.), and the applied primer was dried to form an under coat (5 µm thick). Thus, a PET substrate (PET substrate B1) bearing, on one side, the under coat formed from the primer U1 was prepared.

### PET Substrate B2

A 50-µm thick poly(ethylene terephthalate) (PET) film LUMIRROR S-10 (trade name, supplied by Toray Industries Inc.) was prepared as a PET substrate B2.

### Example 1

### Production of Pressure-Sensitive Adhesive Sheet for Build Stage Use

The acrylic polymer solution S1 was combined with, per 100 parts by mass of solid matter (the acrylic polymer A1) in the solution S1, 4 parts by mass of an isocyanate crosslinker CORONATE L (trade name, a polyisocyanate compound, supplied by TOSOH CORPORATION) and 30 parts by mass of thermally expandable microspheres Matsumoto Microsphere F-50D (trade name, expansible at 120°C, supplied by Matsumoto Yushi-Seiyaku Co., Ltd.) and yielded a pressure-sensitive adhesive composition C1, which is a composition for the formation of a thermally releasable pressure-sensitive adhesive layer. On the other hand, the acrylic polymer solution S2 was combined with, per 100 parts by mass of solid matter (the acrylic polymer A2) in the solution S2, 5 parts by mass of an isocyanate crosslinker CORONATE L (trade name, a polyisocyanate compound, supplied by TOSOH CORPORATION) and yielded a pressure-sensitive adhesive composition C2, which is a composition for the formation of a pressure-sensitive adhesive layer. Next, the pressure-sensitive adhesive composition C2 was applied to, of the PET substrate B1, a side to which the primer U1 had not been applied (namely, a side bearing no under coat) to form a pressure-sensitive adhesive composition layer. A release film was laminated so as to cover the pressure-sensitive adhesive composition layer on the PET substrate B1. Next, the pressure-sensitive adhesive composition C1 was applied to, of the PET substrate B1, the side coated with the primer U1 (namely, the side bearing the under coat) to form a pressure-sensitive adhesive composition layer. Next, these pressure-sensitive adhesive composition layers were heated to be dried and to undergo a crosslinking reaction, to form a 25-µm thick pressure-sensitive adhesive layer derived from sensitive adhesive composition C2, and a 30-µm thick thermally releasable pressure-sensitive adhesive layer derived from the pressure-sensitive adhesive composition C1. The heating herein was performed at a temperature of 100°C for a time of 5 minutes. Thus, a pressure-sensitive adhesive sheet for build stage use (double-sided pressure-sensitive adhesive sheet) according to Example 1 was prepared. This had a multilayer structure including the pressure-sensitive adhesive layer (non-thermally-releasable), the PET substrate B1, and the thermally releasable pressure-sensitive adhesive layer disposed in the specified sequence.

### Use of Pressure-Sensitive Adhesive Sheet for Build Stage Use

The pressure-sensitive adhesive sheet produced by the procedure as described above was affixed, through the thermally releasable pressure-sensitive adhesive layer thereof, to an object-forming surface of a build stage of a 3D printer BS01+ (trade name, supplied by BONSAI LAB, Inc.), in such a manner as to avoid wrinkling and partial gap of the pressure-sensitive adhesive sheet. Then, the 3D printer was operated to form an object. Specifically, a modeling material was discharged and fed from a modeling material-discharging nozzle of the 3D printer toward the build stage and formed a planar object (100 mm by 100 mm, 2 mm thick) on the pressure-sensitive adhesive sheet for build stage use disposed on the build stage. The modeling material used herein was ABS resin filaments Plasil (trade name, white color, supplied by PLASIL) having a cross-sectional diameter of 1.75 mm. The object forming process was performed at a temperature of the object-forming surface of the build stage of 90°C and a heating temperature of the modeling material in the modeling material-discharging nozzle of 240°C. The object was formed in a state of being firmly attached to the non-thermally-releasable pressure-sensitive adhesive layer of the pressure-sensitive adhesive sheet on the build stage. After the object forming process was completed and the object was naturally cooled, the object-forming surface of the build stage was raised in temperature up to 120°C to heat the thermally releasable pressure-sensitive adhesive layer of the pressure-sensitive adhesive sheet on the build stage and to thereby expand the thermally expandable microspheres in the pressure-sensitive adhesive layer. This reduced the adhesive strength of the pressure-sensitive adhesive layer (and, in turn, freed or loosened the attached state of the object to the build stage through the pressure-sensitive adhesive sheet). Subsequently, a removing operation of the pressure-sensitive adhesive sheet on the build stage was performed by separating the thermally releasable pressure-sensitive adhesive layer, whose adhesive strength had been reduced by heating, from the build stage surface, and with this operation, the object was detached from the build stage. The pressure-sensitive adhesive sheet was then removed from the object.

### Example 2

### Production of Pressure-Sensitive Adhesive Sheet for Build Stage Use

The acrylic polymer solution S3 was combined with the acrylic polymer solution S4 and an aluminum chelate crosslinker ALCH-TR (trade name, supplied by Kawaken Fine Chemicals Co., Ltd.) in such proportions that solid matter (the acrylic polymer A4 as a side-chain-crystalline acrylic polymer) in the solution S4 and the aluminum chelate crosslinker be present respectively in amounts of 5 parts by mass and 1 part by mass per 100 parts by mass of solid matter (the acrylic polymer A3) in the solution S3. This gave a pressure-sensitive adhesive composition C3, which is a composition for the formation of a thermally releasable pressure-sensitive adhesive layer. Next, the pressure-sensitive adhesive composition C2 was applied to one side of the PET substrate B2 to from a pressure-sensitive adhesive composition layer, and a release film was laminated so as to cover the pressure-sensitive adhesive composition layer on the PET substrate B2. Next, the pressure-sensitive adhesive composition C3 was applied to the other side of the PET substrate B2 to form a pressure-sensitive adhesive composition layer. Next, these pressure-sensitive adhesive composition layers were heated to be dried and to undergo a crosslinking reaction, to form a 25-µm thick pressure-sensitive adhesive layer derived from the pressure-sensitive adhesive composition C2, and a 30-µm thick thermally releasable pressure-sensitive adhesive layer derived from the pressure-sensitive adhesive composition C3. The heating herein was performed at a temperature of 130°C for a time of 3 minutes. Thus, a pressure-sensitive adhesive sheet for build stage use (double-sided pressure-sensitive adhesive sheet) according to Example 2 was produced. This had a multilayer structure including the pressure-sensitive adhesive layer (non-thermally-releasable), the PET substrate B2, and the thermally releasable pressure-sensitive adhesive layer disposed in the specified sequence.

### Use of Pressure-Sensitive Adhesive Sheet for Build Stage Use

The pressure-sensitive adhesive sheet produced by the procedure as described above was affixed, through the thermally releasable pressure-sensitive adhesive layer thereof, to an object-forming surface of a build stage of a 3D printer BS01+ (trade name, supplied by BONSAI LAB, Inc.), in such a manner as to avoid wrinkling and partial gap of the pressure-sensitive adhesive sheet. The 3D printer was then operated to form an object. Specifically, a modeling material was discharged and fed from a modeling material-discharging nozzle of the 3D printer toward the build stage, to form a planar object (100 mm by 100 mm, 2 mm thick) on the pressure-sensitive adhesive sheet for build stage use disposed on the build stage. The modeling material used herein was polylactic acid filaments Polyplus (trade name, natural color, supplied by Polymaker) having a cross-sectional diameter of 1.75 mm. The object forming process was performed at a temperature of the object-forming surface of the build stage of 30°C and a heating temperature of the modeling material in the modeling material-discharging nozzle of 220°C. The object was formed while being firmly attached to the non-thermally-releasable pressure-sensitive adhesive layer of the pressure-sensitive adhesive sheet on the build stage. After the object forming process was completed and the object was naturally cooled, the object-forming surface of the build stage was raised in temperature up to 60°C to heat the thermally releasable pressure-sensitive adhesive layer of the pressure-sensitive adhesive sheet disposed on the surface to thereby loosen the crystallized state of the crystalline side chains of the acrylic polymer A4 (side-chain crystalline polymer) in the pressure-sensitive adhesive layer. This reduced the adhesive strength of the pressure-sensitive adhesive layer (and, in turn, freed or loosened the attached state of the object to the build stage through the pressure-sensitive adhesive sheet). Subsequently, a removing operation of the pressure-sensitive adhesive sheet on the build stage was performed by separating the thermally releasable pressure-sensitive adhesive layer, whose adhesive strength had been reduced by heating, from the build stage, and with this operation, the object was detached from the build stage. The pressure-sensitive adhesive sheet was then removed from the object.

### Example 3

### Production of Pressure-Sensitive Adhesive Sheet for Build Stage Use

The acrylic polymer solution S5 was combined with, per 100 parts by mass of solid matter (the acrylic polymer A5) in the solution S5, 1 part by mass of an aluminum chelate crosslinker ALCH-TR (trade name, supplied by Kawaken Fine Chemicals Co., Ltd.) and yielded a pressure-sensitive adhesive composition C4, which is a composition for the formation of a cold-releasable pressure-sensitive adhesive layer. Next, the pressure-sensitive adhesive composition C2 was applied to one side of the PET substrate B2 to form a pressure-sensitive adhesive composition layer, and a release film was laminated so as to cover the pressure-sensitive adhesive composition layer on the PET substrate B2. Next, the pressure-sensitive adhesive composition C4 was applied to the other side of the PET substrate B2 to form a pressure-sensitive adhesive composition layer. Next, these pressure-sensitive adhesive composition layers were heated to be dried and to undergo a crosslinking reaction, to form a 25-µm thick pressure-sensitive adhesive layer derived from the pressure-sensitive adhesive composition C2, and a 30-µm thick cold-releasable pressure-sensitive adhesive layer derived from the pressure-sensitive adhesive composition C4. The heating herein was performed at a temperature of 130°C for a time of 3 minutes. Thus, a pressure-sensitive adhesive sheet for build stage use (double-sided pressure-sensitive adhesive sheet) according to Example 3 was produced. This had a multilayer structure including the pressure-sensitive adhesive layer (non-thermally-releasable), the PET substrate B2, and the cold-releasable pressure-sensitive adhesive layer disposed in the specified sequence.

### Use of Pressure-Sensitive Adhesive Sheet for Build Stage Use

The pressure-sensitive adhesive sheet produced by the procedure as described above was affixed, through the cold-releasable pressure-sensitive adhesive layer thereof, to an object-forming surface of a build stage of a 3D printer BS01+ (trade name, supplied by BONSAI LAB, Inc.), in such a manner as to avoid wrinkling and partial gap of the pressure-sensitive adhesive sheet. The 3D printer was then operated under conditions similar to those described above for Example 1, to form a planar object (100 mm by 100 mm, 2 mm thick) over the build stage. The object was formed while being firmly attached to the non-thermally-releasable pressure-sensitive adhesive layer of the pressure-sensitive adhesive sheet on the build stage. After the object forming process was completed and the object was naturally cooled, the object-forming surface of the build stage was cooled down to 5°C to cool the cold-releasable pressure-sensitive adhesive layer of the pressure-sensitive adhesive sheet on the surface and to crystallize the crystalline side chains of the acrylic polymer A5 (side-chain crystalline polymer) in the pressure-sensitive adhesive layer. This reduced the adhesive strength of the pressure-sensitive adhesive layer (and, in turn, freed or loosened the attached state of the object to the build stage through the pressure-sensitive adhesive sheet). Subsequently, a removing operation of the pressure-sensitive adhesive sheet on the build stage was performed by separating the cold-releasable pressure-sensitive adhesive layer, whose adhesive strength had been reduced by cooling, from the build stage, and, with this operation, the object was detached from the build stage. The pressure-sensitive adhesive sheet was then removed from the object.

### Example 4

### Production of Pressure-Sensitive Adhesive Sheet for Build Stage Use

The acrylic polymer solution S6 was combined with, per 100 parts by mass of solid matter (the acrylic polymer A6) in the solution S6, 5 parts by mass of an isocyanate crosslinker CORONATE L (trade name, a polyisocyanate compound, supplied by TOSOH CORPORATION) and 5 parts by mass of a photoinitiator Irgacure 651 (trade name, supplied by BASF SE) and yielded a pressure-sensitive adhesive composition C5, which is a composition for the formation of an electromagnetically releasable pressure-sensitive adhesive layer. Next, the pressure-sensitive adhesive composition C2 was applied to one side of the PET substrate B2 to form a pressure-sensitive adhesive composition layer, and a release film was laminated so as to cover the pressure-sensitive adhesive composition layer on the PET substrate B2. Next, the pressure-sensitive adhesive composition C5 was applied to the other side of the PET substrate B2 to form a pressure-sensitive adhesive composition layer. Next, these pressure-sensitive adhesive composition layers were heated to be dried and to undergo a crosslinking reaction by the isocyanate crosslinker, to thereby form a 20-µm thick electromagnetically releasable pressure-sensitive adhesive layer derived from the pressure-sensitive adhesive composition C5, and a 25-µm thick pressure-sensitive adhesive layer derived from the pressure-sensitive adhesive composition C2. The heating herein was performed at a temperature of 130°C for a time of 3 minutes. Thus, a pressure-sensitive adhesive sheet for build stage use (double-sided pressure-sensitive adhesive sheet) according to Example 4 was produced. This had a multilayer structure including the electromagnetically releasable pressure-sensitive adhesive layer, the PET substrate B2, and the pressure-sensitive adhesive layer (non-electromagnetically-releasable) disposed in the specified sequence.

### Use of Pressure-Sensitive Adhesive Sheet for Build Stage Use

The pressure-sensitive adhesive sheet produced by the procedure as described above was affixed, through the non-electromagnetically-releasable pressure-sensitive adhesive layer thereof, to an object-forming surface of a build stage of a 3D printer BS01+ (trade name, supplied by BONSAI LAB, Inc.), in such a manner as to avoid wrinkling and partial gap of the pressure-sensitive adhesive sheet. The 3D printer was then operated under conditions similar to those described above for Example 1, to form a planar object (100 mm by 100 mm, 2 mm thick) over the build stage. The object was formed while being firmly attached to the electromagnetically releasable pressure-sensitive adhesive layer of the pressure-sensitive adhesive sheet on the build stage. After the object forming process was completed and the object was naturally cooled, ultraviolet radiation was applied via the build stage to the pressure-sensitive adhesive sheet disposed on the build stage (capable of transmitting ultraviolet radiation). This reduced the adhesive strength of the electromagnetically releasable pressure-sensitive adhesive layer of the pressure-sensitive adhesive sheet (and, in turn, freed or loosened the attached state of the object to the build stage through the pressure-sensitive adhesive sheet). The ultraviolet application was performed using a high-pressure mercury lamp as an ultraviolet irradiator, at an output of 75 W, an irradiation intensity of 150 mW/cm², and an ultraviolet cumulative irradiance of 500 mJ/cm². The object was then detached from the build stage by puling off the object from the electromagnetically releasable pressure-sensitive adhesive layer whose adhesive strength had been reduced by the electromagnetic irradiation. After the detachment of the object, the pressure-sensitive adhesive sheet was removed from the build stage surface.

### Example 5

### Production of Pressure-Sensitive Adhesive Sheet for Build Stage Use

The acrylic polymer solution S7 was combined with, per 100 parts by mass of solid matter (the acrylic oligomer A7) in the solution S7, 30 parts by mass of an electromagnetic radiation-curable urethane acrylate KAYARAD DPHA (trade name, supplied by Nippon Kayaku Co., Ltd.), 5 parts by mass of an isocyanate crosslinker CORONATE L (trade name, a polyisocyanate compound, supplied by TOSOH CORPORATION), and 5 parts by mass of a photoinitiator Irgacure 651 (trade name, supplied by BASF SE), and yielded a pressure-sensitive adhesive composition C6, which is a composition for the formation of an electromagnetically releasable pressure-sensitive adhesive layer. Next, the pressure-sensitive adhesive composition C2 was applied to one side of the PET substrate B2 to form a pressure-sensitive adhesive composition layer, and a release film was laminated so as to cover the pressure-sensitive adhesive composition layer on the PET substrate B2. Next, the pressure-sensitive adhesive composition C6 was applied to the other side of the PET substrate B2 to form a pressure-sensitive adhesive composition layer. Next, these pressure-sensitive adhesive composition layers were heated to be dried and to undergo a crosslinking reaction by the isocyanate crosslinker, to thereby form a 20-µm thick electromagnetically releasable pressure-sensitive adhesive layer derived from the pressure-sensitive adhesive composition C6, and a 25-µm thick pressure-sensitive adhesive layer derived from the pressure-sensitive adhesive composition C2. The heating herein was performed at a temperature of 130°C for a time of 3 minutes. Thus, a pressure-sensitive adhesive sheet for build stage use (double-sided pressure-sensitive adhesive sheet) according to Example 5 was produced. This had a multilayer structure including the electromagnetically releasable pressure-sensitive adhesive layer, the PET substrate B2, and the pressure-sensitive adhesive layer (non-electromagnetically-releasable) disposed in the specified sequence.

### Use of Pressure-Sensitive Adhesive Sheet for Build Stage Use

The pressure-sensitive adhesive sheet produced by the procedure as described above was affixed, through the non-electromagnetically-releasable pressure-sensitive adhesive layer thereof, to an object-forming surface of a build stage of a 3D printer BS01+ (trade name, supplied by BONSAI LAB, Inc.), in such a manner as to avoid wrinkling and partial gap of the pressure-sensitive adhesive sheet. The 3D printer was then operated under conditions similar to those described above for Example 1, to form a planar object (100 mm by 100 mm, 2 mm thick) over the build stage. The object was formed while being firmly attached to the electromagnetically releasable pressure-sensitive adhesive layer of the pressure-sensitive adhesive sheet on the build stage. After the object forming process was completed and the object was naturally cooled, ultraviolet radiation was applied via the build stage (capable of transmitting ultraviolet radiation) to the pressure-sensitive adhesive sheet on the build stage, by a procedure similar to that described above for Example 4. This reduced the adhesive strength of the electromagnetically releasable pressure-sensitive adhesive layer of the pressure-sensitive adhesive sheet (and, in turn, freed or loosened the attached state of the object to the build stage through the pressure-sensitive adhesive sheet). The object was then detached from the build stage by pulling off the object from the electromagnetically releasable pressure-sensitive adhesive layer whose adhesive strength had been reduced by the electromagnetic application. After the detachment of the object, the pressure-sensitive adhesive sheet was removed from the build stage surface.

### Example 6

### Preparation of Stretchable Substrate

A poly(vinyl chloride) (PVC) composition was prepared by mixing 100 parts by mass of a poly(vinyl chloride) TH-1300 (trade name, supplied by Shin-Etsu Chemical Co., Ltd.), 10 parts by mass of a chlorinated polyethylene Elaslen 302NA (trade name, supplied by Showa Denko K.K.), 50 parts by mass of an adipic acid polyester plasticizer Polycizer W-2310 (trade name, supplied by DIC Corporation), 0.5 part by mass of zinc laurate (supplied by Mitsuwa Chemicals Co., Ltd.) as a zinc soap, 0.5 part by mass of calcium stearate (supplied by KISHIDA CHEMICAL Co., Ltd.) as an alkaline earth metal soap, 2 parts by mass of hydrotalcite ALCAMIZER (trade name, supplied by Kyowa Chemical Industry Co., Ltd.), and 2 parts by mass of a black pigment. From the PVC composition, a PVC film (100-µm thick) was prepared using a calender. The primer U2 was applied to one side of the PVC film, followed by drying to give an under coat (about 1 g/m²). Thus, a stretchable substrate bearing an under coat on one side thereof was prepared.

### Production of Pressure-Sensitive Adhesive Sheet for Build Stage Use

A composition (pressure-sensitive adhesive composition C7) having a solids concentration of 20 mass percent for the formation of a pressure-sensitive adhesive layer was prepared by mixing 50 parts by mass of a styrene-butadiene rubber SBR1013 (trade name, binding styrene amount: 43 mass percent, supplied by JSR Corporation), 50 parts by mass of a natural rubber Grade RSS1 (trade name, supplied by Nomura Trading Co., Ltd.), 50 parts by mass of a terpene resin YS RESIN PX 1150 (trade name, having a softening temperature of 115°C, supplied by Yasuhara Chemical Co., Ltd.), 10 parts by mass of an alkylphenol resin TACKROL 201 (trade name, supplied by Taoka Chemical Co., Ltd.), 7 parts by mass of an organometallic compound (aluminum chelate) ALCH (trade name, supplied by Kawaken Fine Chemicals Co., Ltd.), 1 part by mass of a phenolic age inhibitor Irganox 1010 (trade name, supplied by BASF SE), and toluene as a solvent. Next, the pressure-sensitive adhesive composition C7 was applied to the under-coat-bearing surface of the stretchable substrate, dried, and yielded a 10-µm thick pressure-sensitive adhesive layer. Thus, a pressure-sensitive adhesive sheet for build stage use (single-sided pressure-sensitive adhesive sheet) according to Example 6 was produced. This had a multilayer structure including the stretchable substrate and the rubber pressure-sensitive adhesives layer disposed on each other.

### Use of Pressure-Sensitive Adhesive Sheet for Build Stage Use

The pressure-sensitive adhesive sheet produced by the procedure as described above was affixed, through the pressure-sensitive adhesive layer thereof, to an object-forming surface of a build stage of a 3D printer BS01+ (trade name, supplied by BONSAI LAB, Inc.), in such a manner as to avoid wrinkling and partial gap of the pressure-sensitive adhesive sheet. The 3D printer was then operated under conditions similar to those described above for Example 1, to form a planar object (100 mm by 100 mm, 2 mm thick) over the build stage. The object was formed while being attached to the stretchable substrate of the pressure-sensitive adhesive sheet on the build stage. After the object forming process was completed and the object was naturally cooled, the pressure-sensitive adhesive sheet was stretched by pulling ends of the pressure-sensitive adhesive sheet in an in-plane direction of the pressure-sensitive adhesive sheet. This reduced the adhesive strength of the pressure-sensitive adhesive layer to the build stage surface (and, in turn, freed or loosened the attached state of the object to the build stage through the pressure-sensitive adhesive sheet). Subsequently, a removing operation of the pressure-sensitive adhesive sheet on the build stage was performed by separating the pressure-sensitive adhesive layer, whose adhesive strength had been reduced, from the build stage surface, and with this operation, the object was detached from the build stage. The pressure-sensitive adhesive sheet was then removed from the object.

### Example 7

### Production of Pressure-Sensitive Adhesive Sheet for Build Stage Use

The acrylic polymer solution S2 was combined with, per 100 parts by mass of solid matter (the acrylic polymer A2) in the solution S2, 5 parts by mass of an isocyanate crosslinker CORONATE L (trade name, a polyisocyanate compound, supplied by TOSOH CORPORATION), 20 parts by mass of a tackifier SUMILITERESIN PR-12603 (trade name, supplied by Sumitomo Durez Co., Ltd.), and 20 parts by mass of a rosin ester ESTER GUM AT (trade name, supplied by Arakawa Chemical Industries, Ltd.) and yielded a pressure-sensitive adhesive composition C8, which is a composition for the formation of a pressure-sensitive adhesive layer. The pressure-sensitive adhesive composition C8 was applied to both sides of a Manila hemp nonwoven fabric substrate (having a thickness of 50 µm and a basis weight of 20 g/m²) and dried, to form 55-µm thick pressure-sensitive adhesive layers. Thus, a pressure-sensitive adhesive sheet was produced. This had a multilayer structure including the pressure-sensitive adhesive layer, the nonwoven fabric substrate, and the pressure-sensitive adhesive layer disposed in the specified sequence. On the other hand, the acrylic polymer solution S2 was combined with, per 100 parts by mass of solid matter (the acrylic polymer A2) in the solution S2, 5 parts by mass of an isocyanate crosslinker CORONATE L (trade name, a polyisocyanate compound, supplied by TOSOH CORPORATION) and 100 parts by mass of thermally expandable microspheres Matsumoto Microsphere F-50D (trade name, expandable at 120°C, supplied by Matsumoto Yushi-Seiyaku Co., Ltd.) and yielded a pressure-sensitive adhesive composition C9, which is a composition for the formation of a thermally releasable pressure-sensitive adhesive layer. Next, one side of a 25-µm thick polyester film was subjected to a release treatment to give a release film, and the pressure-sensitive adhesive composition C9 was applied to the release-treated surface of the release film to form a pressure-sensitive adhesive composition layer. Next, the pressure-sensitive adhesive composition layer on the release film was heated to be dried and to undergo a crosslinking reaction, and yielded a 50-µm thick thermally releasable pressure-sensitive adhesive layer. The heating herein was performed at a temperature of 100°C for a time of 5 minutes. This thermally releasable pressure-sensitive adhesive layer was affixed to one of the pressure-sensitive adhesive layers of the pressure-sensitive adhesive sheet including, on both sides thereof, the pressure-sensitive adhesive layers each derived from the pressure-sensitive adhesive composition C8. Thus, a pressure-sensitive adhesive sheet for build stage use (double-sided pressure-sensitive adhesive sheet) according to Example 7 was produced. This had a multilayer structure including the pressure-sensitive adhesive layer (non-thermally-releasable), the nonwoven fabric substrate, the pressure-sensitive adhesive layer (non-thermally-releasable), and the thermally releasable pressure-sensitive adhesive layer disposed in the specified sequence.

### Use of Pressure-Sensitive Adhesive Sheet for Build Stage Use

The pressure-sensitive adhesive sheet produced by the procedure as described above was affixed, through the thermally releasable pressure-sensitive adhesive layer thereof, to an object-forming surface of a build stage of a 3D printer BS01+ (trade name, supplied by BONSAI LAB, Inc.), in such a manner as to avoid wrinkling and partial gap of the pressure-sensitive adhesive sheet. The 3D printer was then operated under conditions similar to those described above for Example 1, to form a planar object (100 mm by 100 mm, 2 mm thick) over the build stage. The object was formed while being firmly attached to the non-thermally-releasable pressure-sensitive adhesive layer of the pressure-sensitive adhesive sheet on the build stage. After the object forming process was completed and the object was naturally cooled, the object-forming surface of the build stage was raised in temperature up to 120°C to heat the thermally releasable pressure-sensitive adhesive layer of the pressure-sensitive adhesive sheet on the surface to thereby expand the thermally expandable microspheres in the pressure-sensitive adhesive layer. This reduced the adhesive strength of the pressure-sensitive adhesive layer (and, in turn, freed or loosened the attached state of the object to the build stage through the pressure-sensitive adhesive sheet). Subsequently, a removing operation of the pressure-sensitive adhesive sheet on the build stage was performed by separating the thermally releasable pressure-sensitive adhesive layer, whose adhesive strength had been reduced by heating, from the build stage, and with this operation, the object was detached from the build stage. The pressure-sensitive adhesive sheet was then removed from the object.

### Example 8

### Production of Pressure-Sensitive Adhesive Sheet for Build Stage Use

The pressure-sensitive adhesive composition C5 for the formation of an electromagnetically releasable pressure-sensitive adhesive layer was applied to one side (the side bearing no under coat) of the PET substrate B1 to form a pressure-sensitive adhesive composition layer. Next, the pressure-sensitive adhesive composition layer was heated to be dried and to undergo a crosslinking reaction by the isocyanate crosslinker, and thereby yielded a 20-µm thick electromagnetically releasable pressure-sensitive adhesive layer. The heating herein was performed at a temperature of 130°C for a time of 3 minutes. On the other hand, one side of a 25-µm thick polyester film was subjected to a release treatment to give a release film, and the pressure-sensitive adhesive composition C9 for the formation of a thermally releasable pressure-sensitive adhesive layer was applied to the release treated surface of the release film to form a pressure-sensitive adhesive composition layer. Next, the pressure-sensitive adhesive composition layer on the release film was heated to be dried and to undergo a crosslinking reaction, and thereby yielded a 50-µm thick thermally releasable pressure-sensitive adhesive layer, where the heating herein was performed at a temperature of 100°C for a time of 5 minutes. This thermally releasable pressure-sensitive adhesive layer was affixed to the under-coat-bearing side of the PET substrate B1 bearing, on the other side, the electromagnetically releasable pressure-sensitive adhesive layer formed from the pressure-sensitive adhesive composition C5. Thus, a pressure-sensitive adhesive sheet for build stage use (double-sided pressure-sensitive adhesive sheet) according to Example 8 was produced. This had a multilayer structure including the electromagnetically releasable pressure-sensitive adhesive layer, the PET substrate B1, and the thermally releasable pressure-sensitive adhesive layer disposed in the specified sequence.

### Use of Pressure-Sensitive Adhesive Sheet for Build Stage Use

The pressure-sensitive adhesive sheet produced by the procedure as described above was affixed, through the thermally releasable pressure-sensitive adhesive layer thereof, to an object-forming surface of a build stage of a 3D printer BS01+ (trade name, supplied by BONSAI LAB, Inc.), in such a manner as to avoid wrinkling and partial gap of the pressure-sensitive adhesive sheet. The 3D printer was then operated under conditions similar to those described above for Example 1, to form a planar object (100 mm by 100 mm, 2 mm thick) over the build stage. The object was formed while being firmly attached to the electromagnetically releasable pressure-sensitive adhesive layer of the pressure-sensitive adhesive sheet on the build stage. After the object forming process was completed and the object was naturally cooled, ultraviolet radiation was applied via the build stage (capable of transmitting ultraviolet radiation) to the pressure-sensitive adhesive sheet on the build stage. This reduced the adhesive strength of the electromagnetically releasable pressure-sensitive adhesive layer of the pressure-sensitive adhesive sheet (and, in turn, freed or loosened the attached state of the object to the build stage through the pressure-sensitive adhesive sheet). The ultraviolet application was performed using a high-pressure mercury lamp as an ultraviolet irradiator, at an output of 75 W, an irradiation intensity of 150 mW/cm², and an ultraviolet cumulative irradiance of 500 mJ/cm². The object was then detached from the build stage by pulling off the object from the electromagnetically releasable pressure-sensitive adhesive layer whose adhesive strength had been reduced by the electromagnetic application. Next, the object-forming surface of the build stage was raised in temperature up to 120°C to heat the thermally releasable pressure-sensitive adhesive layer of the pressure-sensitive adhesive sheet on the surface and to expand the thermally expandable microspheres in the pressure-sensitive adhesive layer. This reduced the adhesive strength of the pressure-sensitive adhesive layer. Thus, the pressure-sensitive adhesive sheet was removed from the build stage surface.

### Comparative Example 1

### Production of Pressure-Sensitive Adhesive Sheet

A pressure-sensitive adhesive composition C11, which is a composition for the formation of a pressure-sensitive adhesive layer, was prepared by blending the acrylic polymer solution S8, a tetrafunctional epoxy crosslinker TETRAD-C (trade name, supplied by MITSUBISHI GAS CHEMICAL COMPANY, INC.), and a polymerized rosin ester PENSEL D-135 (trade name, supplied by Arakawa Chemical Industries, Ltd.) in proportions respectively of 100 parts by mass, 0.02 part by mass, and 40 parts by mass. Next, the pressure-sensitive adhesive composition C11 was applied onto a release-treated surface of a 38-µm thick polyester film (release film) to form a pressure-sensitive adhesive composition layer. Next, the pressure-sensitive adhesive composition layer on the release film was heated to be dried and to undergo a crosslinking reaction, and yielded a 65-pm thick pressure-sensitive adhesive layer. The heating herein was performed at a temperature of 100°C for a time of 3 minutes. By the technique as above, two pressure-sensitive adhesive layers (65-pm thick) with release film were formed. Next, the pressure-sensitive adhesive layers were affixed to both sides of a Manila hemp nonwoven fabric substrate (having a thickness of 50 µm and a basis weight of 20 g/m²). Thus, a pressure-sensitive adhesive sheet (double-sided pressure-sensitive adhesive sheet) according to Comparative Example 1 was produced. This had a multilayer structure including the pressure-sensitive adhesive layer, the nonwoven fabric substrate, and the pressure-sensitive adhesive layer disposed in the specified order.

### Use of Pressure-Sensitive Adhesive Sheet

The pressure-sensitive adhesive sheet produced by the procedure as described above was affixed, through one pressure-sensitive adhesive layer thereof, to an object-forming surface of a build stage of a 3D printer BS01+ (trade name, supplied by BONSAI LAB, Inc.) in such a manner as to avoid wrinkling and partial gap of the pressure-sensitive adhesive sheet. The 3D printer was then operated under conditions similar to those described above for Example 1, to form a planar object (100 mm by 100 mm, 2 mm thick) over the build stage. The object was formed while being attached to the other pressure-sensitive adhesive layer of the pressure-sensitive adhesive sheet on the build stage. After the object forming process was completed and the object was naturally cooled, there was attempted a removing operation of the pressure-sensitive adhesive sheet on the build stage by separating the pressure-sensitive adhesive layer from the build stage surface and, with this operation, the object was detached from the build stage. The pressure-sensitive adhesive sheet was then removed from the object.

### Comparative Example 2

### Production of Pressure-Sensitive Adhesive Sheet

A pressure-sensitive adhesive sheet (double-sided pressure-sensitive adhesive sheet) according to Comparative Example 2 was prepared by a procedure similar to that in Comparative Example 1, except for using the PET substrate B1 instead of the nonwoven fabric substrate; and forming a 30-µm thick pressure-sensitive adhesive layer, instead of the 65-µm thick pressure-sensitive adhesive layer, from the pressure-sensitive adhesive composition C11. The pressure-sensitive adhesive sheet according to Comparative Example 2 had a multilayer structure including the pressure-sensitive adhesive layer, the PET substrate B1, and the pressure-sensitive adhesive layer disposed in the specified sequence.

### Use of Pressure-Sensitive Adhesive Sheet

The pressure-sensitive adhesive sheet produced by the procedure as described above was affixed, through one pressure-sensitive adhesive layer thereof, to an object-forming surface of a build stage of a 3D printer BS01+ (trade name, supplied by BONSAI LAB, Inc.) in such a manner as to avoid wrinkling and partial gap of the pressure-sensitive adhesive sheet. The 3D printer was then operated under conditions similar to those described above for Example 1, to form a planar object (100 mm by 100 mm, 2 mm thick) over the build stage. The object was formed while being attached to the other pressure-sensitive adhesive layer of the pressure-sensitive adhesive sheet on the build stage. After the object forming process was completed and the object was naturally cooled, there was attempted a removing operation of the pressure-sensitive adhesive sheet on the build stage by separating the pressure-sensitive adhesive layer from the build stage and, with this operation, the object was detached from the build stage. The pressure-sensitive adhesive sheet was then removed from the object.

### Detachment of Object after Forming

The pressure-sensitive adhesive sheets according to Examples 1 to 8 and Comparative Examples 1 and 2 were evaluated for detachability of the object from the build stage, after the completion of the object forming process in which the 3D printer was operated to form (build up) the planar object. For each of the pressure-sensitive adhesive sheets according to Examples 1 to 3, 6, and 7, the object after undergoing the adhesive strength-reducing action corresponding to the target pressure-sensitive adhesive sheet was detached from the build stage with the removing operation of the pressure-sensitive adhesive sheet from the build stage, as described above. For each of the pressure-sensitive adhesive sheets according to Examples 4, 5, and 8, the object, after undergoing the adhesive strength-reducing action corresponding to the target pressure-sensitive adhesive sheet, was detached from the build stage by separating the object from the pressure-sensitive adhesive sheet on the build stage, as described above. For each of the pressure-sensitive adhesive sheets according to Comparative Examples 1 and 2, the object was detached from the build stage by attempting the removing operation of the pressure-sensitive adhesive sheet from the build stage, as described above. The detachment of the object from the build stage was evaluated as follows: a sample in which the object can be easily detached was evaluated as having very good detachability (Very good); a sample in which the detachment requires significantly larger force as compared with the sample of very good detachability was evaluated as having somewhat poor detachability (Somewhat poor); and a sample in which the detachment is hardly performed without the use of a scraper or another tool having a sharp edge was evaluated as having poor detachability (Poor). The results are given in Tables 1 to 3.

### Release Force Required of Object Detachment

The pressure-sensitive adhesive sheet according to Example 6 was evaluated, by measurement, for release force required of detachment of the object from the build stage, namely, for external force required of removal of the pressure-sensitive adhesive sheet, with the object, from the build stage surface. Specifically, initially, the pressure-sensitive adhesive sheet was affixed to an object-forming surface of a build stage of a fused deposition modeling 3D printer BS01+ (trade name, supplied by BONSAI LAB, Inc.), which is an additive manufacturing apparatus. In the affixation, the surface defined by the pressure-sensitive adhesive layer of the pressure-sensitive adhesive sheet was affixed to the object-forming surface in such a manner as not to cause the pressure-sensitive adhesive sheet to suffer from wrinkling and partial gap from the build stage. Next, the 3D printer was operated to form an object.
Specifically, a modeling material ABS resin filaments Plasil (trade name, having a cross-sectional diameter of 1.75 mm, white color, supplied by PLASIL), which was heated at 240°C in a modeling material-discharging nozzle of the 3D printer, was discharged and fed from the nozzle toward the build stage to form the object on the pressure-sensitive adhesive sheet for build stage use on the build stage. The object-forming surface of the build stage was held at a temperature of 100°C during the object forming process. The formed object includes a body 201 and a wall 202 as illustrated in FIG. 21. The body 201 has a planar shape (100 mm by 100 mm, 2 mm thick) which is square in plan view. The wall 202 is positioned at an outside edge of the body 201, extends along throughout one side of the body 201, and has a height of 7 mm and a thickness of 2 mm. The wall 202 is a portion with a 2-mm diameter hole (not shown). The hole is positioned at the center in the extending direction of the wall 202 and penetrates the wall 202 in the thickness direction. Next, when the temperature of the build stage after the completion of the object forming process fell down to 30°C, the pressure-sensitive adhesive sheet was stretched by pulling an end portion of the pressure-sensitive adhesive sheet in an in-plane direction of the sheet at a force of 4.5 kgf. This reduced the adhesive strength of the pressure-sensitive adhesive layer to the build stage surface. A string was bound, at one end thereof, to the wall 202 of the object using the hole and then pulled in the direction shown by the arrow D in FIG. 21. In this process, an external force (maximum value) required of the detachment of the object from the build stage was measured as a release force using a push-pull gauge PS (Max. Capacity 5 kg) (trade name, supplied by IMADA SEISAKUSHO CO., LTD.) to which the other end of the string was bound. The measured value in the measurement was 0 kgf. Specifically, the object to be detached was approximately in a state where the object had been detached from the build stage by the stretching of the pressure-sensitive adhesive sheet.

The pressure-sensitive adhesive sheet according to Example 7 was evaluated, by measurement, for release force required of detachment of the object from the build stage, namely, for external force required of removal of the pressure-sensitive adhesive sheet, with the object, from the build stage surface. Specifically, the release force was measured by a procedure similar to that described above for Example 6, except for performing the object forming process at a temperature of the object-forming surface of the build stage of 90°C, instead of 100°C; and except for performing heating of the thermally releasable pressure-sensitive adhesive layer as the adhesive strength-reducing action, instead of the stretching of the pressure-sensitive adhesive sheet. The heating of the thermally releasable pressure-sensitive adhesive layer was performed by raising the temperature of the object-forming surface of the build stage up to 120°C. The heating caused expansion of the thermally expandable microspheres in the thermally releasable pressure-sensitive adhesive layer, and thereby reduced the adhesive strength of the pressure-sensitive adhesive layer. The measured value in the measurement was 0.05 kgf.

The pressure-sensitive adhesive sheet according to Comparative Example 1 was evaluated, by measurement, for release force required of detachment of the object from the build stage, namely, for external force required of removal of the pressure-sensitive adhesive sheet, with the object, from the build stage surface. Specifically, the release force was measured by a procedure similar to that described above for Example 6, except for performing the removing operation when the temperature of the build stage after the completion of the object forming process fell down to 30°C. The measured value in the measurement was equal to or greater than the measurement limit (5 kgf) of the push-pull gauge used.

**[Table 1]**

| | Example 1 | Example 2 | Example 3 | Example 4 |
|---|---|---|---|---|
| Pressure-sensitive adhesive layer facing object | Pressure-sensitive adhesive layer (formed from pressure-sensitive adhesive composition C2) | Pressure-sensitive adhesive layer (formed from pressure-sensitive adhesive composition C2) | Pressure-sensitive adhesive layer (formed from pressure-sensitive adhesive composition C2) | Electromagnetically releasable pressure-sensitive adhesive layer (formed from pressure-sensitive adhesive composition C5) |
| Substrate | PET substrate B1 | PET substrate B2 | PET substrate B2 | PET substrate B2 |
| Pressure-sensitive adhesive layer facing build stage | Thermally releasable pressure-sensitive adhesive layer (formed from pressure-sensitive adhesive composition C1) | Thermally releasable pressure-sensitive adhesive layer (formed from pressure-sensitive adhesive composition C3) | Cold-releasable pressure-sensitive adhesive layer (formed from pressure-sensitive adhesive composition C4) | Pressure-sensitive adhesive layer (formed from pressure-sensitive adhesive composition C2) |
| Object detachability after forming | Very good | Very good | Very good | Very good |

**[Table 2]**

| | Example 5 | Example 6 | Example 7 | Example 8 |
|---|---|---|---|---|
| Pressure-sensitive adhesive layer facing object | Electromagnetically releasable pressure-sensitive adhesive layer (formed from pressure-sensitive adhesive composition C6) | - | Pressure-sensitive adhesive layer (formed from pressure-sensitive adhesive composition C6) | Electromagnetically releasable pressure-sensitive adhesive layer (formed from pressure-sensitive adhesive composition C5) |
| Substrate | PET substrate B2 | Stretchable substrate (PVC) | Nonwoven fabric substrate (Manila hemp) | PET substrate B1 |
| Pressure-sensitive adhesive layer facing build stage | Pressure-sensitive adhesive layer (formed from pressure-sensitive adhesive composition C2) | Rubber pressure-sensitive adhesive layer (formed from pressure-sensitive adhesive composition C7) | Thermally releasable pressure-sensitive adhesive layer (formed from pressure-sensitive adhesive composition C9) | Thermally releasable pressure-sensitive adhesive layer (formed from pressure-sensitive adhesive composition C9) |
| Object detachability after forming | Very good | Very good | Very good | Very good |

**[Table 3]**

| | Comparative Example 1 | Comparative Example 2 |
|---|---|---|
| Pressure-sensitive adhesive layer facing object | Pressure-sensitive adhesive layer (formed from pressure-sensitive adhesive composition C11) | Pressure-sensitive adhesive layer (formed from pressure-sensitive adhesive composition C11) |
| Substrate | Nonwoven fabric substrate (Manila hemp) | PET substrate B1 |
| Pressure-sensitive adhesive layer facing build stage | Pressure-sensitive adhesive layer (formed from pressure-sensitive adhesive composition C11) | Pressure-sensitive adhesive layer (formed from pressure-sensitive adhesive composition C11) |
| Object detachability after forming | Poor | Poor |

### Evaluations

The pressure-sensitive adhesive sheets for build stage use according to Examples 1 to 8, which have the configuration(s) according to the present invention, allowed the object to be readily detached from the build stage after the completion of the object forming process, as demonstrated by the evaluation results in "Object detachability after forming" in Tables 1 and 2. The pressure-sensitive adhesive sheet according to Example 6 and the pressure-sensitive adhesive sheet according to Example 7 required very low forces respectively of 0 kgf and 0.05 kgf for the object detachment, where the forces were measured by the measuring method. In contrast, the pressure-sensitive adhesive sheets according to Comparative Examples 1 and 2 failed to allow the object to be readily detached from the build stage after the completion of the object forming process, as demonstrated by the evaluation results in "Object detachability after forming" in Table 3. The pressure-sensitive adhesive sheet according to Comparative Example 1 required a force equal to or greater than the measurement limit, namely, equal to or greater than 5 kgf, for the object detachment, where the force was measured by the measuring method.

### Reference Signs List

X1, X2, X3, X4, X5, X6, X7 pressure-sensitive adhesive sheet (pressure-sensitive adhesive sheet for build stage use)
S1, S2, S3 substrate
11, 12, 21, 22, 31, 32, 41, 42, 51, 52, 61, 62 pressure-sensitive adhesive layer
100 build stage
101 object-forming surface
110 heating unit
120 cooling unit
130 electromagnetic irradiation unit (electromagnetic radiation applying means, adhesive strength-reducing means)
140 voltage application unit (voltage applying means, adhesive strength-reducing means)
150 liquid supply unit
160 stretching unit
170 magnetic field application unit

## Claims

1. A pressure-sensitive adhesive sheet for build stage use comprising
a pressure-sensitive adhesive layer including a pressure-sensitive adhesive and having an adhesive strength capable of being reduced by an adhesive strength-reducing action.

2. The pressure-sensitive adhesive sheet for build stage use according to claim 1,
wherein the pressure-sensitive adhesive layer is a thermally releasable pressure-sensitive adhesive layer, and
wherein the adhesive strength-reducing action is heating of the pressure-sensitive adhesive layer.

3. The pressure-sensitive adhesive sheet for build stage use according to claim 2,
wherein the thermally releasable pressure-sensitive adhesive layer comprises a thermal expansion agent.

4. The pressure-sensitive adhesive sheet for build stage use according to claim 3,
wherein the thermal expansion agent is a thermally expandable microsphere comprising:
a component that gasifies by heating; and
a shell that includes the component and is capable of undergoing at least one of expansion and rupture as a result of the gasification of the component.

5. The pressure-sensitive adhesive sheet for build stage use according to claim 1,
wherein the pressure-sensitive adhesive layer is a cold-releasable pressure-sensitive adhesive layer, and
wherein the adhesive strength-reducing action is cooling of the pressure-sensitive adhesive layer.

6. The pressure-sensitive adhesive sheet for build stage use according to claim 5,
wherein the cold-releasable pressure-sensitive adhesive layer comprises a side-chain crystalline polymer.

7. The pressure-sensitive adhesive sheet for build stage use according to claim 1,
wherein the pressure-sensitive adhesive layer is an electromagnetically releasable pressure-sensitive adhesive layer, and
wherein the adhesive strength-reducing action is application of electromagnetic radiation to the pressure-sensitive adhesive layer.

8. The pressure-sensitive adhesive sheet for build stage use according to claim 7,
wherein the electromagnetically releasable pressure-sensitive adhesive layer comprises an electromagnetic radiation-curable component.

9. The pressure-sensitive adhesive sheet for build stage use according to claim 1,
wherein the pressure-sensitive adhesive layer is an electrically releasable pressure-sensitive adhesive layer, and
wherein the adhesive strength-reducing action is application of a voltage to the pressure-sensitive adhesive layer.

10. The pressure-sensitive adhesive sheet for build stage use according to claim 9,
wherein the electrically releasable pressure-sensitive adhesive layer comprises an electrolyte.

11. The pressure-sensitive adhesive sheet for build stage use according to claim 10,
wherein the electrolyte is an ionic liquid.

12. The pressure-sensitive adhesive sheet for build stage use according to one of claims 10 and 11,
wherein the electrically releasable pressure-sensitive adhesive layer contains the electrolyte in a content of 0.5 to 30 parts by mass per 100 parts by mass of the pressure-sensitive adhesive.

13. The pressure-sensitive adhesive sheet for build stage use according to claim 1,
wherein the pressure-sensitive adhesive layer is a liquid-releasable pressure-sensitive adhesive layer, and
wherein the adhesive strength-reducing action is supply of a liquid to the pressure-sensitive adhesive layer.

14. The pressure-sensitive adhesive sheet for build stage use according to claim 13,
wherein the liquid-releasable pressure-sensitive adhesive layer comprises a water-soluble pressure-sensitive adhesive.

15. The pressure-sensitive adhesive sheet for build stage use according to claim 1,
wherein the pressure-sensitive adhesive sheet has a multilayer structure comprising:
a stretchable substrate; and
the pressure-sensitive adhesive layer, and
wherein the adhesive strength-reducing action is stretching of the pressure-sensitive adhesive sheet for build stage use.

16. The pressure-sensitive adhesive sheet for build stage use according to claim 15,
wherein the pressure-sensitive adhesive sheet has an elongation at break (JIS K 7311:1995) of 300% or more.

17. The pressure-sensitive adhesive sheet for build stage use according to any one of claims 1 to 16,
wherein the pressure-sensitive adhesive comprises an acrylic pressure-sensitive adhesive.

18. The pressure-sensitive adhesive sheet for build stage use according to any one of claims 1 to 17,
wherein the pressure-sensitive adhesive layer has a thickness of 1 to 1000 nm.

19. An additive manufacturing apparatus capable of employing the pressure-sensitive adhesive sheet for build stage use according to claim 1, the additive manufacturing apparatus comprising:
a build stage; and
adhesive strength-reducing means for performing the adhesive strength-reducing action to the pressure-sensitive adhesive layer of the pressure-sensitive adhesive sheet for build stage use disposed on the build stage.

20. The additive manufacturing apparatus according to claim 19,
wherein the pressure-sensitive adhesive layer is an electromagnetically releasable pressure-sensitive adhesive layer, and
wherein the adhesive strength-reducing means is means for applying electromagnetic radiation to the pressure-sensitive adhesive layer.

21. The additive manufacturing apparatus according to claim 20,
wherein the electromagnetically releasable pressure-sensitive adhesive layer comprises an electromagnetic radiation-curable component.

22. 19, The additive manufacturing apparatus according to claim
wherein the pressure-sensitive adhesive layer is an electrically releasable pressure-sensitive adhesive layer, and
wherein the adhesive strength-reducing means is means for applying a voltage to the pressure-sensitive adhesive layer.

23. The additive manufacturing apparatus according to claim 22,
wherein the electrically releasable pressure-sensitive adhesive layer comprises an electrolyte.

24. The additive manufacturing apparatus according to claim 23,
wherein the electrolyte is an ionic liquid.

25. The additive manufacturing apparatus according to one of claims 23 and 24,
wherein the electrically releasable pressure-sensitive adhesive layer contains the electrolyte in a content of 0.5 to 30 parts by mass per 100 parts by mass of the pressure-sensitive adhesive.
